(19) Europäisches Patentamt
European Patent Office
Office européen des brevets

(11) **EP 0 886 854 B1**

(12) **EUROPEAN PATENT SPECIFICATION**

(45) Date of publication and mention
of the grant of the patent:
**14.11.2007 Bulletin 2007/46**

(51) Int Cl.:
***G10L 15/18*** (2006.01)

(21) Application number: **96910381.1**

(22) Date of filing: **11.03.1996**

(86) International application number:
**PCT/US1996/003140**

(87) International publication number:
**WO 1997/034293 (18.09.1997 Gazette 1997/40)**

(54) **USER INDEPENDENT, REAL-TIME SPEECH RECOGNITION SYSTEM AND METHOD**

SYSTEM UND VERFAHREN ZUR SPRECHERUNABHÄNGIGEN ECHTZEITSPRACHERKENNUNG

SYSTEME ET PROCEDE DE RECONNAISSANCE VOCALE EN TEMPS REEL ET INDEPENDANT DE L'UTILISATEUR

(84) Designated Contracting States:
**AT BE CH DE DK ES FI FR GB GR IE IT LI LU MC NL PT SE**

(43) Date of publication of application:
**30.12.1998 Bulletin 1998/53**

(73) Proprietor: **Fonix Corporation
Draper, UT 84020 (US)**

(72) Inventors:
• **HANSEN, C., Hal
Provo, UT 84606 (US)**
• **SHEPHERD, Dale, Lynn
Lindon, UT 84042 (US)**

• **MONCUR, Robert, Brian
Orem, UT 84057 (US)**

(74) Representative: **Grünecker, Kinkeldey,
Stockmair & Schwanhäusser
Anwaltssozietät
Maximilianstrasse 58
80538 München (DE)**

(56) References cited:
**US-A- 3 969 972        US-A- 4 181 813
US-A- 4 817 154        US-A- 4 852 170
US-A- 5 027 410**

**Description**

## BACKGROUND OF THE INVENTION

**1. Technical Field:**

The present invention relates generally to speech recognition. More particularly, the present invention is directed to a system and method for accurately recognizing continuous human speech from any speaker.

**2. Background Information:**

Linguists, scientists and engineers have endeavored for many years to construct machines that can recognize human speech. Although in recent years this goal has begun to be realized in certain respects, currently available systems have not been able to produce results that even closely emulate human performance. This inability to provide satisfactory speech recognition is due primarily to the difficulties that are involved in extracting and identifying the individual sounds that make up human speech. These difficulties are exacerbated by the fact there are such wide acoustic variations that occur between different speakers.

Simplistically, speech may be considered as a sequence of sounds taken from a set of forty or so basic sounds called "phonemes." Different sounds, or phonemes, are produced by varying the shape of the vocal tract through muscular control of the speech articulators (lips, tongue, jaw, etc.). A stream of a particular set of phonemes will collectively represent a word or a phrase. Thus, extraction of the particular phonemes contained within a speech signal is necessary to achieve voice recognition.

However, a number of factors are present that make phoneme extraction extremely difficult. For instance, wide acoustic variations occur when the same phoneme is spoken by different speakers. This is due to the differences in the vocal apparatus, such as the vocal-tract length. Moreover, the same speaker may produce acoustically different versions of the same phoneme from one rendition to the next. Also, there are often no identifiable boundaries between sounds or even words. Other difficulties result from the fact that phonemes are spoken with wide variations in dialect, intonation, rhythm, stress, volume, and pitch. Finally, the speech signal may contain wide variations in speech-related noises that make it difficult to accurately identify and extract the phonemes.

The speech recognition devices that are currently available attempt to minimize the above problems and variations by providing only a limited number of functions and capabilities. For instance, many existing systems are classified as "speaker-dependent" systems. A speaker-dependent system must be "trained" to a single speaker's voice by obtaining and storing a database of patterns for each vocabulary word uttered by that particular speaker. The primary disadvantage of these types of systems is that they are "single speaker" systems, and can only be utilized by the speaker who has completed the time consuming training process. Further, the vocabulary size of such systems is limited to the specific vocabulary contained in the database. Finally, these systems typically cannot recognize naturally spoken continuous speech, and require the user to pronounce words separated by distinct periods of silence.

Currently available "speaker-independent" systems are also severely limited in function. Although any speaker can use the system without the need for training, these systems can only recognize words from an extremely small vocabulary. Further, they too require that the words be spoken in isolation with distinct pauses between words, and thus cannot recognize naturally spoken continuous speech.

US 4,181,813 discloses a system and method for speech recognition. The amplitude of an input speech signal is normalized, and the normalized signal and the amplitude information are digitized with delta modulators. A high-pass filtered component of the speech signal is compared to a predetermined threshold to obtain information about hiss sounds. A microprocessor-implemented algorithm detects information corresponding to presence and absence of predetermined numbers of successive slope reversals in the delta modulated normalized speech signal. The algorithm computes cues from the digital pulse corresponding to the high-pass filtered signal and from the delta modulated amplitude information. The algorithm computes a plurality of speech waveform characteristic ratios of time intervals between various slope transitions and compares the speech waveform characteristic ratios with a plurality of stored phoneme ratios representing a set of phonemes to detect matching there between.

US 4,852,170 discloses a real time computer speech recognition system which includes a spectrum analyzer to determine the frequency content of successive segments of speech. Each speech segment is logically analyzed to uniquely identify the class of phonemes of which it is a part, and then the frequency spectrum of the segment is analyzed to uniquely identify the specific phoneme within the type.

US 4,817,154 discloses a method and apparatus for encoding and decoding speech signal primary information. Amplitude and frequency of a speech signal are separately digitized. The amplitude is digitized using an envelope detector, a low-pass filter and an A-toD converter. Frequency information is digitized using a clipper, a frequency-to-voltage-converter and an A-to-D converter. Both digital signals may be transmitted or stored before the speech signal is reconstructed.

US 5,027,410 discloses an adaptive, programmable signal processing and filtering for hearing aids. An analog signal from a microphone is converted to digital data after passing a pre-emphasis filter, an automatic gain control amplifier and a low-pass filter. After digital processing in a digital signal processor it is converted back to an analog signal which is amplified and provided to the user.

## BRIEF SUMMARY OF THE INVENTION

It is the object of the present invention to overcome the limitations of prior art speech recognition and to provide a more reliable, speaker-independent speech recognition.

This object is achieved by the sound recognition system according to claim 1 and by the method of claim 14. Advantageous embodiments of the invention are subject-matter of the dependent claims.

Briefly summarized, in the preferred embodiment, an audio speech signal is received from a speaker and input to an audio processor means. The audio processor means receives the speech signal, converts it into a corresponding electrical format, and then electrically conditions the signal so that it is in a form that is suitable for subsequent digital sampling.

Once the audio speech signal has been converted to a representative audio electrical signal, it is sent to an analog-to-digital converter means. The A/D converter means samples the audio electrical signal at a suitable sampling rate, and outputs a digitized audio signal.

The digitized audio signal is then programmably processed by a sound recognition means, which processes the digitized audio signal in a manner so as to extract various time domain and frequency domain sound characteristics, and then identify the particular phoneme sound type that is contained within the audio speech signal. This characteristic extraction and phoneme identification is done in a manner such that the speech recognition occurs regardless of the source of the audio speech signal. Importantly, there is no need for a user to first "train" the system with his or her individual voice characteristics. Further, the process occurs in substantially real time so that the speaker is not required to pause between each word, and can thus speak at normal conversational speeds.

In addition to extracting phoneme sound types from the incoming audio speech signal, the sound recognition means implements various linguistic processing techniques to translate the phoneme string into a corresponding word or phrase. This can be done for essentially any language that is made up of phoneme sound types.

In the preferred embodiment, the sound recognition means is comprised of a digital sound processor means and a host sound processor means. The digital sound processor includes a programmable device and associated logic to programmably carry out the program steps used to digitally process the audio speech signal, and thereby extract the various time domain and frequency domain sound characteristics of that signal. This sound characteristic data is then stored in a data structure, which corresponds to the specific portion of the audio signal.

The host sound processor means also includes a programmable device and its associated logic. It is programmed to carry out the steps necessary to evaluate the various sound characteristics contained within the data structure, and then generate the phoneme sound type that corresponds to those particular characteristics. In addition to identifying phonemes, in the preferred embodiment the host sound processor also performs the program steps needed to implement the linguistic processing portion of the overall method. In this way, the incoming stream of phonemes are translated to the representative word or phrase.

The preferred embodiment further includes an electronic means, connected to the sound recognition means, for receiving the word or phrase translated from the incoming stream of identified phonemes. The electronic means, as for instance a personal computer, then programmably processes the word as either data input, as for instance text to a wordprocessing application, or as a command input, as for instance an operating system command.

## BRIEF DESCRIPTION OF THE DRAWINGS

In order that the manner in which the above-recited and other advantages and objects of the invention are obtained, a more particular description of the invention briefly described above will be rendered by reference to a specific embodiment thereof which is illustrated in the appended drawings. Understanding that these drawings depict only a typical embodiment of the invention and are not to be considered to be limiting of its scope, the invention in its presently understood best mode will be described and explained with additional specificity and detail through the use of the accompanying drawings in which:

Figure 1 is functional block diagram of the overall speech recognition system;
Figure 2 is a more detailed functional block diagram illustrating the speech recognition system;
Figures 3A through Figure 3Y is a schematic illustrating in detail the circuitry that makes up the functional blocks in Figure 2;

Figure 4 is a functional flow-chart illustrating the overall program method of the present invention;

Figures 5A-5B is a flow-chart illustrating the program method used to implement one of the functional blocks of Figure 4;

Figures 6-6D is a flow-chart illustrating the program method used to implement one of the functional blocks of Figure 4;

Figure 7 is a flow-chart illustrating the program method used to implement one of the functional blocks of Figure 4;

Figures 8-8D is a flow-chart illustrating the program method used to implement one of the functional blocks of Figure 4;

Figure 9 is a flow-chart illustrating the program method used to implement one of the functional blocks of Figure 4;

Figures 10-10C is a flow-chart illustrating the program method used to implement one of the functional blocks of Figure 4;

Figure 11 is a flow-chart illustrating the program method used to implement one of the functional blocks of Figure 4;

Figures 12A-12C are x--y plots of example standard sound data.

## DETAILED DESCRIPTION OF THE PREFERRED EMBODIMENTS

The following detailed description is divided into two parts. In the first part the overall system is described, including a detailed description of the functional blocks which make up the system, and the manner in which the various functional blocks are interconnected. In part two, the method by which the overall system is programmably controlled to achieve real-time, user-independent speech recognition is described.

## I. THE SYSTEM

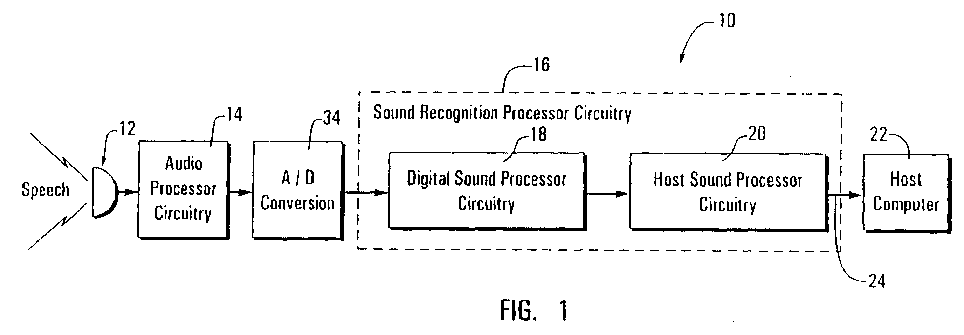

Reference is first made to Figure 1, where one presently preferred embodiment of the overall speech recognition system is designated generally at 10. The system 10 includes an audio processor means for receiving an audio speech signal and for converting that signal into a representative audio electrical signal. In the preferred embodiment, the audio processor means is comprised of a means for inputting an audio signal and converting it to an electrical signal, such as a standard condenser microphone shown generally at 12. Various other input devices could also be utilized to input an audio signal, including, but not limited to such devices as a dictaphone, telephone or a wireless microphone.

In addition to microphone 12, the audio processor means also preferably comprises additional appropriate audio processor circuitry 14. This circuitry 14 receives the audio electrical signal generated by the microphone 12, and then functions so as to condition the signal so that it is in a suitable electrical condition for digital sampling.

The audio processor circuitry 14 is then electrically connected to analog-to-digital converter means, illustrated in the preferred embodiment as A/D conversion circuitry 34. This circuitry 34 receives the audio electrical signal, which is in an analog format, and converts it to a digital format, outputting a digitized audio signal.

This digitized audio signal is then passed to a sound recognition means, which in the preferred embodiment corresponds to the block designated at 16 and referred to as the sound recognition processor circuitry. Generally, the sound recognition processor circuitry 16 programmably analyzes the digitized version of the audio signal in a manner so that it can extract various acoustical characteristics from the signal. Once the necessary characteristics are obtained, the circuitry 16 can identify the specific phoneme sound types contained within the audio speech signal. Importantly, this phoneme identification is done without reference to the speech characteristics of the individual speaker, and is done in a manner such that the phoneme identification occurs in real time, thereby allowing the speaker to speak at a normal rate of conversation.

The sound recognition processor circuitry 16 obtains the necessary acoustical characteristics in two ways. First, it evaluates the time domain representation of the audio signal, and from that representation extracts various parameters representative of the type of phoneme sound contained within the signal. The sound type would include, for example, whether the sound is "voiced," "unvoiced," or "quiet."

Secondly, the sound recognition processor circuitry 16 evaluates the frequency domain representation of the audio signal. Importantly, this is done by successively filtering the time domain representation of the audio signal using a predetermined number of filters having a various cutoff frequencies. This produces a number of separate filtered signals, each of which are representative of an individual signal waveform which is a component of the complex audio signal waveform. The sound recognition processor circuitry 16 then "measures" each of the filtered signals, and thereby extracts various frequency domain data, including the frequency and amplitude of each of the signals. These frequency domain characteristics, I together with the time domain characteristics, provide sufficient "information" about the audio signal such that the processor circuitry 16 can identify the phoneme sounds that are contained therein.

Once the sound recognition processor circuitry 16 has extracted the corresponding phoneme sounds, it programmably invokes a series of linguistic program tools. In this way, the processor circuitry 16 translates the series of identified phonemes into the corresponding syllable, word or phrase.

With continued reference to Figure 1, electrically connected to the sound recognition processor circuitry 16 is a host computer 22. In one preferred embodiment, the host computer 22 is a standard desktop personal computer, however it could be comprised of virtually any device utilizing a programmable computer that requires data input and/or control. For instance, the host computer 22 could be a data entry system for automated baggage handling, parcel sorting, quality control, computer aided design and manufacture, and various command and control systems.

As the processor circuitry 16 translates the phoneme string, the corresponding word or phrase is passed to the host computer 22. The host computer 22, under appropriate program control, then utilizes the word or phrase as an operating system or application command or, alternatively, as data that is input directly into an application, such as a wordprocessor or database.

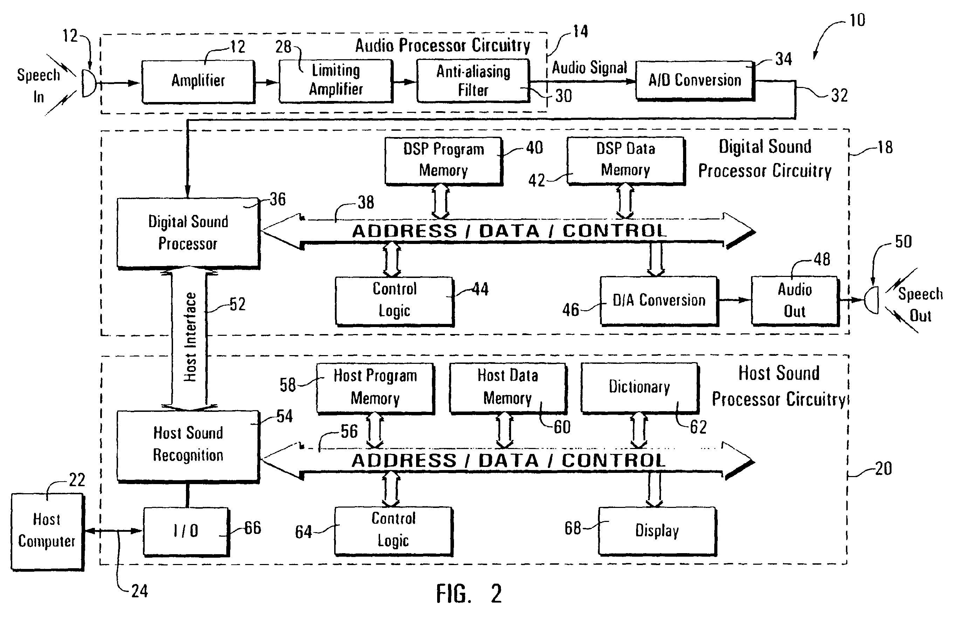

Reference is next made to Figure 2 where one presently preferred embodiment of the voice recognition system 10 is shown in further detail. As is shown, an audio speech signal is received at microphone 12, or similar device. The representative audio electrical signal is then passed to the audio processor circuitry 16 portion of the system. In the preferred embodiment of this circuit, the audio electrical signal is input to a signal amplification means for amplifying the signal to a suitable level, such as amplifier circuit 26. Although a number of different circuits could be used to implement this function, in the preferred embodiment, amplifier circuit 26 consists of a two stage operational amplifier configuration, arranged so as to provide an overall gain of approximately 300. With such a configuration, with a microphone 12 input of approximately 60 dbm, the amplifier circuit 26 will produce an output signal at approximately line level.

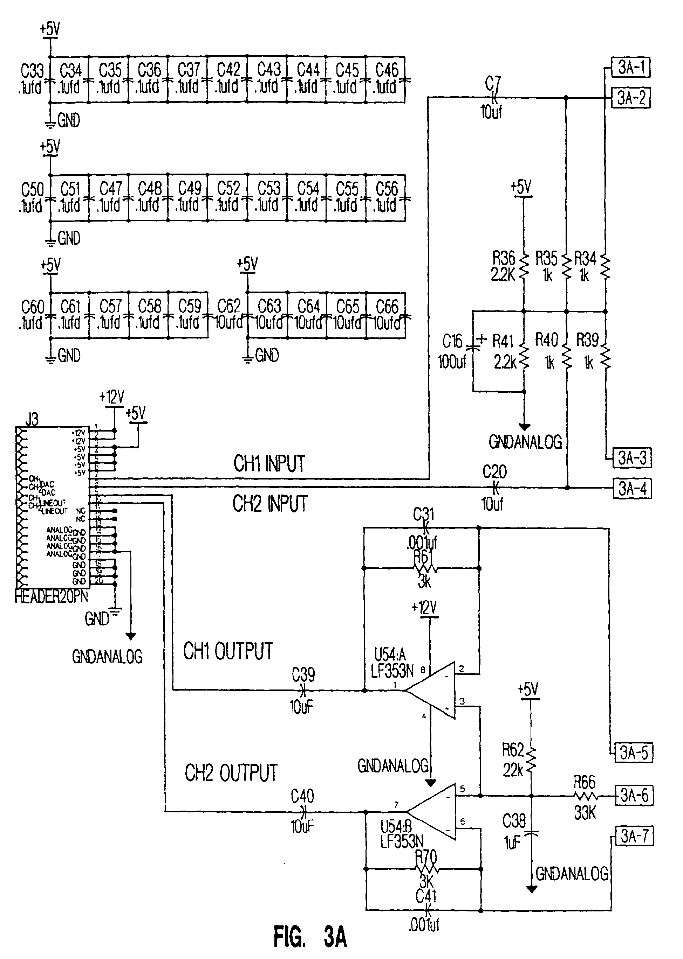

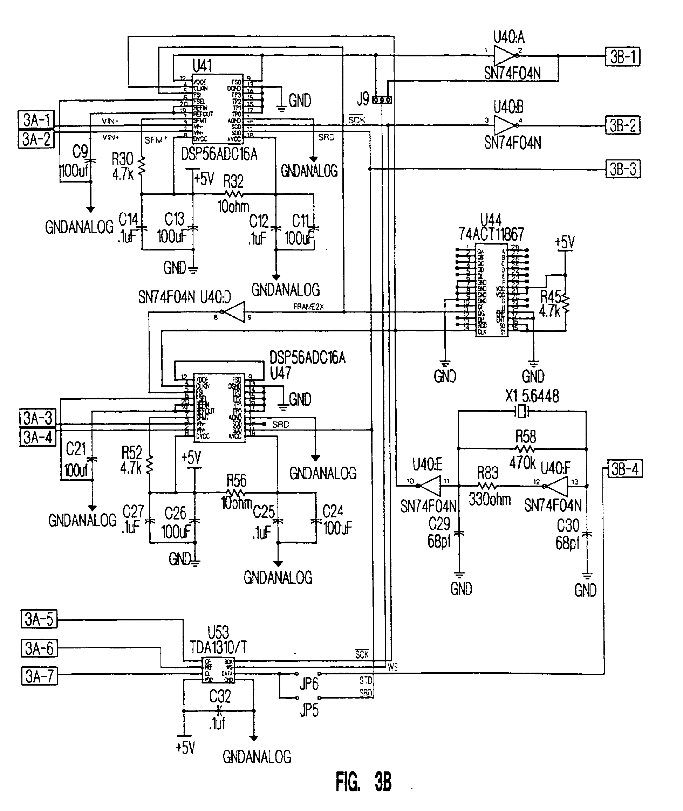

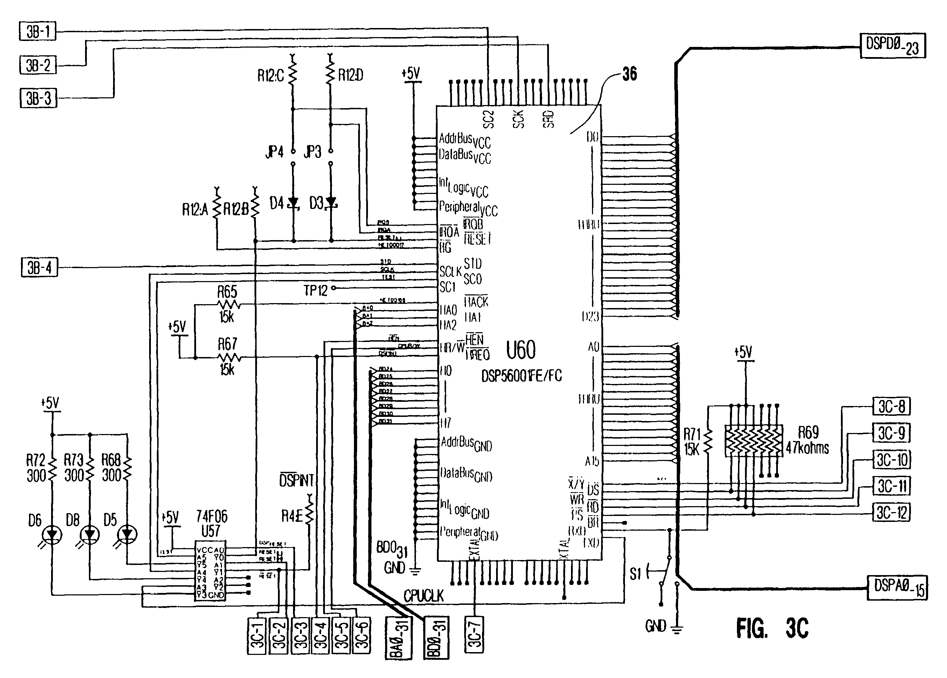

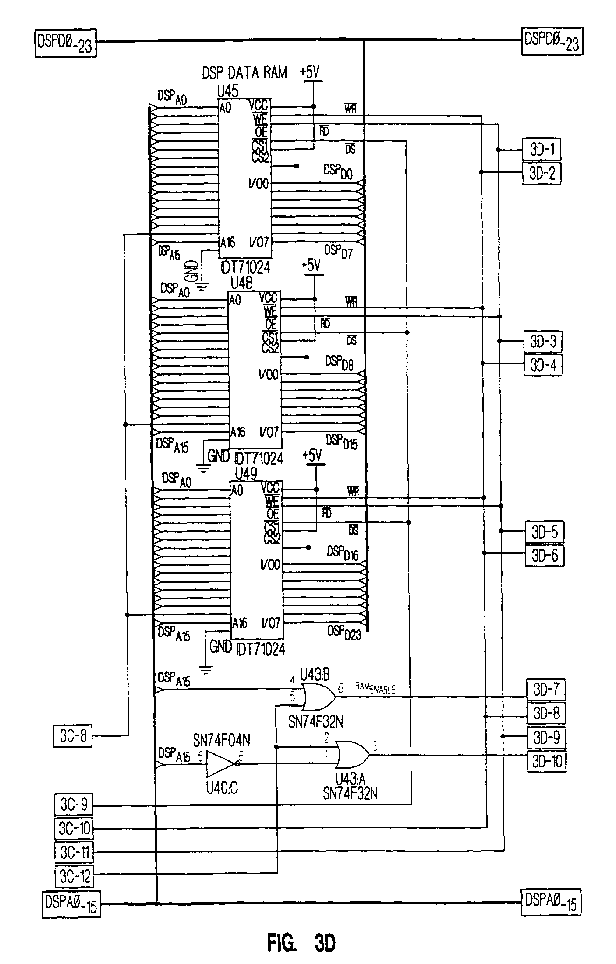

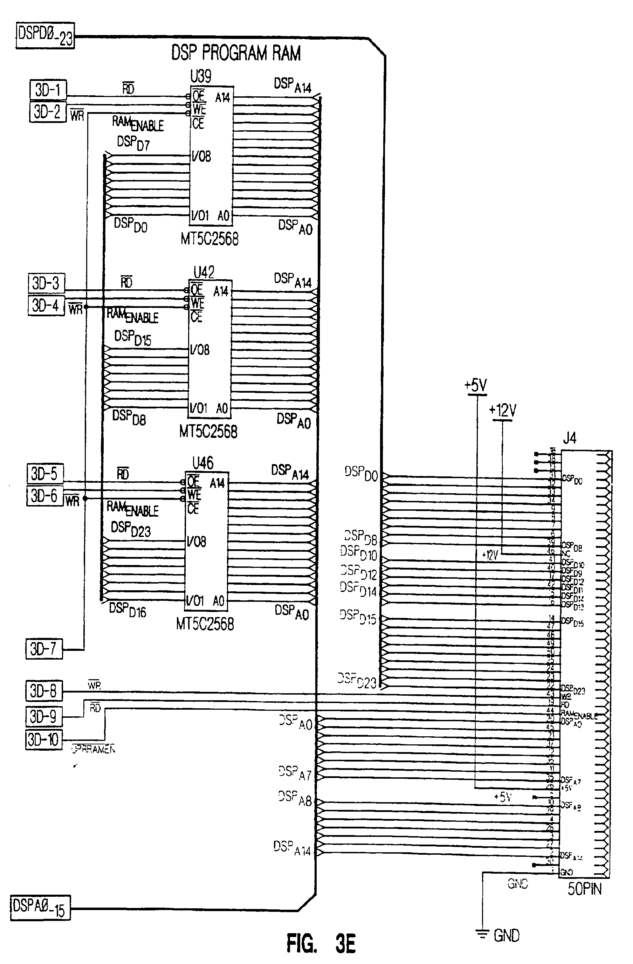

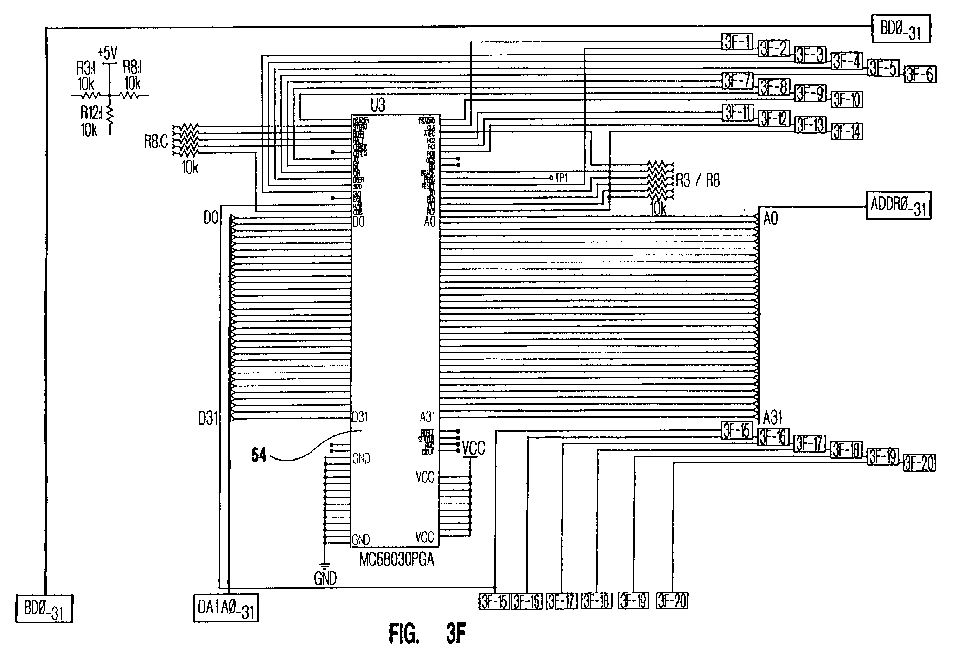

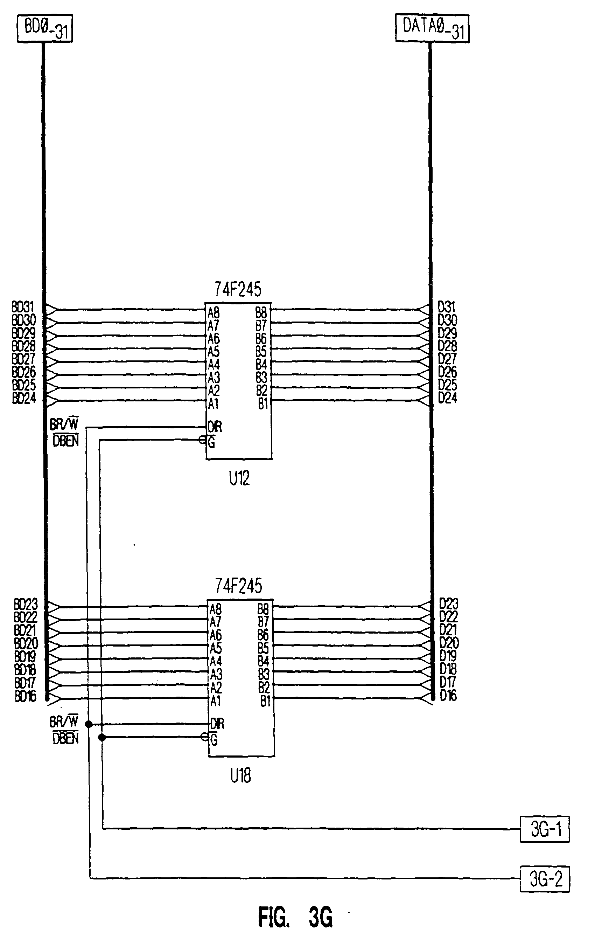

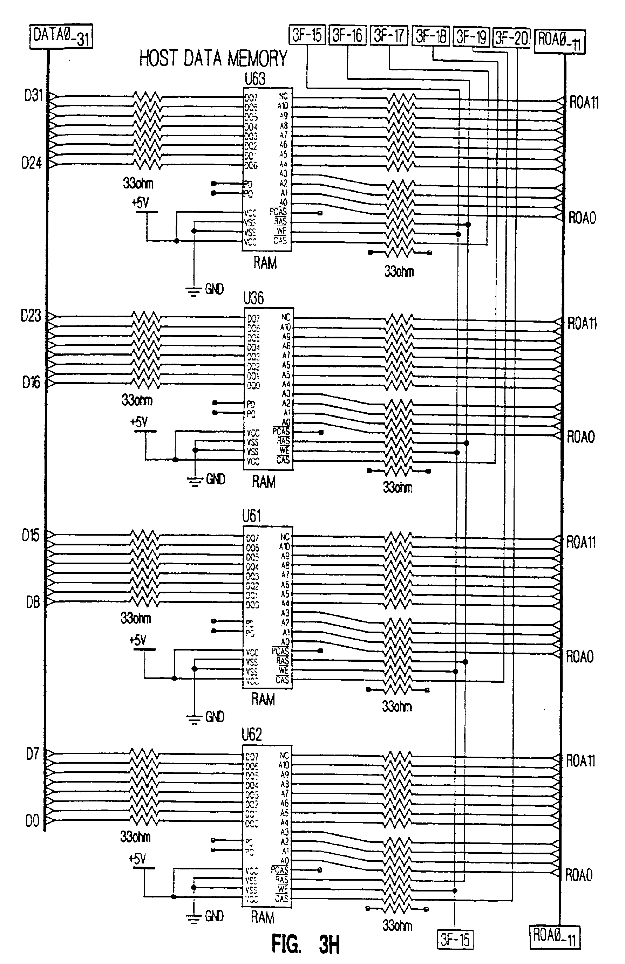

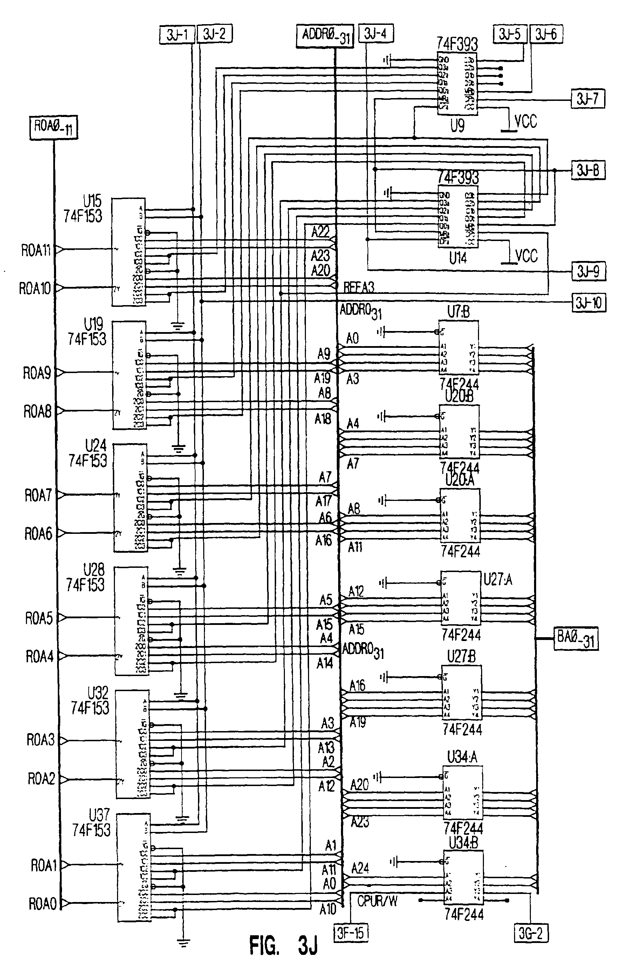

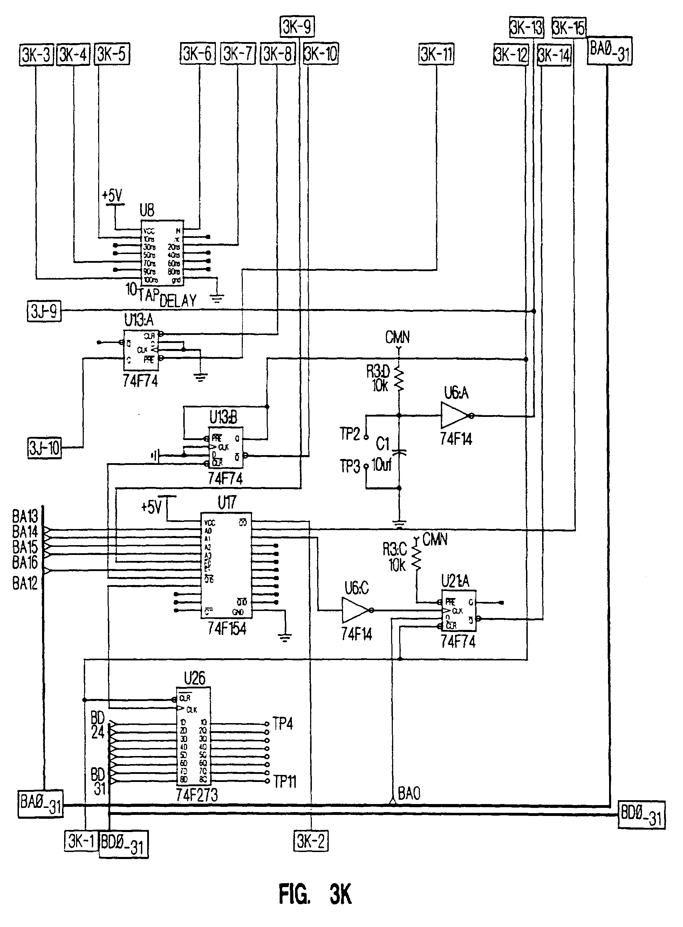

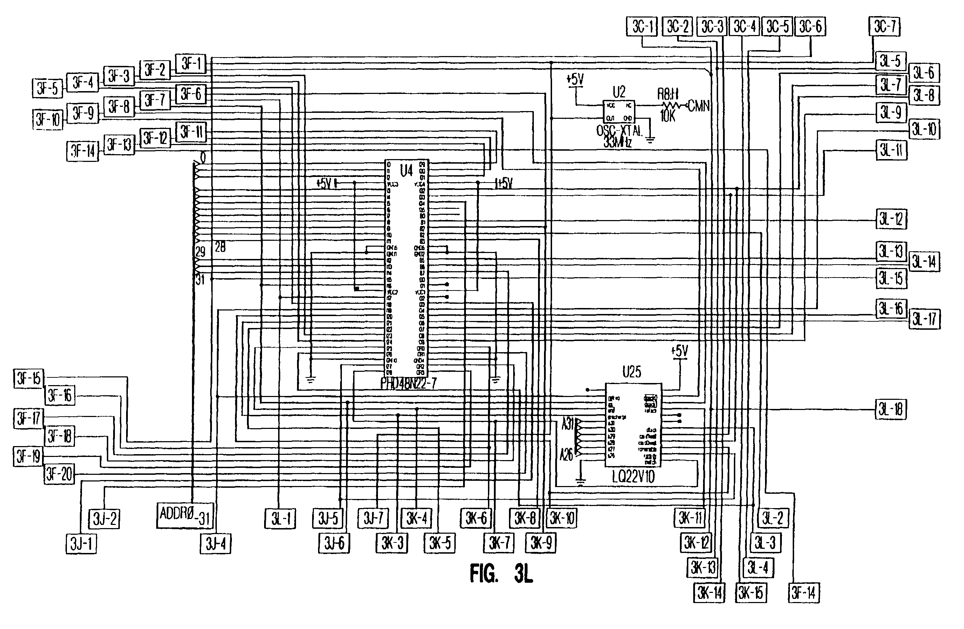

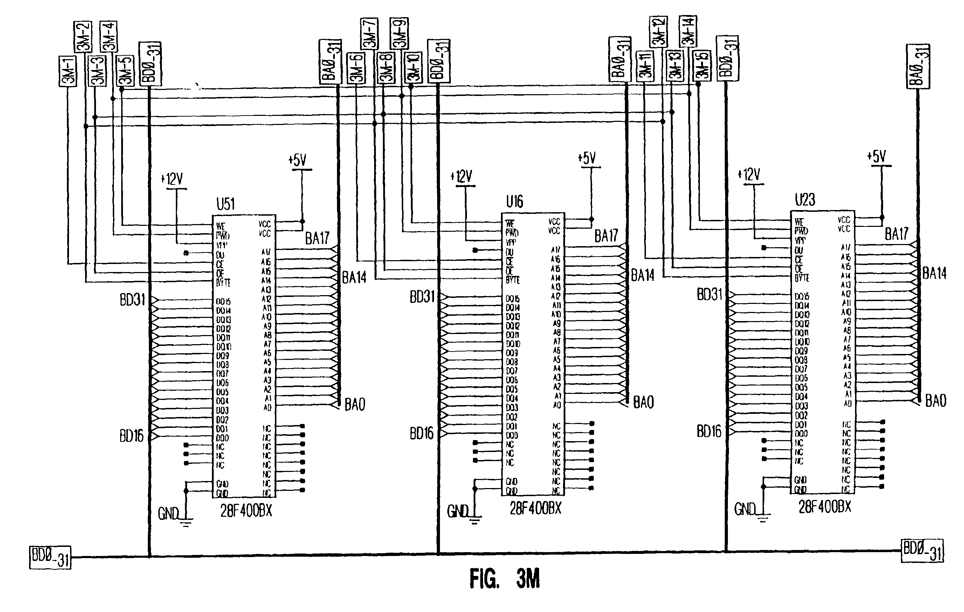

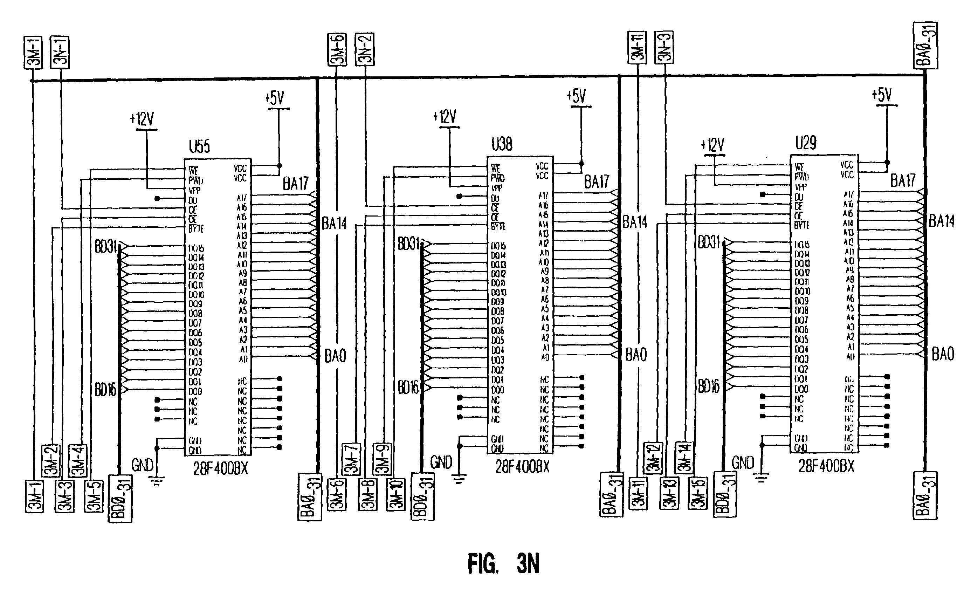

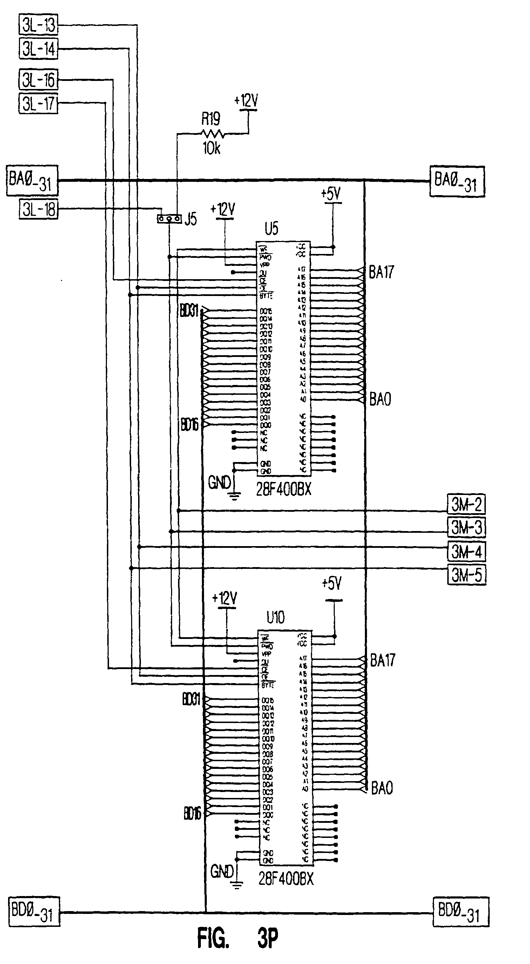

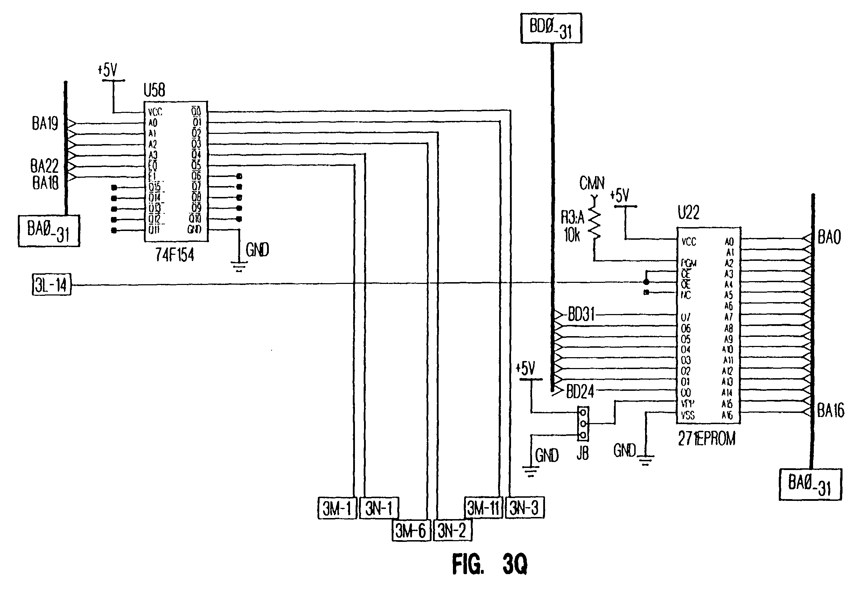

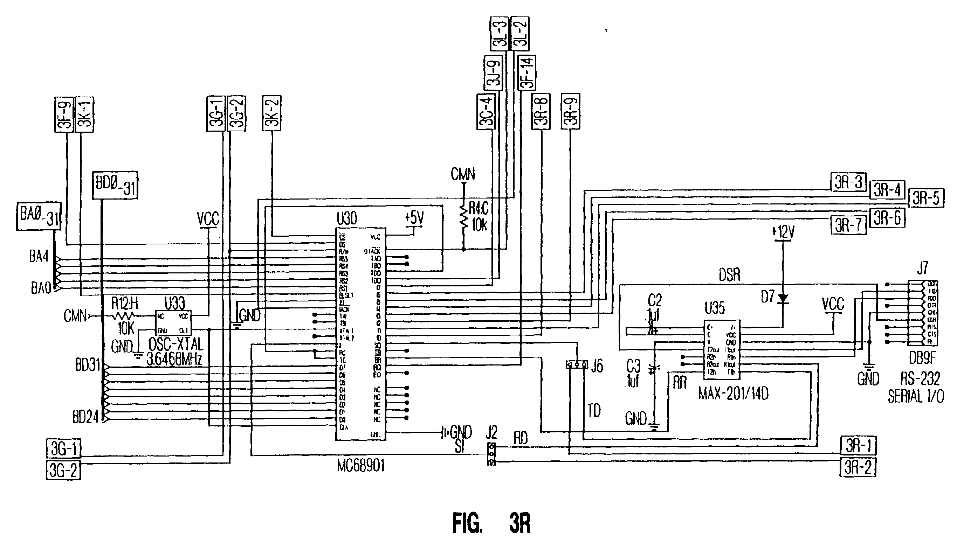

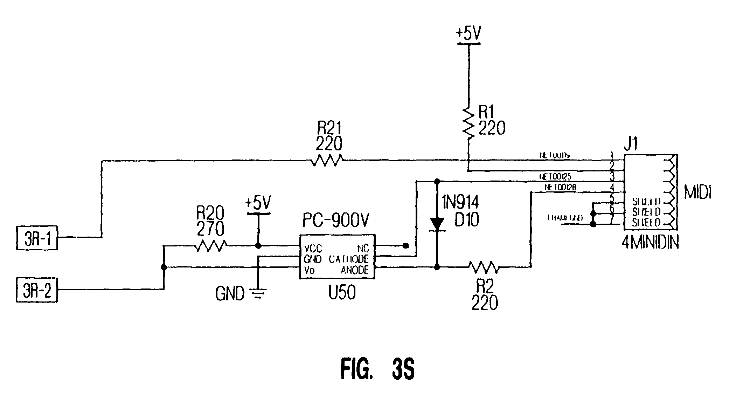

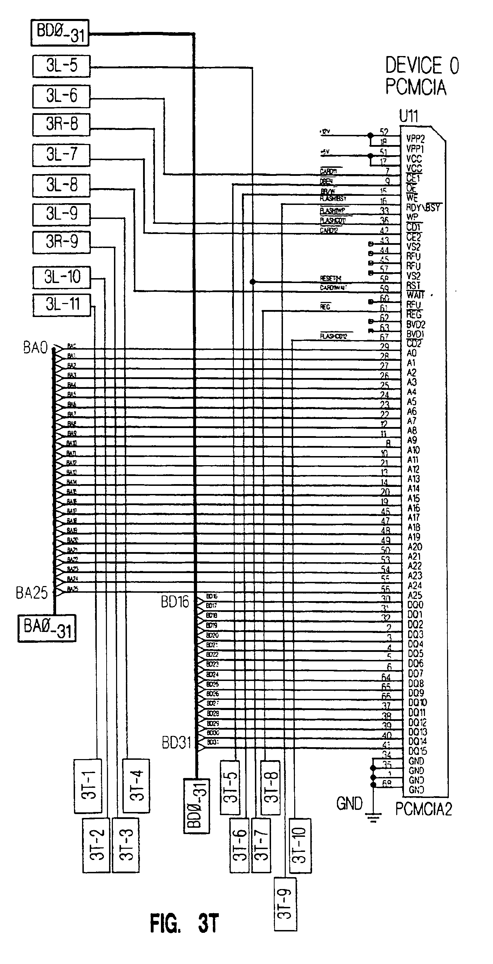

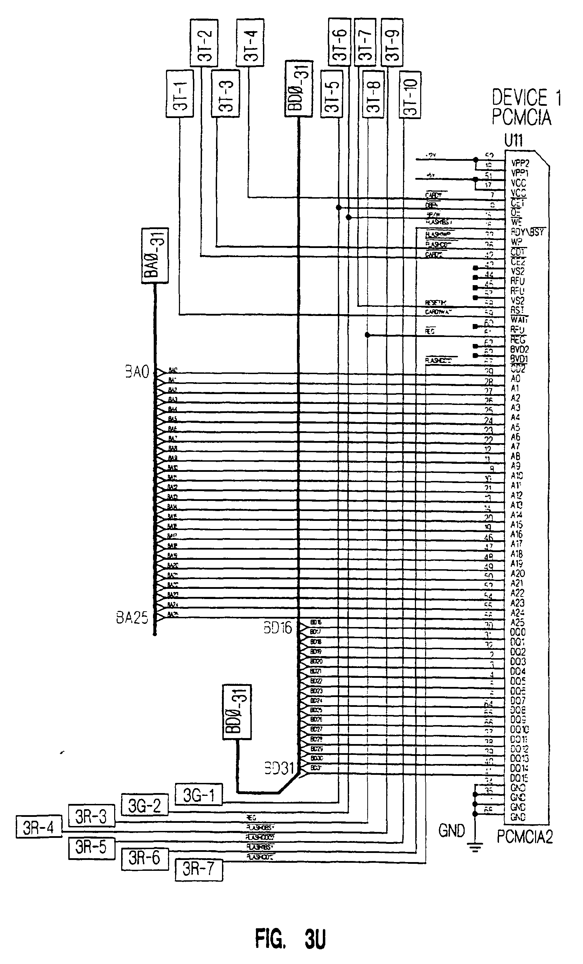

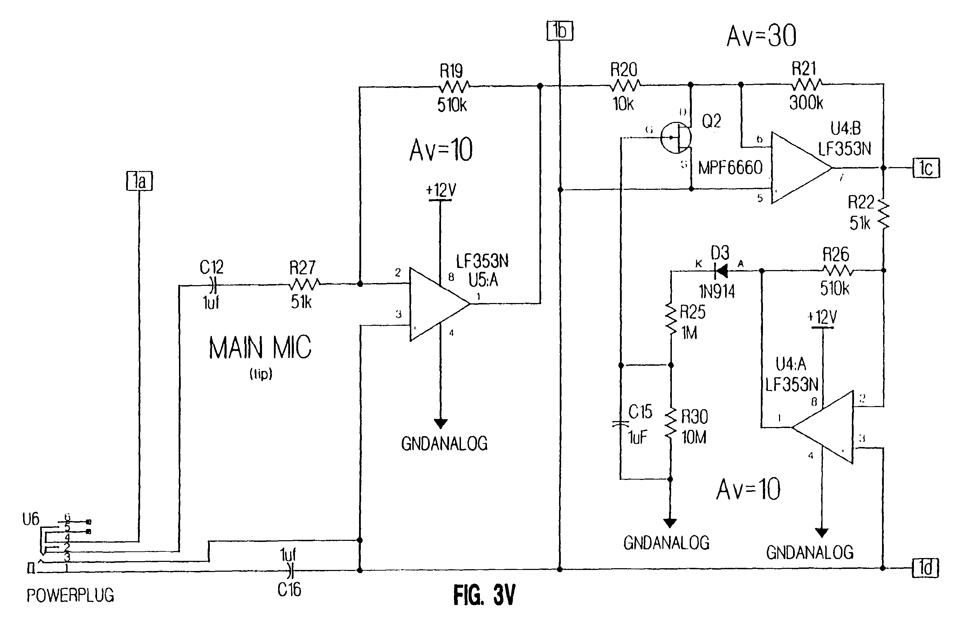

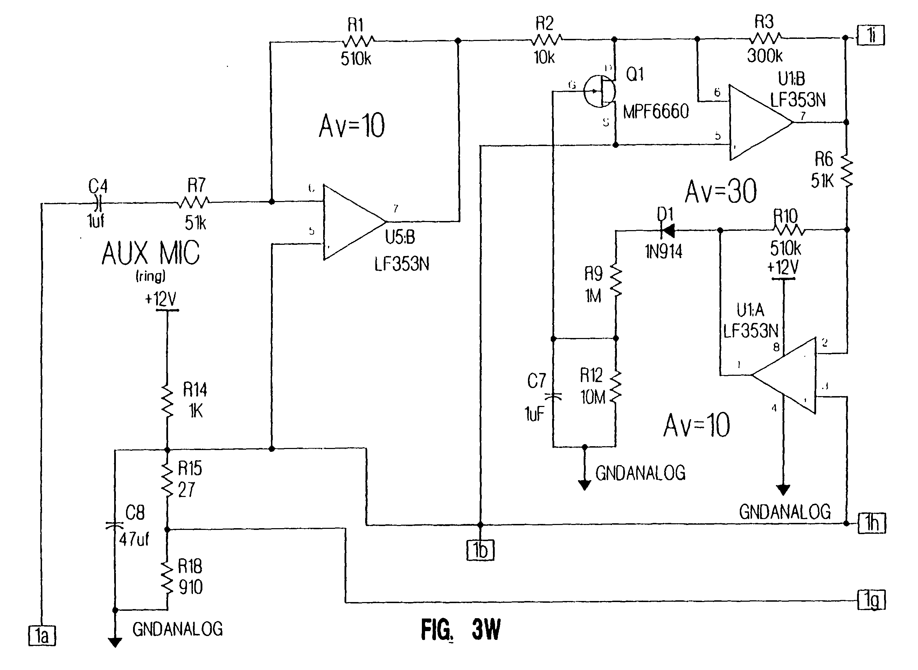

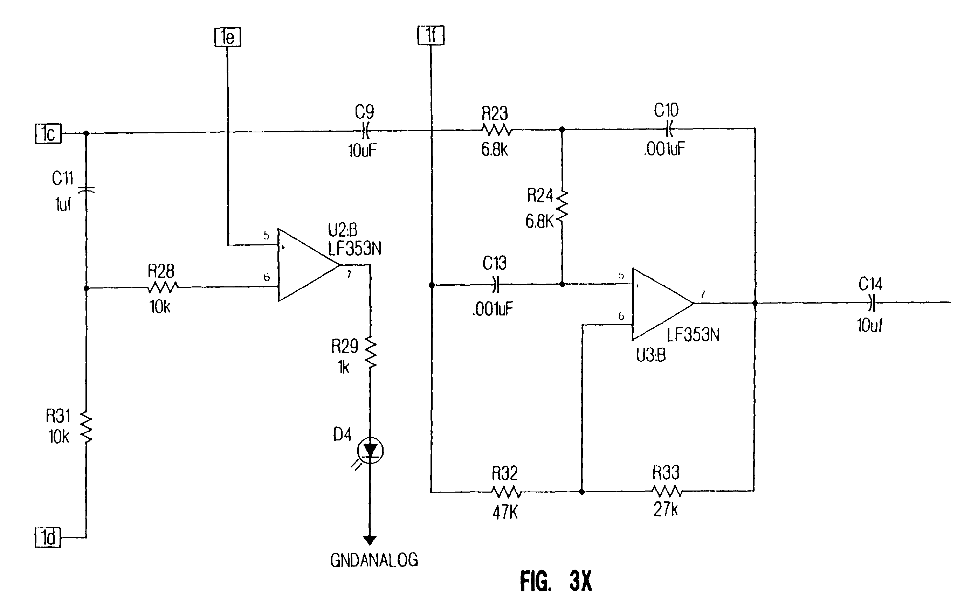

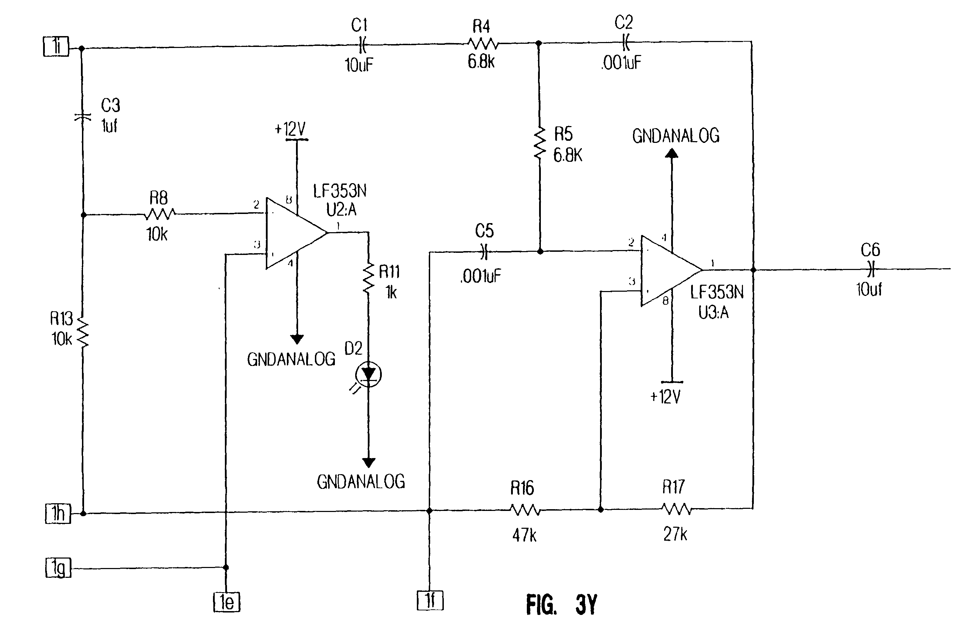

In the preferred embodiment, the amplified audio electrical signal is then passed to a means for limiting the output level of the audio signal so as to prevent an overload condition to other components contained within the system 10. The limiting means is comprised of a limiting amplifier circuit 28, which can be designed using a variety of techniques, one example of which is shown in the detailed schematic of Figure 3.

Next, the amplified audio electrical signal is passed to a filter means for filtering high frequencies from the electrical audio signal, as for example anti-aliasing filter circuit 30. This circuit, which again can be designed using any one of a number of circuit designs, merely limits the highest frequency that can be passed on to other circuitry within the system 10. In the preferred embodiment, the filter circuit 30 limits the signal's frequency to less than about 12 kHz.

The audio electrical signal, which is in an analog format, is then passed to a analog-to-digital converter means for digitizing the signal, which is shown as A/D conversion circuit 34. In the preferred embodiment, A/D conversion circuit 34 utilizes a 16-bit analog to digital converter device, which is based on Sigma-Delta sampling technology. Further, the device must be capable of sampling the incoming analog signal at a rate sufficient to avoid aliasing errors. At a minimum, the sampling rate should be at least twice the incoming sound wave's highest frequency (the Nyquist rate), and in the preferred embodiment the sampling rate is 44.1 kHz. It will be appreciated that any one of a number of A/D conversion devices that are commercially available could be used. A presently preferred component, along with the various support circuitry, is shown in the detailed schematic of Figure 3.

With continued reference to Figure 2, having converted the audio electrical signal to a digital form, the digitized signal is next supplied to the sound recognition processor circuitry 16. In the presently preferred embodiment, the sound recognition processor circuitry 16 is comprised of a digital sound processor means and a host sound processor means, both of which are preferably comprised of programmable devices. It will be appreciated however that under certain conditions, the sound recognition processor circuitry 16 could be comprised of suitable equivalent circuitry which utilizes a single programmable device.

In the presently preferred embodiment, the digital sound processor means is comprised of the various circuit components within the dotted box 18 and referred to as the digital sound processor circuitry. This circuitry receives the digitized audio signal, and then programmably manipulates that data in a manner so as to extract various sound characteristics. Specifically, the circuitry 18 first analyzes the digitized audio signal in the time domain and, based on that analysis, extracts at least one time domain sound characteristic of the audio signal. The time domain characteristics of interest help determine whether the audio signal contains a phoneme sound that is "voiced," "unvoiced," or "quiet."

The digital sound processor circuitry 18 also manipulates the digitized audio signal so as to obtain various frequency domain information about the audio signal. This is done by filtering the audio signal through a number of filter bands and generating a corresponding number of filtered signals, each of which are still in time domain. The circuitry 18 measures various properties exhibited by these individual waveforms, and from those measurements, extracts at least one frequency domain sound characteristic of the audio signal. The frequency domain characteristics of interest include the frequency, amplitude and slope of each of the component signals obtained as a result of the filtering process. These characteristics are then stored and used to determine the phoneme sound type that is contained in the audio signal.

With continued reference to Figure 2, the digital sound processor circuitry 18 is shown as preferably comprising a first programmable means for analyzing the digitized audio signal under program control, such as digital sound processor 36. Digital sound processor 36 is preferably a programmable, 24-bit general purpose digital signal processor device, such as the Motorola DSP56001. However, any one of a number of commercially available digital signal processors could also be used.

As is shown, digital sound processor 36 is preferably interfaced -- via a standard address, data and control bus-type arrangement 38 -- to various other components. They include: a program memory means for storing the set of program steps executed by the DSP 36, such as DSP program memory 40; data memory means for storing data utilized by the DSP 36, such as DSP data memory 42; and suitable control logic 44 for implementing the various standard timing and control functions such as address and data gating and mapping. It will be appreciated by one of skill in the art that various other components and functions could be used in conjunction with the digital sound processor 36.

With continued reference to Figure 2, in the presently preferred embodiment, the host sound processor means is comprised of the various circuit components within the dotted box 20 and referred to as the host sound processor circuitry. This host sound processor circuitry 20 is electrically connected and interfaced, via an appropriate host interface 52, to the digital sound processor circuitry 18. Generally, this circuitry 20 receives the various audio signal characteristic information generated by the digital sound processor circuitry 18 via the host interface 52. The host sound processor circuitry 20 analyzes this information and then identifies the phoneme sound type(s) that are contained within the audio signal by comparing the signal characteristics to standard sound data that has been compiled by testing a representative cross-section of speakers. Having identified the phoneme sounds, the host sound processor circuitry 20 utilizes various linguistic processing techniques to translate the phonemes into a representative syllable, word or phrase.

The host sound processor circuitry 20 is shown as preferably comprising a second programmable means for analyzing the digitized audio signal characteristics under program control, such as host sound processor 54. Host sound processor 36 is preferably a programmable, 32-bit general purpose CPU device, such as the Motorola 68EC030. However, any one of a number of commercially available programmable processors could also be used.

As is shown, host sound processor 54 is preferably interfaced -- via a standard address, data and control bus-type arrangement 56 -- to various other components. They include: a program memory means for storing the set of program steps executed by the host sound processor 54, such as host program memory 58. data memory means for storing data utilized by the host sound processor 54, such as host data memory 60; and suitable control logic 64 for implementing the various standard timing and control functions such as address and data gating and mapping. Again, it will be appreciated by one of skill in the art that various other components and functions could be used in conjunction with the host sound processor 54.

Also included in the preferred embodiment is a means for interfacing the host sound processor circuitry 20 to an external electronic device. In the preferred embodiment, the interface means is comprised of standard RS-232 interface circuitry 66 and associated RS-232 cable 24. However, other electronic interface arrangements could also be used, such as a standard parallel port interface, a musical instrument digital interface (MIDI), or a non-standard electrical interface arrangement.

In the preferred embodiment, the host sound processor circuitry 20 is interfaced to a electronic means for receiving the word generated by the host sound processor circuitry 20 and for processing that word as either a data input or as a command input. By way of example and not limitation, the electronic receiving means is comprised of a host computer 22, such as a standard desktop personal computer. The host computer 22 is connected to the host sound processor circuitry 20 via the RS-232 interface 66 and cable 24 and, via an appropriate program method, utilizes incoming words as either data, such as text to a wordprocessor application, or as a command, such as to an operating system or application program. It will be appreciated that the host computer 22 can be virtually any electronic device requiring data on command input.

One example of an electronic circuit which has been constructed and used to implement the above described block diagram is illustrated in Figures 3A-3Y. These figures are a detailed electrical schematic diagram showing the interconnections, part number and/or value of each circuit element used. It should be noted that Figures 3A-3Y are included merely to show an example of one such circuit which has been used to implement the functional blocks described in Figure 2. Other implementations could be designed that would also work satisfactorily.

## II. The Method.

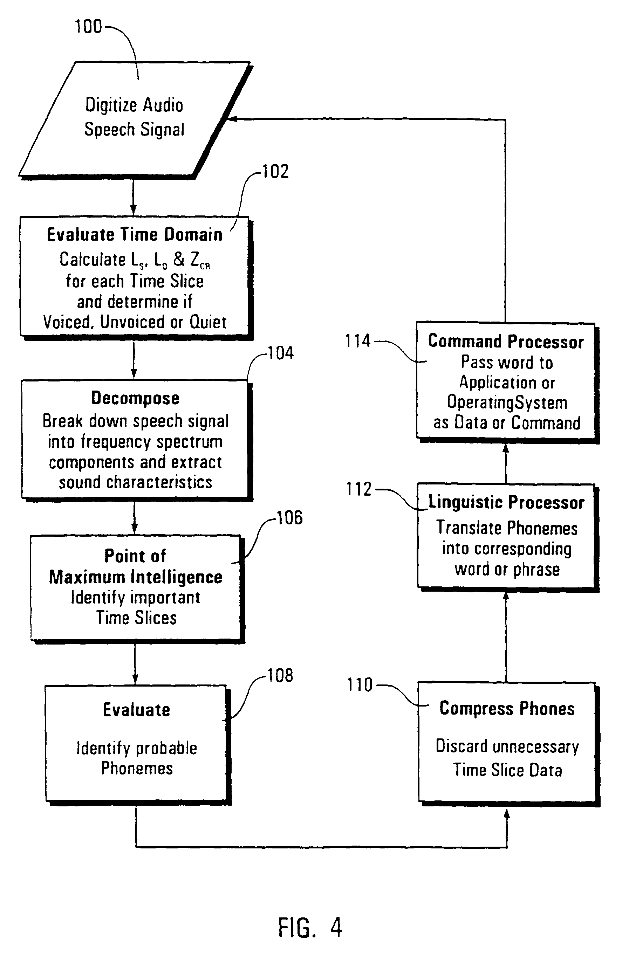

Referring now to Figure 4, illustrated is a functional flow chart showing one presently preferred embodiment of the overall program method used by the present system. As is shown, the method allows the voice recognition system 10 to continuously receive an incoming speech signal, electronically process and manipulate that signal so as to generate the phonetic content of the signal, and then produce a word or stream of words that correspond to that phonetic content. Importantly, the method is not restricted to any one speaker, or group of speakers. Rather, it allows for the unrestricted recognition of continuous speech utterances from any speaker of a given language.

Following is a general description of the overall functions carried out by the present method. A more detailed description of the preferred program steps used to carry out these functions will follow. Referring first to the functional block indicated at 100, the audio processor 16 portion of the system receives the audio speech signal at microphone 12, and the A/D conversion circuit 34 digitizes the analog signal at a suitable sampling rate. The preferred sampling rate is 44.1 kHz, although other sampling rates could be used, as long as it complies with the Nyquist sampling rate so as to avoid aliasing problems. This digitized speech signal is then broken-up into successive "time segments." In the preferred embodiment, each of these time segments contains 10,240 data points, or 232 milliseconds of time domain data.

Each time segment of 10,240 data points is then passed to the portion of the algorithm labeled "Evaluate Time Domain," shown at numeral 102. This portion of the method further breaks the time segments up into successive "time slices" Each time slice contains 256 data points, or 58 milliseconds of time domain data. Various sound characteristics contained within each time slice are then extracted. Specifically, in the preferred embodiment the absolute average envelope amplitude, the absolute difference average, and the zero crossing rate for the portion of the speech signal contained within each time slice is calculated and stored in a corresponding data structure. From these various characteristics, it is then determined whether the particular sound contained within the time slice is quiet, voiced or unvoiced. This information is also stored in the time slice's corresponding data structure.

The next step in the overall algorithm is shown at 104 and is labeled "Decompose." In this portion of the program method, each time slice is broken down into individual component waveforms by successively filtering the time slice using a plurality of filter bands. From each of these filtered signals, the Decompose function directly extracts additional sound identifying characteristics by "measuring" each signal. Identifying characteristics include, for example, the fundamental frequency of the time slice if voiced; and the frequency and amplitude of each of the filtered signals. This information is also stored in each time slice's corresponding data structure.

The next step in the overall algorithm is at 106 and is labeled "Point of Maximum Intelligence." In this portion of the program, those time slices that contain sound data which is most pertinent to the identification of the sound(s) are identified as points of "maximum intelligence;" the other time slices are ignored. In addition to increasing the accuracy of subsequent phoneme identification, this function also reduces the amount of processing overhead required to identify the sound(s) contained within the time segment.

Having identified those time slices that are needed to identify the particular sound(s) contained within the time segment, the system then executes the program steps corresponding to the functional block 110 labeled "Evaluate." In this portion of the algorithm, all of the information contained within each time slice's corresponding data structure is analyzed, and up to five of the most probable phonetic sounds (i.e., phonemes) contained within the time slice are identified. Each possible sound is also assigned a probability level, and are ranked in that order. The identified sounds and their probabilities are then stored within the particular time slice's data structure. Each individual phoneme sound type is identified by way of a unique identifying number referred to as a "PASCII" value.

The next functional step in the overall program method is performed by the system at the functional block 110 labeled "Compress Phones." In this function, the time slices that do not correspond to "points of maximum intelligence" are discarded. Only those time slices which contain the data necessary to identify the particular sound are retained. Also, time slices which contain contiguous "quiet" sections are combined, thereby further reducing the overall number of time slices. Again, this step reduces the amount of processing that must occur and further facilitates real time sound recognition.

At this point in the algorithm, there remains a sequence of time slices, each of which has a corresponding data structure containing various sound characteristics culled from both the time domain and the frequency domain. Each structure also identifies the most probable phoneme sound type corresponding to those particular sound characteristics. This data is passed to the next step of the overall program method, shown at functional block 112 and labeled "Linguistic Processor." The Linguistic processor receives the data structures, and translates the sound stream (i.e., stream of phonemes) into the corresponding English letter, syllable, word or phrase. This translation is generally accomplished by performing a variety of linguistic processing functions that match the phonemic sequences against entries in the system lexicon. The presently preferred linguistic functions include a phonetic dictionary look-up, a context checking function and database, and a basic grammar checking function.

Once the particular word or phrase is identified, it is passed to the "Command Processor" portion of the algorithm, as shown at functional block 114. The Command processor determines whether the word or phrase constitutes text that should be passed as data to a higher level application, such as a wordprocessor, or whether it constitutes a command that is to be passed directly to the operating system or application command interface.

As has been noted in the above general description, a data structure is preferably maintained for each time slice of data (i.e., 256 samples of digitized sound data; 5.8 milliseconds of sound) within system memory. This data structure is referred to herein as the "Higgins" structure, and its purpose is to dynamically store the various sound characteristics and data that can be used to identify the particular phoneme type contained within the corresponding time slice. Although other information could also be stored in the Higgins structure, TABLE I illustrates one preferred embodiment of the its contents. The data structure and its contents will be discussed in further detail below.

**TABLE I**

| VARIABLE NAME | CONTENTS |
| --- | --- |
| TYPE | Whether sound is voiced, unvoiced, quiet or Not processed. |
| LOCATION | Array location of where Time Slice starts. |
| SIZE | Number of sample data points in Time Slice. |

(continued)

| VARIABLE NAME | CONTENTS |
|---|---|
| $L_S$ | Average amplitude of signal in time domain. |
| $f_O$ | Fundamental Frequency of signal. |
| FFREQ | Array containing the frequency of each filtered signal contained in time slice. |
| AMPL | Array containing the amplitude of each filtered signal. |
| $Z_{CR}$ | Zero Crossing Rate of signal in time domain. |
| PMI | Variable indicating maximum formant stability; value indicates duration. |
| sumSlope | Sum of absolute values of filtered signal slopes. |
| POSSIBLE PHONEMES | Array containing up to five most probable phonemes contained in time slice, including for each phoneme: confidence level, standard for relative amplitude, standard for $Z_{CR}$, standard for duration for phoneme. |

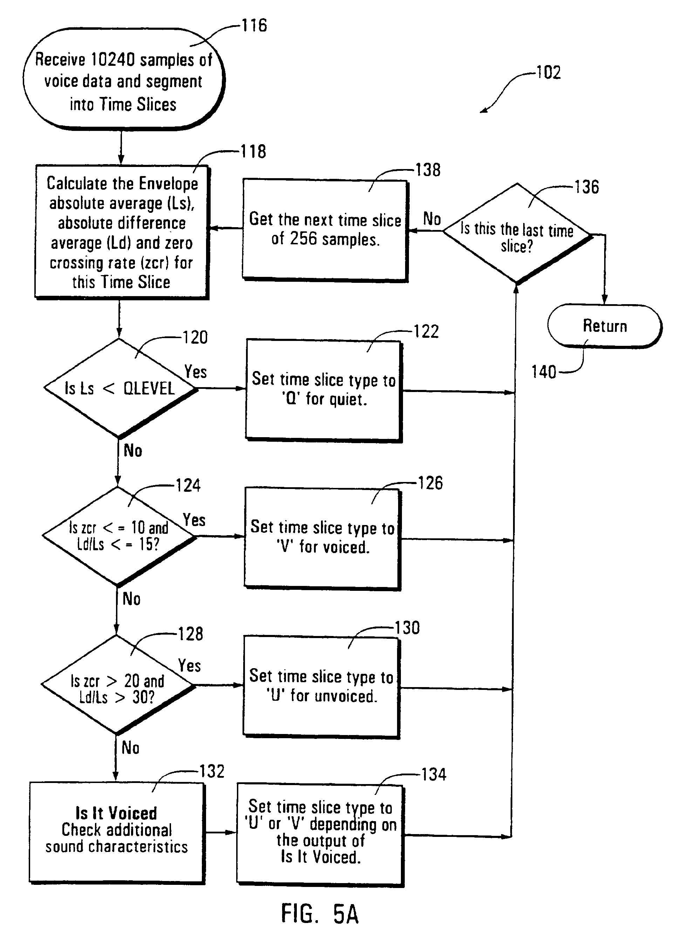

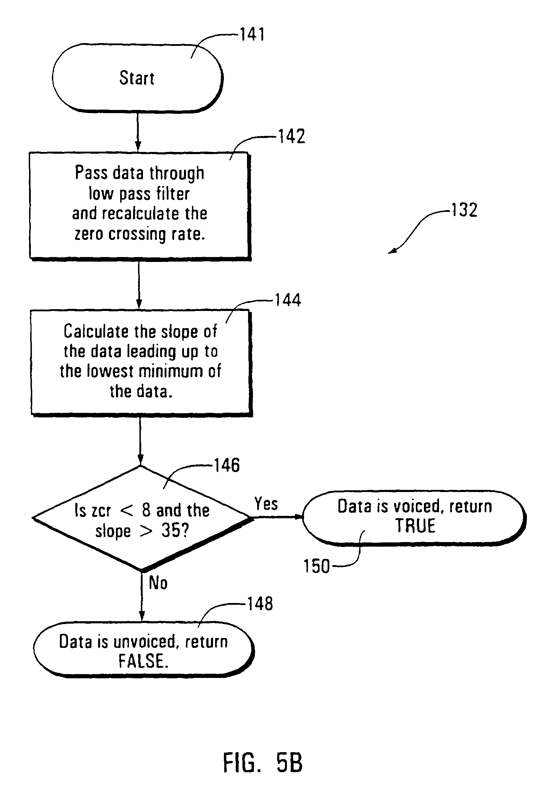

The various steps used to accomplish the method illustrated in Figure 4 will now be discussed in more detail by making specific reference to one presently preferred embodiment of the invention. It should be appreciated that the particular program steps which are illustrated in the detailed flow charts contained in Figures 5 through 11 are intended merely as an example of the presently preferred embodiment and the presently understood best mode of implementing the overall functions which are represented by the flow chart of Figure 4.

Referring first to Figure 5A, the particular program steps corresponding to the "Evaluate Time Domain" function illustrated in functional block 102 of Figure 4 are shown. As already noted, the Audio Processor 16 receives an audio speech signal from the microphone 12. The A/D conversion circuitry 34 then digitally samples that signal at a predetermined sampling rate, such as the 44.1 kHz rate used in the preferred embodiment. This time domain data is divided into separate, consecutive time segments of predetermined lengths. In the preferred embodiment, each time segment is 232 milliseconds in duration, and consists of 10,240 digitized data points. Each time segment is then passed, one at a time, to the Evaluate Time Domain function, as is shown at step 116 in Figure 5A. Once received, the time segment is further segmented into a predetermined number of equal "slices" of time. In the preferred embodiment, there are forty of these "time slices" for each time segment, each of which are comprised of 256 data points, or 5.8 milliseconds of speech.

The digital sound processor 36 then enters a program loop, beginning with step 118. As is indicated at that step, for each time slice the processor 36 extracts various time-varying acoustic characteristics. For example, in the preferred embodiment the DSP 36 calculates the absolute average of the amplitude of the time slice signal ($L_S$), the absolute difference average ($L_D$) of the time slice signal and the zero crossing rate ($Z_{CR}$) of the time slice signal. The absolute average of the amplitude $L_s$ corresponds to the absolute value of the average of the amplitudes (represented as a line level signal voltage) of the data points contained within the time slice. The absolute difference average $L_D$ is the average amplitude difference between the data points in the time slice (i.e., calculated by taking the average of the differences between the absolute value of one data point's amplitude to the next data point's). The zero crossing rate $Z_{CR}$ is calculated by dividing the number of zero crossings that occur within the time slice by the number of data points (256) and multiplying the result by 100. The number of zero crossings is equal to the number of times the time domain data crosses the X-axis, whether that crossing be positive-to-negative or negative-to-positive.

The magnitudes of these various acoustical properties can be used to identify the general type of sound contained within each time slice. For instance, the energy of "voiced" speech sounds is generally found at lower frequencies than for "unvoiced" sounds, and the amplitude of unvoiced sounds is generally much lower than the amplitude of voiced sounds. These generalizations are true of all speakers, and general ranges have been identified by analyzing speech data taken from a wide variety of speakers (i.e., men, women, and children). By comparing the various acoustical properties to these predetermined ranges, the sound type can be determined, independent of the particular speaker.

Thus, based on the acoustical properties identified in the previous step, the DSP 36 next proceeds to that portion of the program loop that identifies what type of sound is contained within the particular time slice. In the preferred embodiment, this portion of the code determines, based on previously identified ranges obtained from test data, whether the sound contained within the time slice is "quiet," "voiced" or "unvoiced."

At step 120, the absolute average of the amplitude $L_S$ is first compared with a predetermined "quiet level" range, or "QLEVEL" (i.e., an amplitude magnitude level that corresponds to silence). In the preferred embodiment, QLEVEL is equal to 250, but the value can generally be anywhere between 200 and 500. It will be appreciated that the particular "quiet level" may vary depending on the application or environment (e.g., high level of background noise, high d.c. offset present in the A/D conversion or where the incoming signal is amplified to a different level), and thus may be a different value. If $L_S$ is less than QLEVEL, the sound contained within the time slice is deemed to be "quiet," and the processor 36 proceeds to step 122. At step 122, the DSP 36 begins to build the Higgins data structure for the current time slice within DSP data memory 42. Here, the processor 36 places an identifier "Q" into a "type" flag of the Higgins data structure for this time slice.

If however, $L_S$ is greater than QLEVEL, then the sound contained within the time slice is not quiet, and the processor 36 proceeds to step 124 to determine whether the sound is instead a "voiced" sound. To make this determination, the zero crossing rate $Z_{CR}$ is first compared with a predetermined crossing-rate value found to be indicative of a voiced sound for most speakers. A low zero-crossing rate implies a low frequency and, in the preferred embodiment, if it is less than or equal to about 10, the speech sound is probably voiced.

If the $Z_{CR}$ does fall below 10, another acoustical property of the sound is evaluated before the determination is made that the sound is voiced. This property is checked by calculating the ratio of $L_D$ to $L_S$, and then comparing that ratio to another predetermined value that corresponds to a cut-off point corresponding to voiced sounds in most speakers. In the preferred embodiment, if $L_D/L_S$ is less than or equal to about 15, then the signal is probably voiced. Thus, if at step 124 it is determined that $Z_{CR}$ is less than or equal to 10 and that $L_D/L_S$ is less than or equal to about 15, then the sound is deemed to be a voiced type of sound (e.g., the sounds /U/, /d/, /w/, /i/, /e/, etc.). If voiced, the processor 36 proceeds to step 126 and places an identifier "V" into the "type" flag of the Higgins data structure corresponding to that time slice.

If not voiced, then the processor 36 proceeds to program step 120 to determine if the sound is instead "unvoiced," again by comparing the properties identified at step 118 to ranges obtained from user-independent test data. To do so, processor 36 determines whether $Z_{CR}$ is greater than or equal to about 20 and whether $L_D/L_S$ is greater than or equal to about 30. If both conditions exist, the sound is considered to be an unvoiced type of sound (e.g., certain aspirated sounds). If unvoiced, the processor 36 proceeds to step 130 and places an identifier "U" into the "type" flag of the Higgins data structure for that particular time slice.

Some sounds will fall somewhere between the conditions checked for in steps 124 and 128 (i.e., $Z_{CR}$ falls somewhere between about 11 and 19, and $L_D/L_S$ falls somewhere between about 16 and 29) and other sound properties must be evaluated to determine whether the sound is voiced or unvoiced. This portion of the program method is performed, as is indicated at step 132, by executing another set of program steps referred to as "Is it Voiced." The programs steps corresponding to this function are illustrated in Figure 5B, to which reference is now made.

After receiving the current time slice data at step 141, the processor proceeds to step 142, where a digital low pass filter is programmably implemented within the DSP 36 The speech signal contained within the current time slice is then passed through this filter. In the preferred embodiment, the filter removes frequencies above 3000 Hz, and the zero crossing rate, as discussed above, is recalculated. This is because certain voiced fricatives have high frequency noise components that tend to raise the zero crossing rate of the signal. For these types of sounds, elimination of the high frequency components will drop the $Z_{CR}$ to a level which corresponds to other voiced sounds. In contrast, if the sound is an unvoiced fricative, then the $Z_{CR}$ will remain largely unchanged and stay at a relatively high level, because the majority of the signal resides at higher frequencies.

Once the new $Z_{CR}$ has been calculated, program step 144 is performed to further evaluate whether the sound is a voiced or an unvoiced fricative. Here, the time slice's absolute minimum amplitude point is located. Once located, the processor 36 computes the slope (i.e., the first derivative) of the line defined between that point and another data point on the waveform that is located a predetermined distance from the minimum point. In the preferred embodiment, that predetermined distance is 50 data points, but other distance values could also be used. For a voiced fricative sound, the slope will be relatively high since the signal is periodic, and thus exhibits a fairly significant change in amplitude. In contrast, for an unvoiced fricative sound the slope will be relatively low because the signal is not periodic and, having been filtered, will be comprised primarily of random noise having a fairly constant amplitude.

Having calculated the $Z_{CR}$ and the slope, the processor 36 proceeds to step 146 and compares the magnitudes to predetermined values corresponding to the threshold of a voiced fricative for most speakers. In the preferred embodiment, if $Z_{CR}$ is less than about 8, and if the slope is greater than about 35, then the sound contained within the time slice is deemed to be voiced, and the corresponding "true" flag is set at step 150. Otherwise, the sound is considered unvoiced, and the "false" flag is set at step 148. Once the appropriate flag is set, the "Is it Voiced" program sequence returns to its calling routine at step 132, shown in Figure 5A.

Referring again to Figure 5A at step 134, based on the results of the previous step 132, the appropriate identifier "U" or "V" is placed into the "type" flag of the data structure for that particular time slice. Once it has been determined whether the speech sound contained within the particular time slice is voiced, unvoiced or quiet, and the Higgins data structure has been updated accordingly at steps 122, 126, 130 or 134, the DSP 36 proceeds to step 136 and determines whether the last of the 256 time slices for this particular time segment has been processed. If so, the DSP 36 returns to the main calling routine (illustrated in Figure 4) as is indicated at step 140. Alternatively, the DSP 36 obtains the next time slice at step 138, and proceeds as described above.

Referring again to Figure 4, once the "Evaluate Time Domain Parameters" function shown at functional block 102 has been completed, the "Decompose a Speech Signal" portion of the algorithm shown at functional block 104 is performed.

As will be appreciated from the following description, to accurately identify the sound(s) contained within the time segment, additional identifying characteristics must be culled from the signal. Such characteristics relate to the amplitude and frequency each of the various component signals that make up the complex waveform contained within the time slice. This information is obtained by successively filtering the time slice into its various component signals. Previously, this type of "decomposition" was usually accomplished by performing a Fast Fourier Transform on the sound signal. However, this standard approach is not adequate for evaluating user-independent speech in real time. For many sounds, accurate identification of the individual component frequencies is very difficult, if not impossible, due to the spectral leakage that is inherently present in the FFT's output. Also, because the formant signals contained in speech signals are amplitude modulated due to the glottal spectrum dampening and because most speech signals are non-periodic then, by definition, the FFT is an inadequate tool. However, such information is critical to accomplish user-independent speech recognition with the required level in confidence.

To avoid this problem, in the preferred embodiment of the Decompose a Speech Signal algorithm, a FFT is not performed. Instead, the DSP 36 filters the time slice signal into various component filtered signals. As will be described in further detail, frequency domain data can be extracted directly from each of these filtered signals. This data can then be used to determine the characteristics of the specific phoneme contained within the time slice.

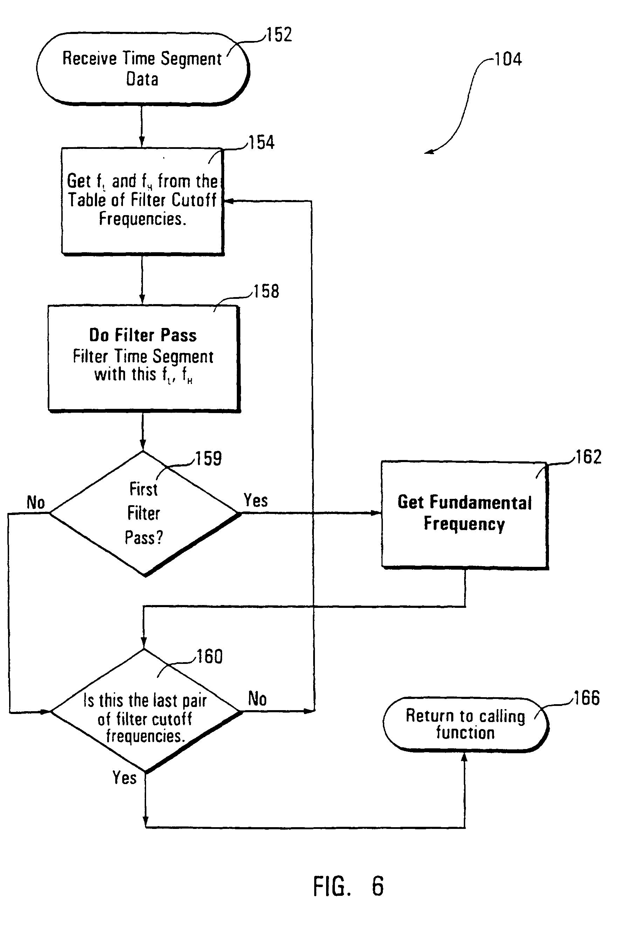

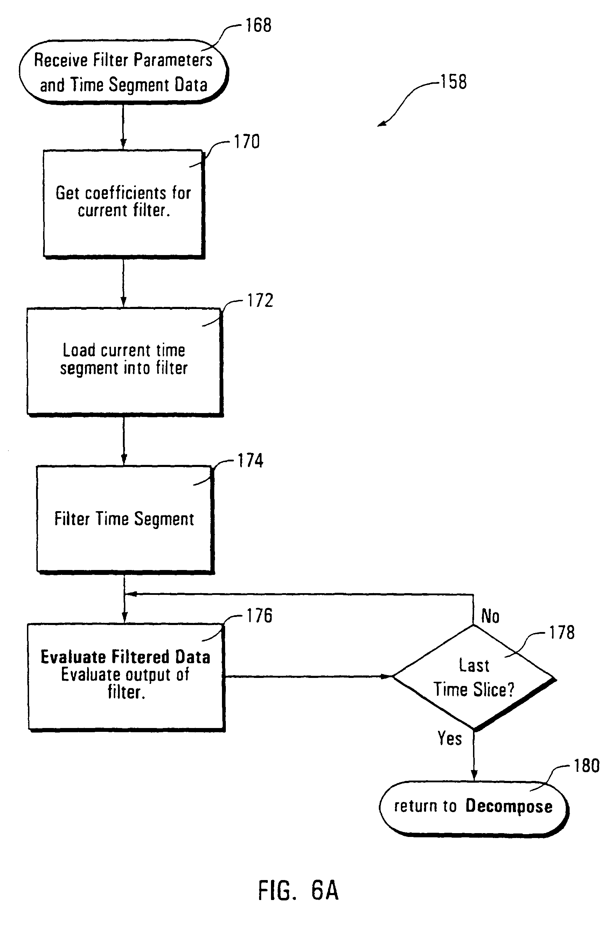

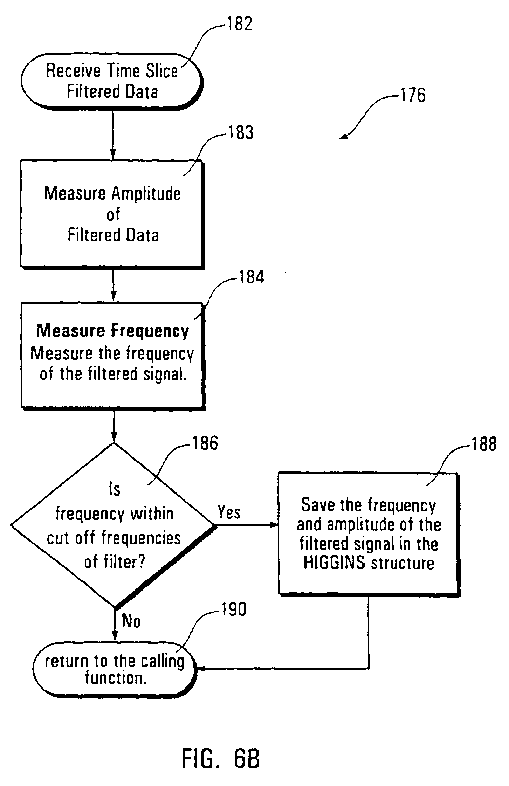

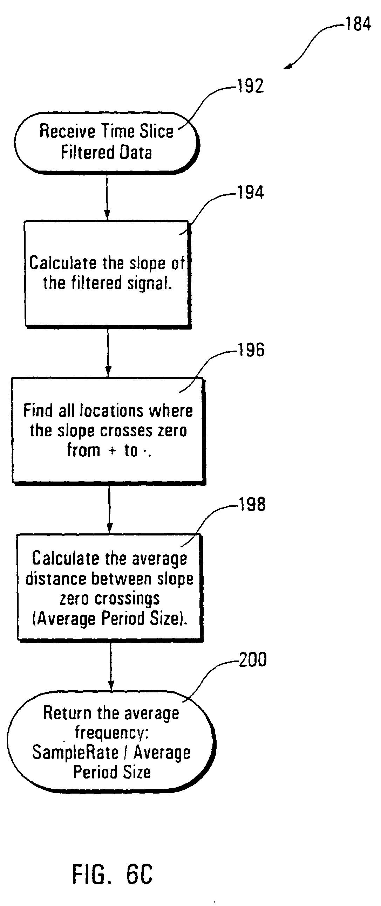

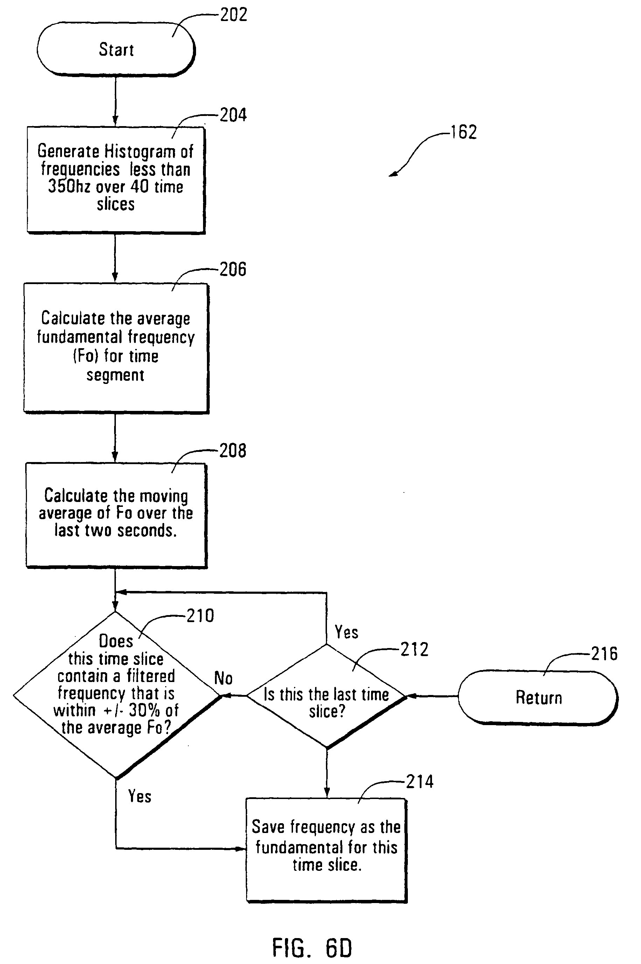

By way of example and not limitation, the detailed program steps used to perform this particular function are shown in the flow chart illustrated in Figure 6. Referring first to program step 152, the current time segment (10,240 data samples; 232 milliseconds in duration) is received. The program then enters a loop, beginning with step 154, wherein the speech signal contained within the current time segment is successively filtered into its individual component waveforms by using a set of digital bandpass filters having specific frequency bands. In the preferred embodiment, these frequency bands are precalculated, and stored in DSP program memory 40. At step 154, the processor 36 obtains the first filter band, designated as a low frequency ($f_L$) and a high frequency ($f_H$), from this table of predetermined filter cutoff frequencies. In the preferred embodiment, the filter cutoff frequencies are located at: 0 Hz, 250 Hz, 500 Hz, 1000 Hz, 1500 Hz, 2000 Hz, 2500 Hz, 3000 Hz, 3500 Hz, 4000 Hz, 4500 Hz, 5000 Hz, 6000 Hz, 7000 Hz, 8000 Hz, 9000 Hz, and 10,000 Hz. It will be appreciated that different or additional cutoff frequencies could also be used.

Thus, during the first pass through the loop beginning at step 154, $f_L$ will be set to 0 Hz, and $f_H$ to 250 Hz. The second pass through the loop will set $f_L$ to 250 Hz and $f_H$ to 500 Hz, and so on.

Having set the appropriate digital filter parameters, the processor 36 then proceeds to step 158, where the actual filtering of the time segment occurs. To do so, this step invokes another function referred to as "Do Filter Pass," which is shown in further detail in Figure 6A and to which reference is now made.

At step 168 of function Do Filter Pass, the previously calculated filter parameters, as well as the time segment data is received (10,240 data points). At step 170, the coefficients for the filter are obtained from a predetermined table of coefficients that correspond to each of the different filter bands. Alternatively, the coefficients could be recalculated by the processor 36 for each new filter band.

Having set the filter coefficients, the processor 36 executes program step 172, where the current time segment is loaded into the digital filter. Optionally, rather than loading all data samples, the signal may be decimated and only every nth point loaded, where n is in the range of one to four. Before the signal is decimated, it should be low pass filtered down to a frequency less than or equal to the original sample rate divided by 2*n. At step 174, the filtering operation is performed on the current time segment data. The results of the filtering operation are written into corresponding time segment data locations within DSP data memory 42. Although any one of a variety of different digital filter implementations could be used to filter the data, in the preferred embodiment the digital bandpass filter is an IIR cascade-type filter with a Butterworth response.

Once the filtering operation is complete for the current filter band, the processor 36 proceeds to step 176 where the results of the filtering operation are evaluated. This is performed by the function referred to as "Evaluate Filtered Data," which is shown in further detail in Figure 6B, to which reference is now made.

At step 182 of Evaluate Filtered Data, a time slice of the previously filtered time segment is received. Proceeding next to step 183, the amplitude of this filtered signal is calculated. The amplitude is calculated using the following equation:

$$Amplitude = \frac{Max - Min}{2}$$

where max = the highest amplitude value in the time slice; and min = the lowest amplitude value in the time slice.

At step 184 the frequency of the filtered signal is measured. This is performed by a function called "Measure Frequency of a Filtered Signal," which is shown in further detail in Figure 6C. Referring to that figure, at step 192 the filtered time slice data is received. At step 194, the processor 36 calculates the slope (i.e., the first derivative) of the filtered signal at each data point. This slope is calculated with reference to the line formed by the previous data point, the data point for which the slope is being calculated, and the data point following it, although other methods could also be used.

Proceeding next to step 196, each of the data point locations corresponding to a slope changing from a positive value to a negative value is located. Zero crossings are determined beginning at the maximum amplitude value in the filtered signal and proceeding for at least three zero crossings. The maximum amplitude value represents the closure of the vocal folds. Taking this frequency measurement after the close of the vocal folds insures the most accurate frequency measurement. At step 198 the average distance between these zero crossing points is calculated. This average distance is the average period size of the signal, and thus the average frequency of the signal contained within this particular time slice can be calculated by dividing the sample rate by this average period. At step 200, the frequency of the signal and the average period size is returned to the calling function "Evaluate Filtered Data." Processing then continues at step 184 in Figure 6B.

Referring again to that figure, once the frequency of the signal has been determined, at step 186 it is determined whether that frequency falls within the cutoff frequencies of the current filter band. If so, step 188 is executed, wherein the frequency and the amplitude is stored in the "ffreq" and the "ampl" arrays of the time slice's corresponding Higgins data structure. If the frequency does not fall within the cutoff frequencies of the current filter band, then the frequency is discarded and step 190 is executed, thereby causing the DSP 36 to return to the calling function "Do Filter Pass." Processing then continues at step 176 in Figure 6A.

As is shown in Figure 6A, once the "Evaluate Filter" Function has been performed, and the frequency and amplitude of the current frequency band has been determined, the DSP 36 proceeds next to program step 178. That step checks whether the last time slice has been processed. If not, then the program continues in the loop, and proceeds to program step 176 to again operate the current band filter on the next time slice, as previously described. If the last time slice has been filtered, then step 180 is performed and the processor 36 returns to the "Decompose a Speech Signal" function where processing continues at step 158 in Figure 6.

With continued reference to Figure 6, the processor determines at step 159 if the first filter band has just been used for this time segment. If so, the next step in the process is shown at program step 162. There, a function referred to as "Get Fundamental Frequency" is performed, which is shown in further detail in Figure 6D, and to which reference is now made.

Beginning at step 202 of that function, the data associated with the current time segment is received. Next, the processor 36 proceeds to program step 204 and identifies, by querying the contents of the respective "ffreq" array locations, which of the time slices have frequency components that are less than 350 Hz. This range of frequencies (0 through 350 Hz) was chosen because the fundamental frequency for most speakers falls somewhere within the range of 70 to 350 Hz. Limiting the search to this range insures that only fundamental frequencies will be located. When a time slice is located that does have a frequency that falls within this range, it is placed in a histogram type data structure. The histogram is broken up into "bins," which correspond to 50 hz blocks within the 0 to 350 Hz range.

Once this histogram has been built, the DSP 36 proceeds to step 206, and determines which bin in the histogram has the greatest number of frequencies located therein. The frequencies contained within that particular bin are then averaged, and the result is the Average Fundamental Frequency ($F_O$) for this particular time segment. This value is then stored in DSP data memory 42.

At step 208, the DSP 36 calculates the "moving" average of the average fundamental frequency, which is calculated to be equal to the average of the $F_O$'s calculated for the previous time segments. In the preferred embodiment, this moving average is calculated by keeping a running average of the previous eight time segment average fundamental frequencies, which corresponds to about two seconds of speech. This moving average can be used by the processor 36 to monitor trends in the speaker's voice, such as a change in volume, and pitch, or even a change in speaker.

Once the average fundamental frequency for the time segment and the moving average of the fundamental frequency has been calculated, the processor 36 then enters a loop to determine whether the individual time slices that make up the current time segment have a fundamental frequency $f_o$ component. This determination is made at step 210, wherein the processor 36, beginning with the first time slice, compares the time slice's various frequency components (previously identified and stored within the ffreq array in the corresponding data structure) to the average fundamental frequency $F_O$ identified in step 206. If one of the frequencies is within about 30% of that value, then that frequency is deemed to be a fundamental frequency of the time slice, and it is stored as a fundamental $f_o$ in the time slice Higgins data structure, as is indicated at program step 214. As is shown at step 212, this comparison is done for each time slice. At step 216, after each time slice has been checked, the DSP 36 returns to the Decompose a Speech Signal routine, and continues processing at step 162 in Figure 6.

At step 160 in that figure, the processor 36 checks if the last pair of cutoff frequencies ($f_L$ and $f_H$) has yet been used. If not, the processor 36 continues the loop at step 154, and obtains the next set of cutoff frequencies for the next filter band. The DSP 36 then continues the filtering process as described above until the last of the filter bands has been used to filter each time slice. Thus, each time segment will be filtered at each of the filter bands. When complete, the Higgins data structure for each time slice will have been updated with each a clear identification of the frequency, and its amplitude, contained within each of the various filter bands. Advantageously the frequency data has thus far been obtained without utilizing an FFT approach, and the problems associated with that tool have thus been avoided.

Once the final pair of cutoff frequencies has been used at step 160, step 166 causes the DSP 36 to execute a return to the main program illustrated in Figure 4. Having completed the Decompose a Speech Signal portion of the program method, there exists a Higgins Data structure for each time slice. Contained within that structure are various sound characteristics culled from both time domain data and frequency domain data. These characteristics can now be utilized to identify the particular sound, or phoneme, carried by the signal. In the preferred embodiment, the series of program steps used to implement this portion of the program method are stored within the host program memory 58, and are executed by the Host Sound Processor 54.

This first function performed by the host sound processor 54 is illustrated in the block labeled "Point of Maximum Intelligence" shown at item 106 in Figure 4. In this function, the processor 54 evaluates which of the Higgins data structures are critical to the identification of the phoneme sounds contained within the time segment. This reduces the amount of processing needed to identify a phoneme, and insures that phonemes are accurately identified.

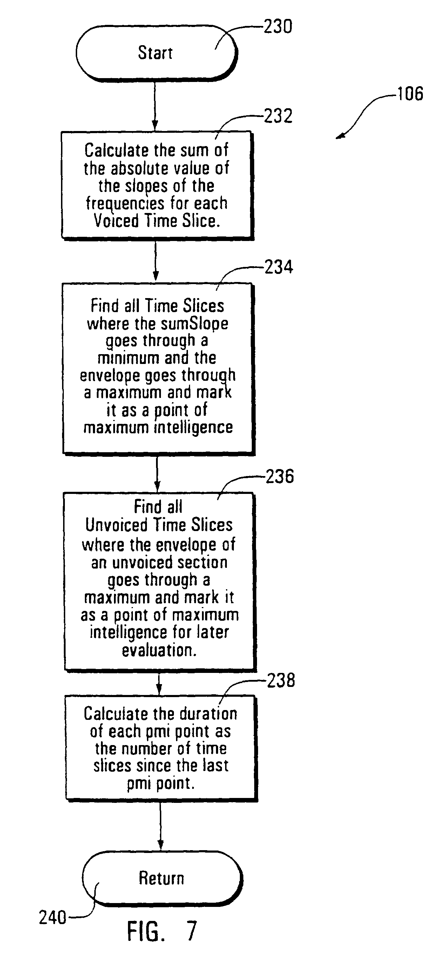

One example of the detailed program steps used to implement this function are shown in Figure 7, to which reference is now made. The process begins at step 230, where the host sound processor 54 receives each of the Higgins Data Structures for the current time segment via the host interface 52, and stores them within host data memory 60. At step 232, for all time slices containing a voiced sound, the absolute value of the slope of each filtered signal frequency is calculated, and then summed. The slope of a particular filtered signal is preferably calculated with reference to the frequencies of the signals located in the immediately adjacent time slices. Thus, for the filtered signal associated with the second frequency band, its slope is calculated by referencing its frequency with the corresponding filter signal frequencies in adjacent time slices (which are located in the second array location of the respective ffreq array). The sum of the absolute value of each filtered signal's slope for a time slice is then stored in the sumSlope variable of each applicable Higgins data structure.

The host processor 54 then proceeds to program step 234. At this step, a search is conducted for those time slices which have a sumSlope value going through a minimum and which also have an average amplitude $L_s$ that goes through a maximum. The time slices which satisfy both of these criteria are time slices where the formant frequencies are changing the least (i.e., minimum slope) and where the sound is at it highest average amplitude (i.e., highest $L_S$), and are thus determined to be the point at which the dynamic sound has most closely reached a static or target sound. Those time slices that satisfy both criteria are identified as "points of maximum intelligence," and the corresponding PMI variable within the Higgins data structure is filled with a PMI value. Other time slices contain frequency components that are merely leading up to this target sound, and thus contain information that is less relevant to the identification of the particular phoneme.

Having identified which "voiced" time slices should be considered "points of maximum intelligence," the same is done for all time slices containing an "unvoiced" sound. This is accomplished at step 236, where each unvoiced time slice having an average amplitude $L_S$ that goes through a maximum is identified as a "point of maximum intelligence." Again, the corresponding PMI variable within the appropriate Higgins data structure is filled with a PMI value.

The host processor 54 then proceeds to program step 238 wherein the "duration" of each time slice identified as a PMI point is determined by calculating the number of time slices that have occurred since the last PMI time slice occurred. This duration value is the actual PMI value that is placed within each time slice data structure that has been identified as being a "point of maximum intelligence." The host processor 54 then returns, as is indicated at step 240, to the main calling routine shown in Figure 4.

Referring again to that figure, the next functional block performed is the "Evaluate" function, shown at 108. This function analyzes the sound characteristics of each of the time slices identified as points of maximum intelligence, and determines the most likely sounds that occur during these time slices. This is generally accomplished by comparing the measured sound characteristics (i.e., the contents of the Higgins structure) to a set of standard sound characteristics. The sound standards have been compiled by conducting tests on a cross-secrion of various individual speaker's sound patterns, identifying the characteristics of each of the sounds, and then formulating a table of standard sound characteristics for each of the forty or so phonemes which make up the given language.

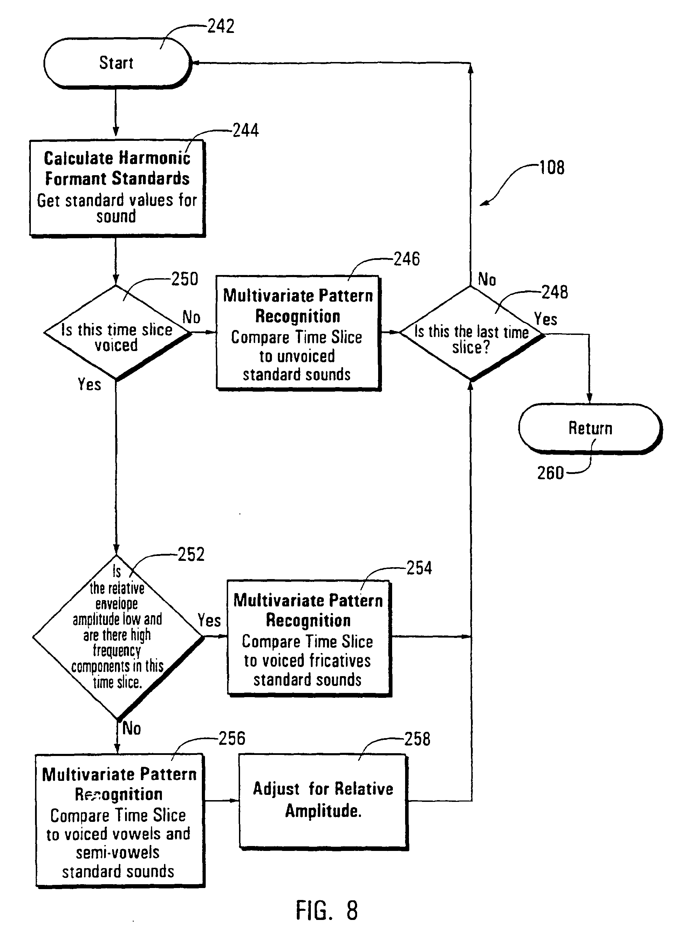

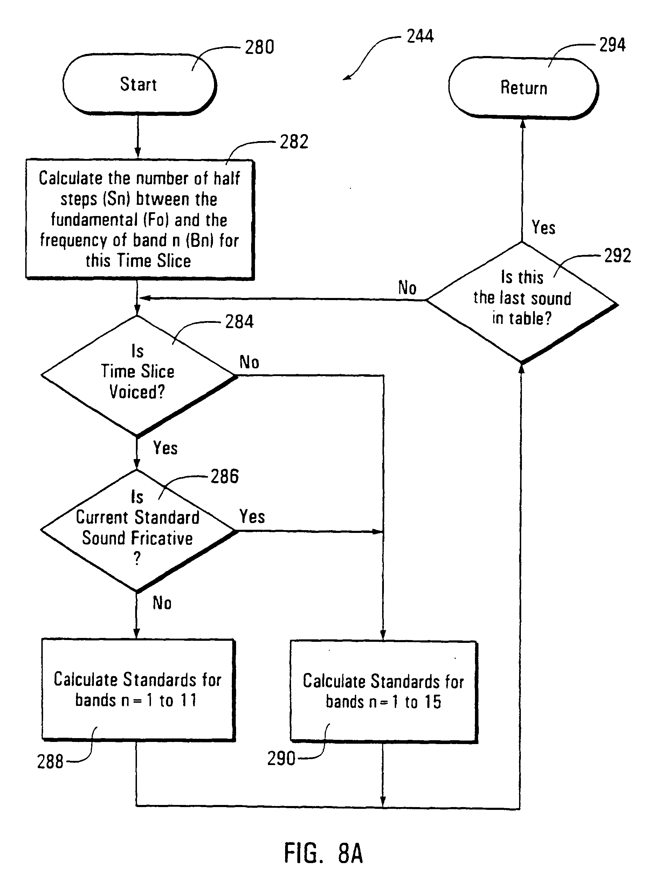

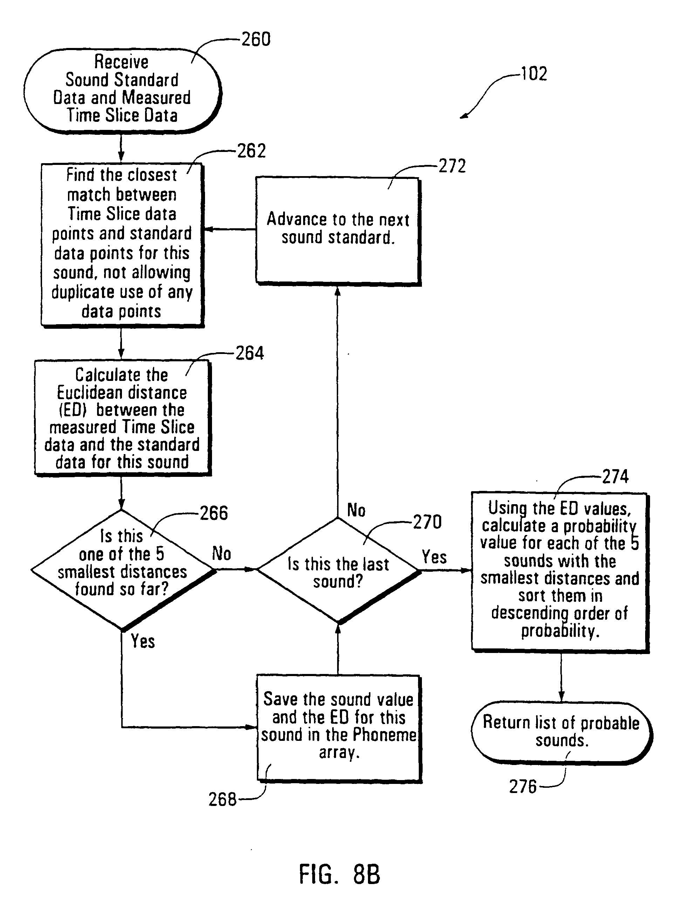

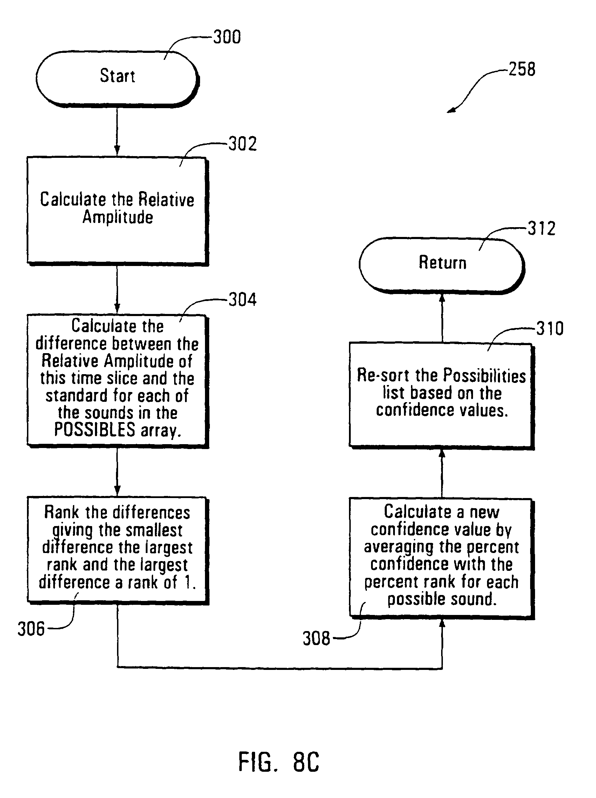

Referring to Figure 8, one example of the detailed program steps used to implement the Evaluate function are illustrated. Beginning at program step 242, each of the time slices identified as PMI points are received. At step 244, the host processor 54 executes a function referred to as "Calculate Harmonic Formant Standards."

The Calculate Harmonic Formant Standards function operates on the premise that the location of frequencies within any particular sound can be represented in terms of "half-steps." The term half-steps is typically used in the musical context, but it is also a helpful in the analysis of sounds. On a musical or chromatic scale, the frequency of the notes doubles every octave. Since there are twelve notes within an octave, the frequency of two notes are related by the formula:

$$\text{UPPER NOTE} = (\text{LOWER NOTE}) * 2^{n/12},$$

where n is the number of half-steps.

Given two frequencies (or notes), the number of half-steps between them is given by the equation:

$$S = \frac{12 \cdot \log\left(\dfrac{Upper \quad Frequency}{Lower \quad Frequency}\right)}{Log\,(2)}$$

Thus, the various frequencies within a particular sound can be thought of in terms of a musical scale by calculating the distance between each component frequency and the fundamental frequency in terms of half-steps. This notion is important because it has been found that for any given sound, the distance (i.e. the number of half-steps) between the fundamental frequency and the other component frequencies of the sound are very similar for all speakers -- men, women and children.

The Calculate Harmonic Formant Standards function makes use of this phenomena by building a "standard" musical table for all sounds. Specifically, this table includes the relative location of each of the sound's frequency components in terms of their distance from a fundamental frequency, wherein the distance is designated as a number of half-steps. This is done for each phoneme sound. This standard musical table is derived from the signal characteristics that are present in each sound type (phoneme), which are obtained via sample data taken from a cross-section of speakers.

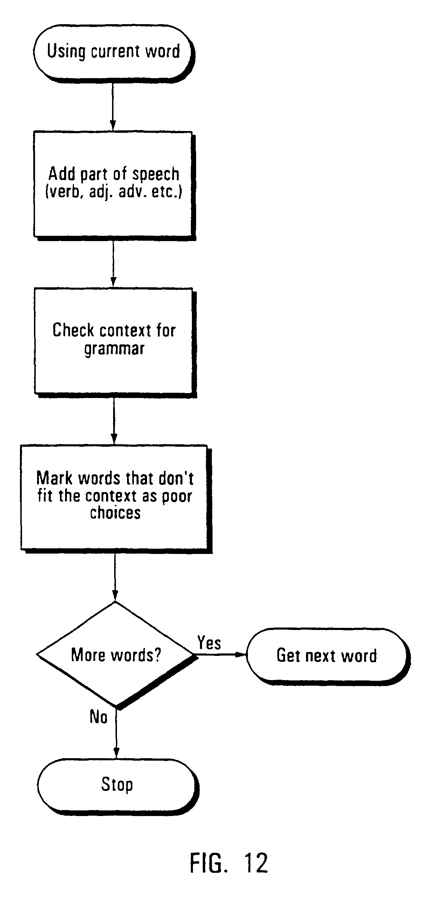

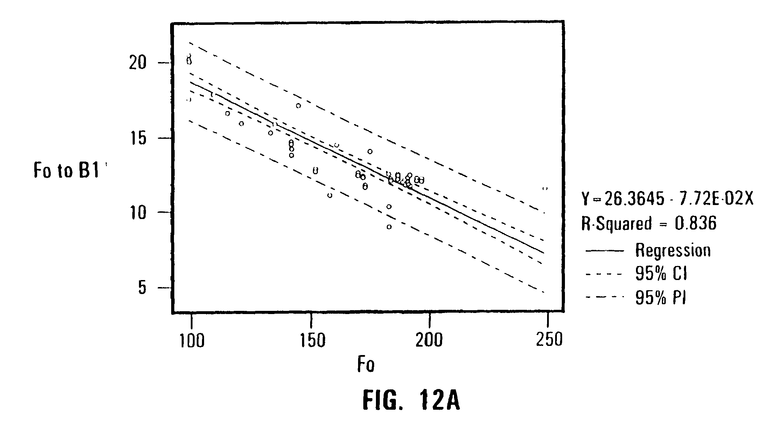

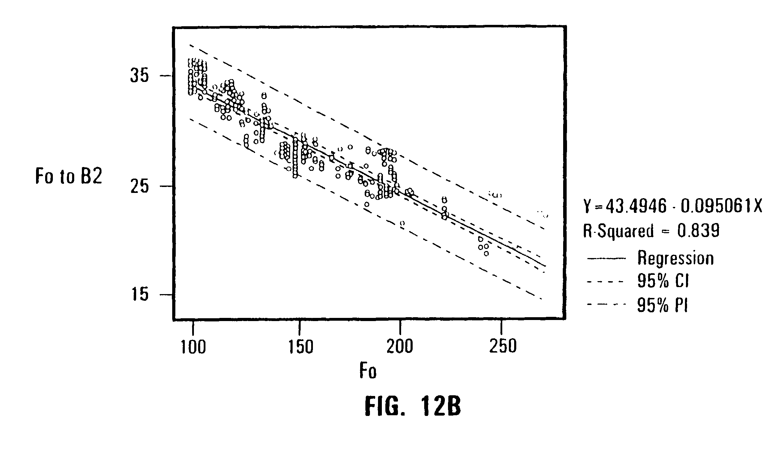

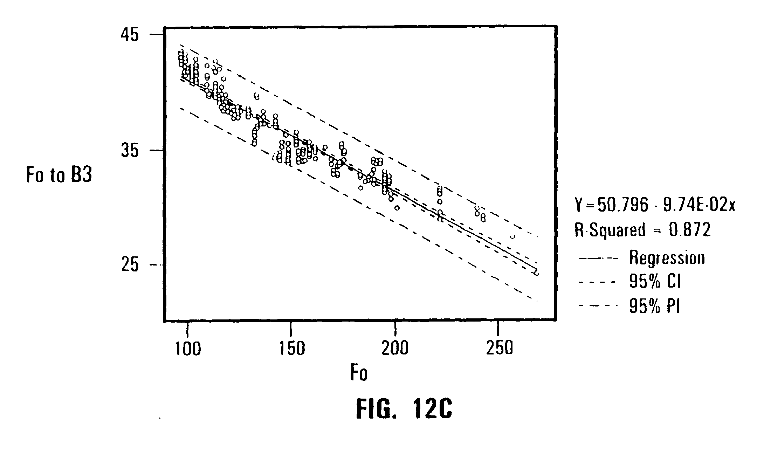

Specifically, voice samples were taken from a representative group of speakers whose fundamental frequencies cover a range of about 70 Hz to about 350 Hz. The voice samples are specifically chosen so that they include all of the forty or so phoneme sounds that make up the English language. Next, the time domain signal for each phoneme sound is evaluated, and all of the frequency components are extracted in the manner previously described in the Decompose function using the same frequency bands. Similarly, the amplitudes for each frequency component are also measured. From this data, the number of half steps between the particular phoneme sound's fundamental frequency and each of the sound's component frequencies is determined. This is done for all phoneme sound types. A separate x-y plot can then be prepared for each of the frequency bands for each sound. Each speaker's sample points are plotted, with the speaker's fundamental frequency (in half-steps) on the x-axis, and the distance between the measured band frequency and the fundamental frequency (in half-steps) on the y-axis. A linear regression is then performed on the resulting data, and a resulting "best fit line" drawn through the data points. An example of such a plot is shown in Figures 12A-12C, which illustrates the representative data points for the sound "Ah" (PASCII sound 024), for the first three frequency bands (shown as B1, B2 and B3).

Graphs of this type are prepared for all of the phoneme sound types, and the slope and the y-intercept equations for each frequency band for each sound are derived. The results are placed in a tabular format, one preferred example of which is shown in TABLE II in Appendix A. As is shown, this table contains a phoneme sound (indicated as a PASCII value) and, for each of the bandpass frequencies, the slope (m) and the y-intercept (b) of the resulting linear regression line. Also included in the table is the mean of the signal amplitudes for all speakers, divided by the corresponding $L_S$ value, at each particular frequency band. Alternatively, the median amplitude value may be used instead.

As can be seen from the graph in Figures 12A-12C, the data points for each of the speakers in the test group are tightly grouped about the regression line, regardless of the speaker's fundamental frequency. This same pattern exists for most all other sounds as well. Further, the pattern extends to speakers other than those used to generate the sample data. In fact, if the fundamental frequency and the frequency band locations (in half-steps) are known for any given sound generated by any given user, the corresponding sound type (phoneme) can be determined by comparison to these standard values.

The Calculate Harmonic Formant Standards function utilizes this standard sound equations data (TABLE II) to build a representative musical table containing the standard half-step distances for each sound. Importantly, it builds this standards table so that it is correlated to a specific fundamental frequency, and specifically, it uses the fundamental frequency of the time slice currently being evaluated. The function also builds a musical table for the current time slice's measured data (i.e., the Higgins structure $f_o$ and ffreq data). The time slice "measured" data is then compared to the sound "standard" data, and the closest match indicates the likely sound type (phoneme). Since what is being compared is essentially the relative half-step distances between the various frequency components and the fundamental frequency -- which for any given sound are consistent for every speaker -- the technique insures that the sound is recognized independently of the particular speaker.

One example of the detailed program steps used to accomplish the "Calculate Harmonic Formant Standards" function is shown in Figure 8A, to which reference is now made. Beginning at program step 280, the Higgins structure for the current time slice is received. Step 282 then converts that time slice into a musical scale. This is done by calculating the number half-steps each frequency component (identified in the "Decompose" function and stored in the ffreq array) is located from the fundamental frequency. These distances are calculated with the following equation:

$$S_N = \frac{12 \cdot \log\left(\frac{f_N}{f_0}\right)}{60(\log(2))}$$

where N = 1 through 15, corresponding to each of the different frequencies calculated in the Decompose function and stored in the ffreq array for this time slice, and $f_O$ = the fundamental frequency for this time slice, also stored in the Higgins data structure. The value 60 is used to normalize the number of half-steps to an approximate maximum number of half-steps that occur.
The results of the calculation are stored by the host processor 54 as an array in the host processor data memory 60.

Having converted the time slice to the musical scale, the processor 54 next enters a loop to begin building the corresponding sound standards table, so it too is represented in the musical scale. Again, this is accomplished with the standard equations data (TABLE II), which is also stored as an array in host data memory 60.

Beginning at step 284, the host processor 54 obtains the standard equations data for a sound, and queries whether the current time slice contains a voiced sound. If not, the processor 54 proceeds to program step 290, where it calculates the number of half steps each frequency component (for each of the frequency bands previously identified) is located from the fundamental frequency. The new "standards" are calculated relative to the fundamental frequency of the current time slice. The formula used to calculate these distance is:

$$S_{NST} = \frac{-m \cdot f_0 + b}{60}$$

where m = the slope of the standard equation line previously identified; b = the y-intercept of the standard equation line previously identified; $f_O$ = fundamental frequency of the current time slice ; and the value 60 is used to normalize the number of half-steps to an approximate maximum number of half-steps that occur.

This calculation is completed for all 15 of the frequency bands. Note that unvoiced sounds do not have a "fundamental" frequency stored in the data structure's $f_O$ variable. For purposes of program step 290, the frequency value identified in the first frequency band (i.e. contained in the first location of the ffreq array) is used as a "fundamental."

If at step 284 it is determined that the current time slice is voiced, the host sound processor 54 proceeds to program step 286 and queries whether the current standard sound is a fricative. If it is a fricative sound, then the processor 54 proceeds to step 290 to calculate the standards for all of the frequency bands (one through fifteen) in the manner described above.

If the current sound is not a fricative, the host processor 54 proceeds to step 288. At that step, the standards are calculated in the same manner as step 290, but only for the frequency bands 1 through 11.

After the completion of program step 288 or step 290, the processor 54 proceeds to step 292, where it queries whether the final standard sound in the table has been processed for this time slice. If not, the next sound and its associated slope and intercept data are obtained, and the loop beginning at step 284 is re-executed. If no sounds remain, then the new table of standard values, expressed in terms of the musical scale, is complete for the current time slice (which has also been converted to the musical scale). The host processor 54 exits the routine at step 294, and returns to the Evaluate function at step 244 in Figure 8.

Referring again to that figure, the host processor 54 next executes program step 250 to query whether the current time slice is voiced. If not, the processor 54 executes program step 246, which executes a function referred to as "Multivariate Pattern Recognition." This function merely compares "standard" sound data with "measured" time slice data, and evaluates how closely the two sets of data correspond. In the preferred embodiment, the function is used to compare the frequency (expressed in half steps) and amplitude components of each of the standard sounds to the frequency (also expressed in half-steps) and amplitude components of the current time slice. A close match indicates that the time slice contains that particular sound (phoneme).

One example of the currently preferred set of program steps used to implement the "Multivariate Pattern Recognition" function is shown in the program flow chart of Figure 8B, to which reference is now made. Beginning at step 260, an array containing the standard sound frequency component locations and their respective amplitudes, and an array containing the current time slice frequency component locations and their respective amplitudes, are received. Note that the frequency locations are expressed in terms of half-step distances from a fundamental frequency, calculated in the "Calculate Harmonic Formant Standards" function. The standard amplitude values are obtained from the test data previously described, examples of which are shown in TABLE II, and the amplitude components for each time slice are contained in the Higgins structure "amplitude" array, as previously described.

At step 262, the first sound standard contained in the standards array is compared to the corresponding time slice data. Specifically, each time slice frequency and amplitude "data point" is compared to each of the current sound standard frequency and amplitude "data points." The data points that match the closest are then determined.

Next, at program step 264, for the data points that match most closely, the Euclidean distance between the time slice data and the corresponding standard data is calculated. The Euclidean distance (ED) is calculated with the following equation:

$$ED = \sqrt{\sum_{i=1}^{i=n} \left[ \left( \frac{standard(f_i) - measured(f_i)}{measured(f_i)} \right)^2 + \left( \frac{standard(a_i) - measured(a_i)}{measured(a_i)} \right)^2 \right]}$$

Where n = the number of data points compared; "f" indicates frequency; and "a" indicates amplitude.

At program step 266, this distance is compared to the distances found for other sound standards. If it is one of the five smallest found thus far, the corresponding standard sound is saved in the Higgins structure in the POSSIBLE PHONEMES array at step 268. The processor then proceeds to step 270 to check if this was the last sound standard within the array and, if not, the next standard is obtained at program step 272. The same comparison loop is then performed for the next standard sound. If at step 266 it is found that the calculated Euclidean distance is not one of the five smallest distances already found, then the processor 54 discards that sound as a possibility, and proceeds to step 270 to check if this was the final standard sound within the array. If not, the next sound standard is obtained at program step 272, and the comparison loop is re-executed.

This loop continues to compare the current time slice data to standard sound data until it is determined at step 270 that there are no remaining sound standards for this particular time slice. At that point, step 274 is performed, where each of the sound possibilities previously identified (up to five) are prioritized in descending order of probability. The prioritization is based on the following equation:

$$Probability = \frac{\left( \frac{SM - ED}{SM} \right)}{NUMBER \ of \ values - 1}$$

where ED = Euclidean Distance calculated for this sound; SM = the sum of all EDs of identified sound possibilities.

The higher the probability value, the more likely that the corresponding sound is the sound contained within the time slice. Once the probabilities for each possible sound have been determined, the processor 54 proceeds to step 276, and returns to the calling routine Evaluate at step 246 in Figure 8. The Higgins structure now contains an array of the most probable phonemes (up to five) corresponding to this particular time slice. Host Processor 54 then performs step 248 to determine if there is another time slice to evaluate. If there is, the processor 54 reenters the loop at step 242 to obtain the next time slice and continue processing. If no time slices remain, the processor 54 executes step 260 and returns to the main calling routine in Figure 4.

If at step 250, it was instead determined that the current time slice contained a voiced sound, then the host sound processor 54 proceeds to program step 252. At this step, the host processor 54 determines whether the sound carried in the time slice is a voiced fricative, or if it is another type of voiced sound. This determination is made by inspecting the Relative Amplitude (RA) value and the frequency values contained in the ffreq array. IfRA is relatively low, which in the preferred embodiment is any value less than about 65, and if there are any frequency components that are relatively high, which in the preferred embodiment is any frequency above about 6 kHz, then the sound is deemed a voiced fricative, and host 54 proceeds to program step 254. Otherwise, 54 proceeds to program step 256.

Program steps 254 and 256 both invoke the "Multivariate Pattern Recognition" routine, and both return a Higgins structure containing up to five possible sounds, as previously described. After completing program step 254, the host processor 54 will get the next time slice, as is indicated at step 248.

However, when program step 258 is completed, the host processor 54 will execute program step 258, which corresponds to a function referred to as "Adjust for Relative Amplitude." This function assigns new probability levels to each of the possible sounds previously identified by the "Multivariate Pattern Recognition" routine and stored in the Higgins data structure. This adjustment in probability is based on yet another comparison between the time slice data and standard sound data. One example of the presently preferred program steps needed to implement this function is shown in Figure 8C, to which reference is now made.

Beginning at program step 300, the relative amplitude (RA) for the time slice is calculated using the following formula:

$$RA = \frac{L_s}{MaxAmpl}$$

where $L_S$ is the absolute average of the amplitude for this time slice stored in the Higgins Structure; and MaxAmpl is the "moving average" over the previous 2 seconds of the maximum $L_S$ for each time segment (10,240 data points) of data.

The host processor 54 then proceeds to program step 304 and calculates the difference between the standard relative amplitude calculated in step 300, and the standard relative amplitude for each of the probable sounds contained in the Higgins data structure. The standard amplitude data is comprised of average amplitudes obtained from a representative cross-sample of speakers, an example of which is shown in TABLE III in the appendix.

Next, at program step 306 the differences are ranked, with the smallest difference having the largest rank, and the largest difference having the smallest rank of one. Proceeding next to program step 308, new probability values for each of the probable sounds are calculated by averaging the previous confidence level with the new percent rank calculated in step 306. At program step 310, the probable sounds are then re-sorted, from most probable to least probable, based on the new confidence values calculated in step 308. At step 312, the host processor 54 returns to the calling routine "Evaluate" at program step 258 in Figure 8.

Referring again to Figure 8 having completed the Adjust for Relative Amplitude routine, the host sound processor proceeds to program step 248 and determines whether another time slice remains. If so, the processor 54 reenters the loop at step 242, and processes a new time slice in the same manner as described above. If not, the processor 54 executes step 260 and returns to the main calling routine in Figure 4.

The next step performed by the sound recognition host processor 54 is shown at block 110 in Figure 4 and is referred to as the "Compress Phones" function. As already discussed, this function discards those time slices in the current time segment that are not designated "points of maximum intelligence." In addition, it combines any contiguous time slices that represent "quiet" sounds. By eliminating the unnecessary time slices, all that remains are the time slices (and associated Higgins structure data) needed to identify the phonemes contained within the current time segment. This step further reduces overall processing requirements and insures that the system is capable of performing sound recognition in substantially real time.

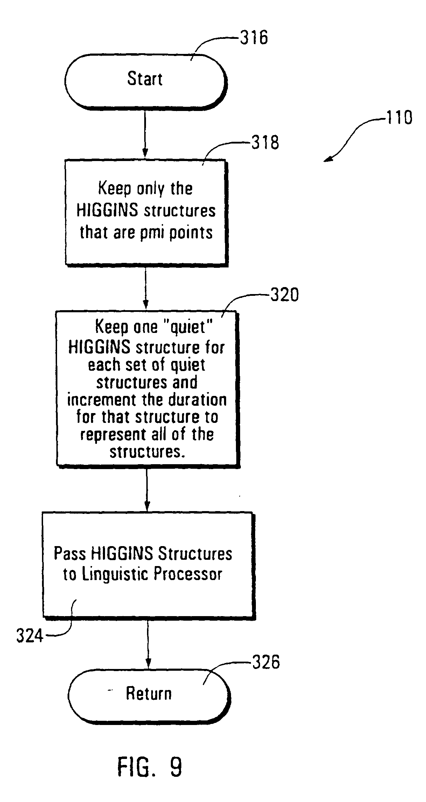

One presently preferred example of the detailed program steps used to implement the "Compress Phones" function is shown in Figure 9, to which reference is now made. Beginning at program step 316, the host sound processor 54 receives the existing sequence of time slices and the associated Higgins data structures. At program step 318, processor 54 eliminates all Higgins structures that do not contain PMI points. Next, at program step 320 the processor 54 identifies contiguous data structures containing "quiet" sections, and reduces those contiguous sections into a single representative data structure. The PMI duration value in that single data structure is incremented so as to represent all of the contiguous "quiet" structures that were combined.

At this point, there exists in the host processor data memory 60 a continuous stream of Higgins data structures, each of which contains sound characteristic data and the possible phoneme(s) associated therewith All unnecessary, irrelevant and/or redundant aspects of the time segment have been discarded so that the remaining data stream represents the "essence" of the incoming speech signal. Importantly, these essential characteristics have been culled from the speech signal in a manner that is not dependent on any one particular speaker. Further, they have been extracted in a manner such that the speech signal can be processed in substantially real time -- that is, the input can be received and processed at normal rate of speech.

Having reduced the Higgins structure data, the Compress Phones function causes the sound recognition host processor 54 to place that data in host data memory 60 in program step 324. Proceeding next to program step 326, the host sound processor 54 returns to the main portion of the program method in Figure 4.

As is shown in that figure, the next portion of the program method corresponds to the function referred to as the "Linguistic Processor." The Linguistic Processor is that portion of the method which further analyzes the Higgins structure data and, by applying a series of higher level linguistic processing techniques, identifies the word or phrase that is contained within the current time segment portion of the incoming speech signal.

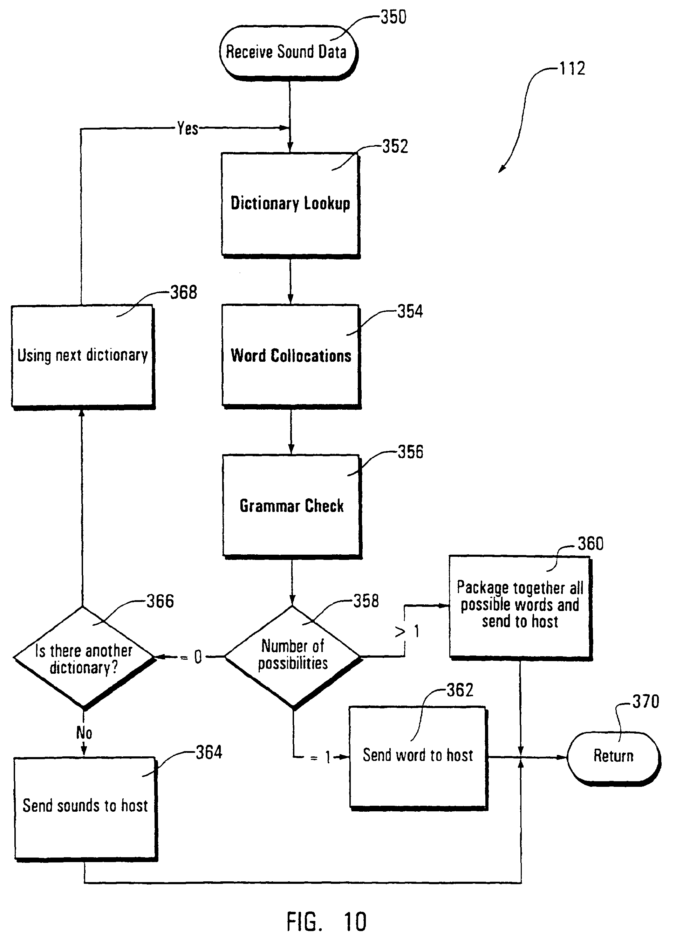

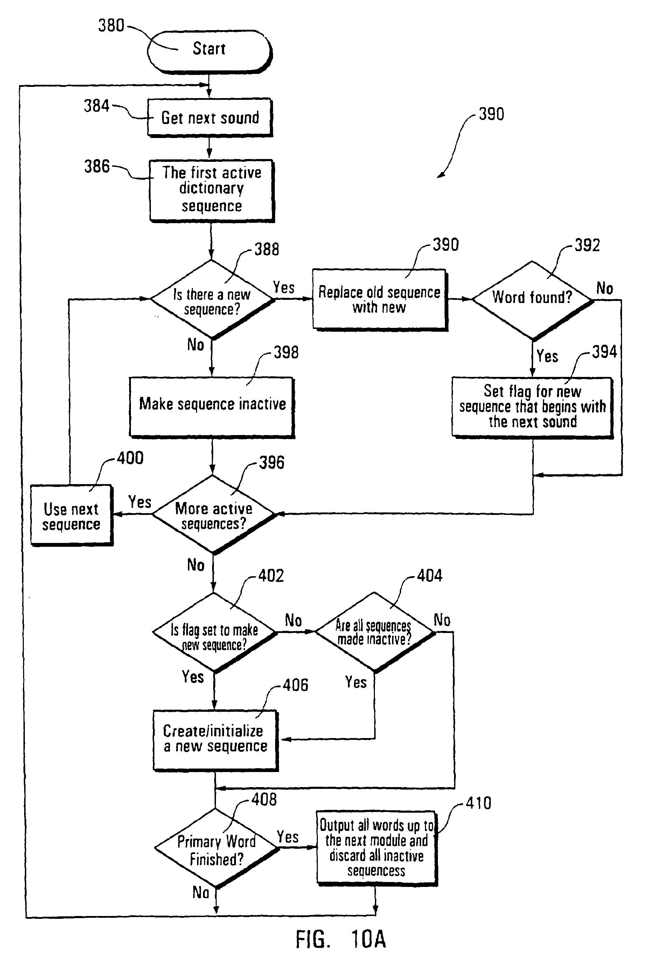

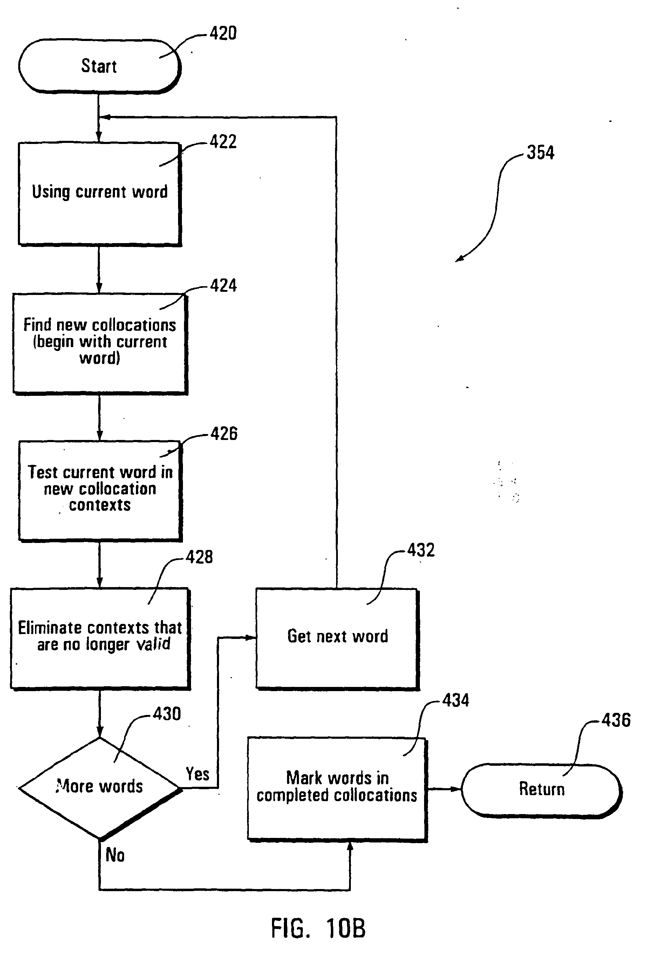

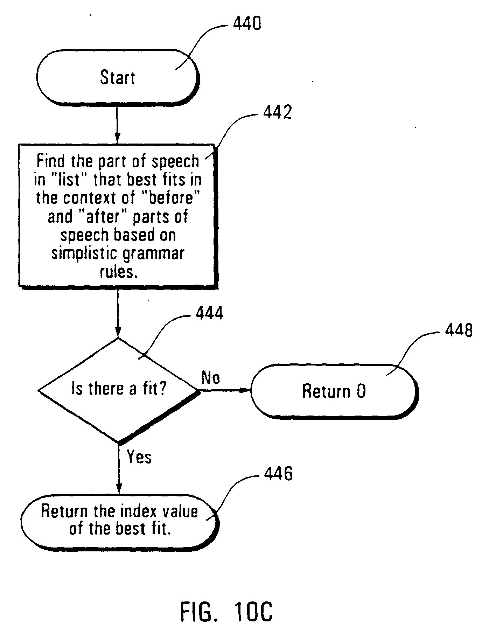

Although alternative linguistic processing techniques and approaches could be used, one presently preferred set of program steps used to implement the Linguistic Processor is shown in the flow chart of Figure 10. Beginning at program step 350 of that function, the host sound processor 54 receives the set of Higgins structure data created by the previously executed Compress Phones function. As already discussed, this data represents a stream of the possible phonemes contained in the current time segment portion of the incoming speech signal. At program step 352, the processor 54 passes this data to a function referred to as "Dictionary Lookup."

In one alternative, the Dictionary Lookup function utilizes a phonetic-English dictionary that contains the English spelling of a word along with its corresponding phonetic representation. The dictionary can thus be used to identify the English word that corresponds to a particular stream of phonemes. The dictionary is stored in a suitable database structured format, and is placed within the dictionary portion of computer memory 62. The phonetic dictionary can be logically separated into several separate dictionaries. For instance, in the preferred embodiment, the first dictionary contains a database of the most commonly used English words. Another dictionary may include a database that contains a more comprehensive Webster-like collection of words. Other dictionaries may be comprised of more specialized words, and may vary depending on the particular application. For instance, there may be a user defined dictionary, a medical dictionary, a legal dictionary, and so on.

All languages can be described in terms of a particular set of phonetic sounds. Thus, it will be appreciated that although the preferred embodiment utilizes an English word dictionary, any other phonetic to non-English language dictionary could be used.

Basically, Dictionary Lookup scans the appropriate dictionary to determine if the incoming sequence of sounds (as identified by the Higgins data structures) form a complete word, or the beginnings of a possible word. To do so, the sounds are placed into paths or "sequences" to help detect, by way of the phonetic dictionary, the beginning or end of possible words. Thus, as each phoneme sound is received, it is added to the end of a all non-completed "sequences." Each sequence is compared to the contents of the dictionary to determine if it leads to a possible word. When a valid word (or set of possible words) is identified, it is passed to the next functional block within the Linguistic Processor portion of the program for further analysis.

By way of example and not limitation, Figure 10A illustrates one presently preferred set of program steps used to implement the Dictionary Lookup function. The function begins at program step 380, where it receives the current set of Higgins structures corresponding to the current time segment of speech. At program step 384, the host sound processor 54 obtains a phoneme sound (as represented in a Higgins structure) and proceeds to program step 386 where it positions a search pointer within the current dictionary that corresponds to the first active sequence. An "active" sequence is a sequence that could potentially form a word with the addition of a new sound or sounds. In contrast, a sequence is deemed "inactive" when it is determined that there is no possibility of forming a word with the addition of new sounds.

Thus, at program step 386 the new phonetic sound is appended to the first active sequence. At program step 388, the host processor 54 checks, by scanning the current dictionary contents, whether the current sequence either forms a word, or whether it could potentially form a word by appending another sound(s) to it If so, the sequence is updated by appending to it the new phonetic sound at program step 390. Next, at program step 392, the host processor determines whether the current sequence forms a valid word. If it does, a 'new sequence' flag is set at program step 394, which indicates that a new sequence should be formed beginning with the very next sound. If a valid word is not yet formed, the processor 54 skips step 394, and proceeds directly to program step 396.

If at step 388 the host processor 54 instead determines, after scanning the dictionary database, that the current sequence would not ever lead to a valid word, even if additional sounds were appended, then the processor 54 proceeds to program step 398. At this step, this sequence is marked "inactive." The processor 54 then proceeds to program step 396.

At step 396, the processor 54 checks if there are any more active sequences to which the current sound should be appended. If so, the processor 54 will proceed to program step 400 and append the sound to this next active sequence. The processor 54 will then re-execute program step 388, and process this newly formed sequence in the same manner described above.

If at program step 396 it is instead determined that there are no remaining active sequences, then host sound processor 54 proceeds to program step 402. There, the 'new sequence' flag is queried to determine if it was set at program step 394, thereby indicating that the previous sound had created a valid word in combination with an active sequence. If set, the processor will proceed to program step 406 and create a new sequence, and then go to program step 408. If not set, the processor 54 will instead proceed to step 404, where it will determine whether all sequences are now inactive. If they are, processor 54 will proceed immediately to program step 408, and if not, the processor 54 will instead proceed to step 406 where it will open a new sequence before proceeding to program step 408.

At program step 408, the host sound processor 54 evaluates whether a primary word has been completed, by querying whether all of the inactive sequences, and the first active sequence result in a common word break. If yes, the processor 54 will output all of the valid words that have been identified thus far to the main calling routine portion of the Linguistic Processor. The processor 54 will then discard all of the inactive sequences, and proceed to step 384 to obtain the next Higgins structure sound. If at step 408 it is instead determined that a primary word has not yet been finished, the processor 54 will proceed directly to program step 384 to obtain the next Higgins structure sound. Once a new sound is obtained at step 384, the host processor 54 proceeds directly to step 386 and continues the above described process.

As the Dictionary Lookup function extracts words from the Higgins structure data, there may remain certain word possibilities that have not yet been resolved. Thus, the Linguistic Processor may optionally include additional functions which further resolve the remaining word possibilities. One such optional function is referred to as the "Word Collocations" function, shown at block 354 in Figure 10.

Generally, the Word Collocations function monitors the word possibilities that have been identified by the Dictionary Lookup function to see if they form a "common" word collocation. A set of these common word collocations are stored in a separate dictionary database within dictionary memory 64. In this way, certain word possibilities can be eliminated, or at least assigned lower confidence levels, because they do not fit within what is otherwise considered a common word collocation. One example of the program steps used to implement this particular function are shown, by way of example and not limitation, in Figure 10B, to which reference is now made.

Beginning at program step 420, a set of word possibilities are received. Beginning with one of those words at step 422, the host sound processor 54 next proceeds to program step 424 where it obtains any collocation(s) that have been formed by preceding words. The existence of such collocations would be determined by continuously comparing words and phrases to the collocation dictionary contents. If such a collocation or collocations exist, then the current word possibility is tested to see if it fits within the collocation context. At step 428, those collocations which no longer apply are discarded. The processor 54 then proceeds to step 430 to determine if any word possibilities remain, and if so, the remaining word(s) is also tested within the collocation context beginning at program step 422.

Once this process has been applied to all word possibilities, the processor 54 identifies which word, or words, were found to "fit" within the collocation, before returning, via program step 436, to the main Linguistic Processor routine. Based on the results of the Collocation routine, certain of the remaining word possibilities can then be eliminated, or at least assigned a lower confidence level.

Another optional function that can be used to resolve remaining word possibilities is the "Grammar Check" function, shown at block 356 in Figure 10. This function evaluates a word possibility by applying certain grammatical rules, and then determining whether the word complies with those rules. Words that do not grammatically fit can be eliminated as possibilities, or assigned lower confidence levels.

By way of example, the Grammar Check function can be implemented with the program steps that are shown in Figure 10C. Thus, at step 440, a current word possibility along with a preceding word and a following word are received. Then at step 442, a set of grammar rules, stored in a portion of host sound processor memory, are queried to determine what "part of speech" would best fit in the grammatical context of the preceding word and the following word. If the current word possibility matches this "part of speech" at step 444, then that word is assigned a higher confidence level before returning to the Linguistic Processor at step 446. If the current word does not comply with the grammatical "best fit" at step 444, then it is assigned a low confidence level and returned to the main routine at step 446. Again, this confidence level can then be used to further eliminate remaining word possibilities.

Referring again to Figure 10, having completed the various functions which identify the word content of the incoming speech signal, the Linguistic Processor function causes the host sound processor 54 to determine the number of word possibilities that still exist for any given series of Higgins structures.

If no word possibilities have yet been identified, then the processor 54 will determine, at program step 366, if there remains a phonetic dictionary database (i.e., a specialized dictionary, a user defined dictionary, etc.) that has not yet been searched. If so, the processor 54 will obtain the new dictionary at step 368, and then re-execute the searching algorithm beginning at program step 352. If however no dictionaries remain, then the corresponding unidentified series of phoneme sounds (the unidentified "word") will be sent directly to the Command Processor portion of the program method, which resides on Host computer 22.

Ifat program step 358 more than one word possibility still remains, the remaining words are all sent to the Command Processor. Similarly, if only one word possibility remains, that word is sent directly to the Command Processor portion of the algorithm. Having output the word, or possible words, program step 370 causes the host sound processor 54 to return to the main algorithm, shown on Figure 4.

As words are extracted from the incoming speech signal by the Linguistic Processor, they are immediately passed to the next function in the overall program method referred to as the "Command Processor," shown at function block 114 in Figure 4. In the illustrative example, the Command Processor is a series of program steps that are executed by a Host Computer 22, such as a standard desktop personal computer. As already noted, the host computer 22 receives the incoming words by way of a suitable communications medium, such as a standard RS-232 cable 24 and interface 66. The Command Processor then receives each word, and determines the manner by which it should be used on the host computer 22. For example, a spoken word may be input as text directly into an application, such as a wordprocessor document. Conversely, the spoken word may be passed as a command to the operating system or application.

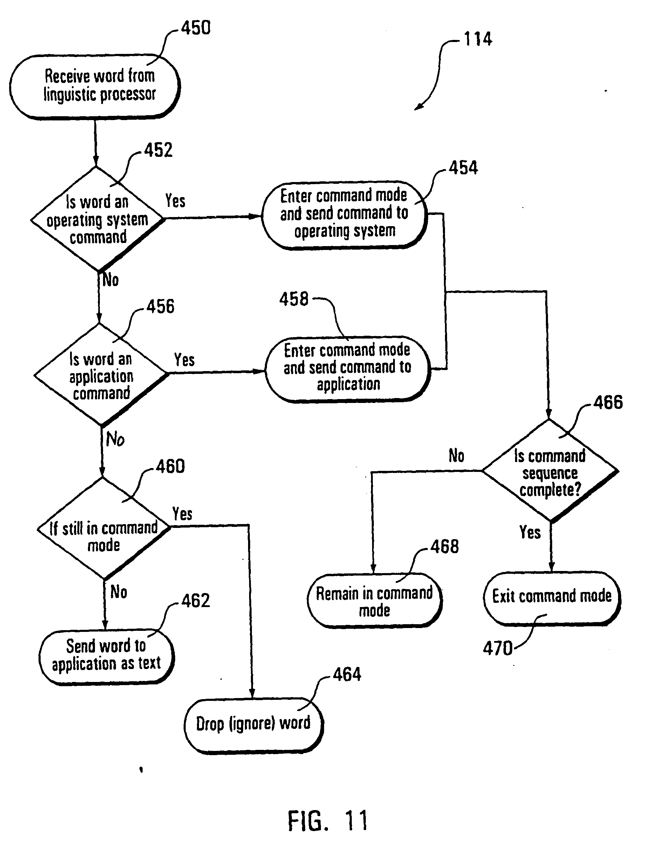

Referring next to Figure 11, illustrated is one example of the program steps used to implement the Command Processor function. To begin, program step 450 causes the host computer 22 to receive a word created by the Linguistic Processor portion of the algorithm. The host computer 22 then determines, at step 452, whether the word received is an operating system command. This is done by comparing the word to the contents of a definition file database, which defines all words that constitute operating system commands. If such a command word is received, it is passed directly to the host computer 22 operating system, as is shown at program step 454.

If the incoming word does not constitute an operating system command, step 456 is executed, where it is determined if the word is instead an application command, as for instance a command to a wordprocessor or spreadsheet. Again, this determination is made by comparing the word to another definition file database, which defines all words that constitute an application command. If the word is an application command word, then it is passed directly, at step 458, to the intended application.

If the incoming word is neither a operating system command, or an application command, then program step 460 is executed, where it is determined whether the Command Processor is still in a "command mode." If so, the word is discarded at step 464, and essentially ignored. However, if the Command Processor is not in a command mode, then the word will be sent directly to the current application as text.

Once a word is passed as a command to either the operating system or application at program steps 454 and 458, the host computer 22 proceeds to program step 466 to determine whether the particular command sequence is yet complete. If not, the algorithm remains in a "command mode," and continues to monitor incoming words so as to pass them as commands directly to the respective operating system or application. If the command sequence is complete at step 466, then the algorithm will exit the command mode at program step 470.

In this way, the Command Processor acts as a front-end to the operating system and/or to the applications that are executing on the host computer 22. As each new word is received, it is selectively directed to the appropriate computer resource. Operating in this manner, the system and method of the current invention act as a means for entering data and/or commands to a standard personal computer. As such, the system essentially replaces, or supplements other computer input devices, such as keyboards and pointing devices.

## III. SUMMARY AND SCOPE OF THE INVENTION

In summary, the system and method of the present invention for speech recognition provides a powerful and much needed tool for providing user independent speech recognition. Importantly, the system and method extracts only the essential components of an incoming speech signal. The system then isolates those components in a manner such that the underlying sound characteristics that are common to all speakers can be identified, and thereby used to accurately identify the phonetic make-up of the speech signal. This permits the system and method to recognize speech utterances from any speaker of a given language, without requiring the user to first "train" the system with specific voice characteristics.

Further, the system and method implements this user independent speech recognition in a manner such that it occurs in substantially "real time." As such, the user can speak at normal conversational speeds, and is not required to pause between each word.

Finally, the system utilizes various linguistic processing techniques to translate the identified phonetic sounds into a corresponding word or phrase, of any given language. Once the phonetic stream is identified, the system is capable of recognizing a large vocabulary of words and phrases.

## APPENDIX A

| SOUND PASCII VALUE | FREQ. BAND# | SLOPE(m) | Y-INTERCEPT(b) | AMPLITUDE |
|---|---|---|---|---|
| 1 | 1 | 23.925 | 0.0639 | 0.73378 |
| 1 | 2 | 43.1006 | 0.116964 | 0.08242 |
| 1 | 3 | 54.5453 | 0.1132 | 0.01025 |
| 1 | 4 | 60.7934 | 0.111916 | 0.01257 |
| 1 | 5 | 62.7092 | 0.0989 | 0.06235 |
| 1 | 6 | 66.9046 | 0.105248 | 0.07415 |
| 1 | 7 | 68.9042 | 0.101159 | 0.098 |
| 1 | 8 | 70.9394 | 0.102078 | 0.05573 |
| 1 | 9 | 73.8657 | 0.103871 | 0.0297 |
| 1 | 10 | 76.6542 | 0.109661 | 0.01606 |
| 1 | 11 | 78.566 | 0.105545 | 0.02196 |
| 1 | 12 | 0 | 0 | 0 |
| 1 | 13 | 0 | 0 | 0 |
| 1 | 14 | 0 | 0 | 0 |
| 1 | 15 | 0 | 0 | 0 |
| 3 | 1 | 31.0818 | 0.0948 | 0.7639 |
| 3 | 2 | 37.6375 | 0.0787 | 0.2279 |
| 3 | 3 | 54.8824 | 0.115936 | 0.02602 |
| 3 | 4 | 59.882 | 0.103487 | 0.05287 |
| 3 | 5 | 61.8428 | 0.097235 | 0.11788 |
| 3 | 6 | 67.4577 | 0.107712 | 0.10825 |
| 3 | 7 | 69.8282 | 0.106478 | 0.04873 |
| 3 | 8 | 71.9363 | 0.104027 | 0.02985 |
| 3 | 9 | 74.1275 | 0.105246 | 0.02271 |
| 3 | 10 | 75.6143 | 0.102906 | 0.00936 |
| 3 | 11 | 79.3344 | 0.106665 | 0.01144 |
| 3 | 12 | 0 | 0 | 0 |
| 3 | 13 | 0 | 0 | 0 |
| 3 | 14 | 0 | 0 | 0 |

| SOUND PASCII VALUE | FREQ. BAND# | SLOPE(m) | Y-INTERCEPT(b) | AMPLITUDE |
|---|---|---|---|---|
| 3 | 15 | 0 | 0 | 0 |
| 7 | 1 | 35.8081 | 0.117513 | 0.7151 |
| 7 | 3 | 55.9232 | 0.122236 | 0.05651 |
| 7 | 4 | 59.2746 | 0.105329 | 0.201 |
| 7 | 5 | 64.3502 | 0.111596 | 0.15908 |
| 7 | 6 | 66.8912 | 0.105726 | 0.10852 |
| 7 | 7 | 70.5895 | 0.110907 | 0.07466 |
| 7 | 8 | 72.3561 | 0.108349 | 0.03763 |
| 7 | 9 | 74.6623 | 0.108032 | 0.02601 |
| 7 | 10 | 76.825 | 0.11056 | 0.0184 |
| 7 | 11 | 79.5416 | 0.110216 | 0.02638 |
| 7 | 12 | 0 | 0 | 0 |
| 7 | 13 | 0 | 0 | 0 |
| 7 | 14 | 0 | 0 | 0 |
| 7 | 15 | 0 | 0 | 0 |
| 24 | 1 | 26.3645 | 0.0772 | 0.5820 |
| 24 | 2 | 43.4946 | 0.095061 | 0.71981 |
| 24 | 3 | 50.796 | 0.0974 | 0.46648 |
| 24 | 4 | 60.6949 | 0.122010 | 0.05332 |
| 24 | 5 | 65.2771 | 0.116403 | 0.03806 |
| 24 | 6 | 66.9481 | 0.106186 | 0.05735 |
| 24 | 7 | 71.0327 | 0.1114422 | 0.03654 |
| 24 | 8 | 72.5388 | 0.108871 | 0.03031 |
| 24 | 9 | 76.0082 | 0.116995 | 0.01378 |
| 24 | 10 | 77.3385 | 0.112669 | 0.017 |
| 24 | 11 | 78.6243 | 0.104959 | 0.01591 |
| 24 | 12 | 0 | 0 | 0 |
| 24 | 13 | 0 | 0 | 0 |
| 24 | 14 | 0 | 0 | 0 |
| 24 | 15 | 0 | 0 | 0 |
| 9 | 1 | 27.3808 | 0.0831 | 0.6873 |
| 9 | 2 | 46.0161 | 0.117744 | 0.6969 |
| 9 | 3 | 57.4503 | 0.132151 | 0.2288 |
| 9 | 4 | 59.863 | 0.113996 | 0.3164 |
| 9 | 5 | 67.1216 | 0.130564 | 0.16726 |
| 9 | 6 | 68.5702 | 0.119973 | 0.10475 |
| 9 | 7 | 72.1892 | 0.122477 | 0.04561 |

21

EP 0 886 854 B1

| SOUND PASCII VALUE | FREQ. BAND# | SLOPE (m) | Y-INTERCEPT (b) | AMPLITUDE |
|---|---|---|---|---|
| 9 | 8 | 73.8496 | 0.11908 | 0.04229 |
| 9 | 9 | 77.1308 | 0.125179 | 0.02519 |
| 9 | 10 | 78.0586 | 0.118421 | 0.02961 |
| 9 | 11 | 81.6235 | 0.125473 | 0.02507 |
| 9 | 12 | 0 | 0 | 0 |
| 9 | 13 | 0 | 0 | 0 |
| 9 | 14 | 0 | 0 | 0 |
| 9 | 15 | 0 | 0 | 0 |
| 14 | 1 | 29.9976 | 0.0967 | 0.6035 |
| 14 | 2 | 40.7298 | 0.0901 | 0.73174 |
| 14 | 3 | 55.0417 | 0.117045 | 0.24344 |
| 14 | 4 | 58.4921 | 0.107211 | 0.10904 |
| 14 | 5 | 65.8377 | 0.119586 | 0.04517 |
| 14 | 6 | 65.9093 | 0.100399 | 0.05183 |
| 14 | 7 | 70.9514 | 0.113684 | 0.03564 |
| 14 | 8 | 72.519 | 0.107896 | 0.02398 |
| 14 | 9 | 75.3182 | 0.113199 | 0.01906 |
| 14 | 10 | 76.5463 | 0.108146 | 0.01425 |
| 14 | 11 | 79.4491 | 0.109836 | 0.01929 |
| 14 | 12 | 0 | 0 | 0 |
| 14 | 13 | 0 | 0 | 0 |
| 14 | 14 | 0 | 0 | 0 |
| 14 | 15 | 0 | 0 | 0 |
| 17 | 1 | 26.9756 | 0.076984 | 0.84656 |
| 17 | 2 | 51.8834 | 0.148419 | 0.1327 |
| 17 | 3 | 50.9061 | 0.0955 | 0.06494 |
| 17 | 4 | 60.211 | 0.111777 | 0.01722 |
| 17 | 5 | 63.4817 | 0.10496 | 0.01704 |
| 17 | 6 | 67.1155 | 0.106036 | 0.01187 |
| 17 | 7 | 70.9826 | 0.112958 | 0.0102 |
| 17 | 8 | 71.1014 | 0.0997 | 0.00844 |
| 17 | 9 | 74.2932 | 0.106116 | 0.00498 |
| 17 | 10 | 76.5634 | 0.107109 | 0.0043 |
| 17 | 11 | 80.2467 | 0.0114159 | 0.00328 |
| 17 | 12 | 0 | 0 | 0 |
| 17 | 13 | 0 | 0 | 0 |
| 17 | 14 | 0 | 0 | 0 |

22

# EP 0 886 854 B1

| SOUND PASCII VALUE | FREQ. BAND# | SLOPE (m) | Y-INTERCEPT (b) | AMPLITUDE |
|---|---|---|---|---|
| 17 | 15 | 0 | 0 | 0 |
| 21 | 1 | 35.6987 | 0.118874 | 0.8169 |
| 21 | 2 | 42.9284 | 0.104448 | 0.6282 |
| 21 | 3 | 51.6091 | 0.106709 | 0.09954 |
| 21 | 4 | 59.6202 | 0.108802 | 0.01004 |
| 21 | 5 | 64.0317 | 0.107957 | 0.01519 |
| 21 | 6 | 66.9097 | 0.10484 | 0.01394 |
| 21 | 7 | 70.2666 | 0.107929 | 0.01664 |
| 21 | 8 | 71.7338 | 0.102196 | 0.01172 |
| 21 | 9 | 75.2727 | 0.1112 | 0.0042 |
| 21 | 10 | 76.7847 | 0.107923 | 0.00334 |
| 21 | 11 | 79.5333 | 0.109177 | 0.0076 |
| 21 | 12 | 0 | 0 | 0 |
| 21 | 13 | 0 | 0 | 0 |
| 21 | 14 | 0 | 0 | 0 |
| 21 | 15 | 0 | 0 | 0 |
| 26 | 1 | 94.161 | 0.346415 | 0.4687 |
| 26 | 2 | 28.8099 | 0.0448 | 0.8466 |
| 26 | 3 | 55.6297 | 0.107713 | 0.09751 |
| 26 | 4 | 40.9908 | 0.025 | 0.14443 |
| 26 | 5 | 63.7703 | 0.103867 | 0.08847 |
| 26 | 6 | 56.7514 | 0.0615 | 0.02578 |
| 26 | 7 | 64.7022 | 0.0792 | 0.02344 |
| 26 | 8 | 97.9576 | 0.22901 | 0.01238 |
| 26 | 9 | 66.7865 | 0.0708 | 0.00421 |
| 26 | 10 | 72.7685 | 0.087492 | 0.00633 |
| 26 | 11 | 74.6368 | 0.0865 | 0.00621 |
| 26 | 12 | 0 | 0 | 0 |
| 26 | 13 | 0 | 0 | 0 |
| 26 | 14 | 0 | 0 | 0 |
| 26 | 15 | 0 | 0 | 0 |
| 29 | 1 | 37.5589 | 0.13441 | 0.7303 |
| 29 | 2 | 29.1422 | 0.0426 | 0.6409 |
| 29 | 3 | 55.5325 | 0.11215 | 0.1421 |
| 29 | 4 | 56.7644 | 0.095904 | 0.18553 |
| 29 | 5 | 62.0948 | 0.103664 | 0.04655 |
| 29 | 6 | 66.5342 | 0.104793 | 0.01132 |

23

| SOUND PASCII VALUE | FREQ. BAND# | SLOPE(m) | Y-INTERCEPT(b) | AMPLITUDE |
|---|---|---|---|---|
| 29 | 7 | 68.3164 | 0.0982 | 0.0095 |
| 29 | 8 | 71.9616 | 0.104908 | 0.01173 |
| 29 | 9 | 73.2931 | 0.100259 | 0.00455 |
| 29 | 10 | 75.6625 | 0.102199 | 0.00503 |
| 29 | 11 | 77.4381 | 0.0989 | 0.00525 |
| 29 | 12 | 0 | 0 | 0 |
| 29 | 13 | 0 | 0 | 0 |
| 29 | 14 | 0 | 0 | 0 |
| 29 | 15 | 0 | 0 | 0 |
| 31 | 1 | 24.0535 | 0.065356 | 0.59022 |
| 31 | 2 | 46.3754 | 0.123127 | 0.06093 |
| 31 | 3 | 50.9352 | 0.091369 | 0.04107 |
| 31 | 4 | 56.8214 | 0.0948 | 0.02801 |
| 31 | 5 | 60.8415 | 0.089737 | 0.0319 |
| 31 | 6 | 63.9034 | 0.0906 | 0.02579 |
| 31 | 7 | 66.7104 | 0.0894 | 0.01022 |
| 31 | 8 | 69.1107 | 0.0879 | 0.00956 |
| 31 | 9 | 71.9378 | 0.094015 | 0.00827 |
| 31 | 10 | 73.6224 | 0.0913 | 0.00389 |
| 31 | 11 | 77.2013 | 0.0941 | 0.00562 |
| 31 | 12 | 0 | 0 | 0 |
| 31 | 13 | 0 | 0 | 0 |
| 31 | 14 | 0 | 0 | 0 |
| 31 | 15 | 0 | 0 | 0 |
| 33 | 1 | 36.1683 | 0.136196 | 0.6386 |
| 33 | 2 | 40.7677 | 0.0997 | 0.08579 |
| 33 | 3 | 51.0809 | 0.0938 | 0.01947 |
| 33 | 4 | 57.2837 | 0.0961 | 0.02064 |
| 33 | 5 | 61.365 | 0.0925 | 0.02314 |
| 33 | 6 | 64.1689 | 0.0924 | 0.01728 |
| 33 | 7 | 67.4613 | 0.0944 | 0.00754 |
| 33 | 8 | 66.918 | 0.0806 | 0.00404 |
| 33 | 9 | 72.5547 | 0.0951 | 0.00525 |
| 33 | 10 | 74.3771 | 0.095119 | 0.00264 |
| 33 | 11 | 77.5436 | 0.0966 | 0.003 |
| 33 | 12 | 0 | 0 | 0 |
| 33 | 13 | 0 | 0 | 0 |

24

| SOUND PASCII VALUE | FREQ. BAND# | SLOPE (m) | Y-INTERCEPT (b) | AMPLITUDE |
|---|---|---|---|---|
| 33 | 14 | 0 | 0 | 0 |
| 33 | 15 | 0 | 0 | 0 |
| 36 | 1 | 25.128 | 0.0677 | 0.6428 |
| 36 | 2 | 42.9834 | 0.110396 | 0.11144 |
| 36 | 3 | 50.5331 | 0.0918 | 0.04302 |
| 36 | 4 | 57.1574 | 0.0935 | 0.0187 |
| 36 | 5 | 60.3679 | 0.0872 | 0.03721 |
| 36 | 6 | 64.1232 | 0.0916 | 0.03611 |
| 36 | 7 | 67.7702 | 0.0953 | 0.01658 |
| 36 | 8 | 69.967 | 0.0934 | 0.013 |
| 36 | 9 | 71.8082 | 0.0916 | 0.00673 |
| 36 | 10 | 74.66 | 0.0975 | 0.00614 |
| 36 | 11 | 77.0475 | 0.0955 | 0.00722 |
| 36 | 12 | 0 | 0 | 0 |
| 36 | 13 | 0 | 0 | 0 |
| 36 | 14 | 0 | 0 | 0 |
| 36 | 15 | 0 | 0 | 0 |
| 90 | 1 | 34.559 | 0.117681 | 0.8455 |
| 90 | 2 | 45.7616 | 0.123735 | 0.6897 |
| 90 | 3 | 52.5577 | 0.110983 | 0.04924 |
| 90 | 4 | 60.4452 | 0.116582 | 0.0076 |
| 90 | 5 | 65.0779 | 0.113763 | 0.00872 |
| 90 | 6 | 66.9828 | 0.107816 | 0.0152 |
| 90 | 7 | 70.2725 | 0.108867 | 0.01178 |
| 90 | 8 | 72.0092 | 0.106249 | 0.01369 |
| 90 | 9 | 75.4537 | 0.113103 | 0.00705 |
| 90 | 10 | 76.8398 | 0.110225 | 0.00562 |
| 90 | 11 | 79.5101 | 0.110944 | 0.00961 |
| 90 | 12 | 0 | 0 | 0 |
| 90 | 13 | 0 | 0 | 0 |
| 90 | 14 | 0 | 0 | 0 |
| 90 | 15 | 0 | 0 | 0 |
| 94 | 1 | 33.01 | 0.10304 | 0.9353 |
| 94 | 2 | 19.5992 | 0.0222 | 0.6894 |
| 94 | 3 | 54.2337 | 0.102615 | 0.14631 |
| 94 | 4 | 58.7361 | 0.106557 | 0.12756 |
| 94 | 5 | 62.8617 | 0.106312 | 0.02257 |

| SOUND PASCII VALUE | FREQ. BAND# | SLOPE (m) | Y-INTERCEPT (b) | AMPLITUDE |
|---|---|---|---|---|
| 94 | 6 | 69.182 | 0.120343 | 0.02135 |
| 94 | 7 | 70.1864 | 0.108033 | 0.00881 |
| 94 | 8 | 71.856 | 0.105312 | 0.00561 |
| 94 | 9 | 75.8229 | 0.114387 | 0.00194 |
| 94 | 10 | 76.1835 | 0.10575 | 0.00151 |
| 94 | 11 | 79.8682 | 0.110951 | 0.00182 |
| 94 | 12 | 0 | 0 | 0 |
| 94 | 13 | 0 | 0 | 0 |
| 94 | 14 | 0 | 0 | 0 |
| 94 | 15 | 0 | 0 | 0 |
| 58 | 1 | 30.5155 | 0.104315 | 0.5317 |
| 58 | 2 | 41.1473 | 0.098 | 0.0945 |
| 58 | 3 | 52.6775 | 0.101027 | 0.05875 |
| 58 | 4 | 57.3355 | 0.0976 | 0.04413 |
| 58 | 5 | 61.881 | 0.0968 | 0.03921 |
| 58 | 6 | 65.1193 | 0.0969 | 0.03265 |
| 58 | 7 | 68.0574 | 0.0971 | 0.02773 |
| 58 | 8 | 69.5643 | 0.092299 | 0.02098 |
| 58 | 9 | 72.7544 | 0.0979 | 0.01637 |
| 58 | 10 | 74.551 | 0.096685 | 0.01433 |
| 58 | 11 | 77.332 | 0.098928 | 0.01997 |
| 58 | 12 | 79.5717 | 0.095093 | 0.01385 |
| 58 | 13 | 82.1972 | 0.0959 | 0.01263 |
| 58 | 14 | 84.515 | 0.0962 | 0.01425 |
| 58 | 15 | 86.3601 | 0.0958 | 0.01486 |
| 60 | 1 | 29.8209 | 0.097751 | 0.5843 |
| 60 | 2 | 45.0992 | 0.117747 | 0.08934 |
| 60 | 3 | 54.3205 | 0.10593 | 0.08591 |
| 60 | 4 | 58.4529 | 0.10563 | 0.05837 |
| 60 | 5 | 64.9092 | 0.112361 | 0.04366 |
| 60 | 6 | 66.8778 | 0.107116 | 0.0514 |
| 60 | 7 | 71.3666 | 0.115105 | 0.03134 |
| 60 | 8 | 72.4539 | 0.107843 | 0.02406 |
| 60 | 9 | 74.8978 | 0.10941 | 0.01706 |
| 60 | 10 | 77.1449 | 0.110471 | 0.01527 |
| 60 | 11 | 79.5827 | 0.110523 | 0.02061 |
| 60 | 12 | 82.3536 | 0.110665 | 0.01226 |

| SOUND PASCII VALUE | FREQ. BAND# | SLOPE(m) | Y-INTERCEPT(b) | AMPLITUDE |
|---|---|---|---|---|
| 60 | 13 | 84.722 | 0.108912 | 0.01252 |
| 60 | 14 | 86.9515 | 0.109566 | 0.01057 |
| 60 | 15 | 88.7968 | 0.10925 | 0.01331 |
| 62 | 1 | 30.3312 | 0.109582 | 0.566 |
| 62 | 2 | 39.1704 | 0.0809 | 0.05756 |
| 62 | 3 | 55.2685 | 0.113607 | 0.04723 |
| 62 | 4 | 58.3998 | 0.105309 | 0.02906 |
| 62 | 5 | 65.0247 | 0.113936 | 0.02563 |
| 62 | 6 | 66.6728 | 0.105247 | 0.02394 |
| 62 | 7 | 70.1915 | 0.108396 | 0.0195 |
| 62 | 8 | 72.2755 | 0.106131 | 0.02091 |
| 62 | 9 | 74.8135 | 0.10855 | 0.03041 |
| 62 | 10 | 76.3984 | 0.106234 | 0.03623 |
| 62 | 11 | 78.4797 | 0.103104 | 0.08269 |
| 62 | 12 | 81.142 | 0.104107 | 0.05008 |
| 62 | 13 | 84.3696 | 0.107884 | 0.03896 |
| 62 | 14 | 85.96 | 0.10425 | 0.03301 |
| 62 | 15 | 88.0833 | 0.15053 | 0.02503 |
| 66 | 1 | 24.9269 | 0.0789 | 0.6188 |
| 66 | 2 | 48.3858 | 0.135315 | 0.06155 |
| 66 | 3 | 54.5496 | 0.109284 | 0.02282 |
| 66 | 4 | 58.3009 | 0.100643 | 0.07583 |
| 66 | 5 | 64.9467 | 0.11328 | 0.1037 |
| 66 | 6 | 66.4737 | 0.103452 | 0.1555 |
| 66 | 7 | 69.2804 | 0.104905 | 0.1263 |
| 66 | 8 | 71.5304 | 0.103333 | 0.0981 |
| 66 | 9 | 73.733 | 0.103675 | 0.0839 |
| 66 | 10 | 76.5636 | 0.108794 | 0.06358 |
| 66 | 11 | 78.8226 | 0.107965 | 0.0813 |
| 66 | 12 | 81.1678 | 0.10551 | 0.03163 |
| 66 | 13 | 84.3501 | 0.108437 | 0.01738 |
| 66 | 14 | 86.1132 | 0.106013 | 0.01169 |
| 66 | 15 | 87.6284 | 0.103334 | 0.00849 |

**TABLE II**

| RELATIVE AMPLITUDE STANDARDS | | |
|---|---|---|
| PHONEME SOUND | PASCII VALUE | RELATIVE AMPLITUDE STANDARD |
| ah | 23 | 95 |
| uh | 22 | 95 |
| ah | 24 | 95 |
| 0 | 21 | 95 |
| a | 9 | 85 |
| u | 19 | 85 |
| er | 29 | 85 |
| e | 7 | 75 |
| A | 5 | 75 |
| oo | 17 | 15 |
| i | 3 | 75 |
| w | 85 | 75 |
| ee | 1 | 75 |
| r | 94 | 75 |
| y | 82 | 75 |
| l | 90 | 75 |
| sh | 65 | 65 |
| ng | 36 | 65 |
| ch | 116 | 55 |
| m | 31 | 55 |
| n | 33 | 50 |
| si | 66 | 50 |
| j | 115 | 50 |
| t | 41 | 40 |
| g | 48 | 40 |
| k | 47 | 40 |
| -th | 60 | 40 |
| z | 62 | 40 |
| s | 61 | 35 |
| h | 76 | 35 |
| d | 42 | 30 |
| v | 58 | 30 |
| b | 40 | 30 |
| p | 39 | 25 |
| f | 57 | 25 |
| th | 59 | 20 |

**Claims**

1. A sound recognition system (10) for identifying the phoneme sound types that are contained within an audio speech signal, the sound recognition system (10) comprising:

audio processor means (12, 14) for receiving an audio speech signal and for converting the audio speech signal into a representative audio electrical signal;
analog-to-digital converter means (34) for digitizing the audio electrical signal at a predetermined sampling rate so as to produce a digitized audio signal; and
sound recognition means (16) adapted for

a) performing a time domain analysis (102) on the digitized audio signal so as to identify at least one time domain sound characteristic of said audio speech signal; and

b) identifying at least one phoneme sound type contained within the audio speech signal (108), **characterised in that** said sound recognition means (16) is configured to perform the additional steps of

c) successively filtering the digitized audio signal, using a plurality of filter bands having predetermined distinct cutoff frequencies, into a corresponding plurality of separate time domain filtered signals (168, 170, 172, 174); and

d) measuring at least one frequency domain sound characteristic of each of said filtered signals (176); and

**in that** the identification step b) is based on said at least one time domain characteristic and said frequency domain characteristics.

2.  A sound recognition system (10) as defined in claim 1 wherein the audio processor means (12, 14) comprises:

    means (12) for inputting the audio speech signal and for converting it to an audio electrical signal; and
    means (14) for conditioning the audio electrical signal so that it is in a representative electrical form that is suitable for digital sampling.

3.  A sound recognition system (10) as defined in claim 2 wherein the conditioning means (14) comprises:

    signal amplification means (12) for amplifying the audio electrical signal to a predetermined level;
    means (28) for limiting the level of the amplified audio electrical signal to a predetermined output level; and
    filter means (30), connected to the limiting means, for limiting the audio electrical signal to a predetermined maximum frequency of interest and thereby providing the representative audio electrical signal.

4.  A sound recognition system (10) as defined in one of the claims 1 to 3, further comprising electronic means (22) for receiving at least one word in a pre-selected language corresponding to the at least one phoneme sound type contained within the audio speech signal, and for programmably processing the at least one word as either a data input or as a command input.

5.  A sound recognition system (10) as defined in one of the claims 1 to 4, wherein said at least one time domain characteristic includes at least one of the following: an average amplitude of the audio speech signal; an absolute difference average of the audio speech signal; and a zero crossing rate of the audio speech signal.

6.  A sound recognition system (10) as defined in one of the claims 1 to 5, wherein said frequency domain sound characteristic includes a frequency of at least one of said filtered signals.

7.  A sound recognition system (10) as defined in one of the claims 1 to 6, wherein said frequency domain sound characteristic includes an amplitude of at least one of said filtered signals.

8.  A sound recognition system (10) as defined in one of the claims 1 to 7, wherein said at least one phoneme sound type contained within the audio speech signal is identified by comparing the measured frequency domain sound characteristic to a plurality of sound standards each having an associated phoneme sound type and at least one corresponding standard frequency domain characteristic, wherein the at least one identified sound type is the sound standard type having a standard frequency domain characteristic that matches the measured frequency domain sound characteristic most closely.

9.  A sound recognition system (10) as defined in claim 8, wherein the measured frequency domain sound characteristic, and the plurality of standard frequency domain characteristics are expressed in terms of a chromatic scale.

10. A sound recognition system (10) as defined in one of the claims 1 to 9, said sound recognition means (16) comprising sound recognition processor circuitry performing steps (a) to (d) by carrying out corresponding steps of a computer program.

11. A sound recognition system (10) as defined in claim 10, said sound recognition processor circuitry comprising digital sound processor means (18) for carrying out steps (a), (c) and (d) and host sound processor means (20) for carrying out step (b) and for translating said at least one phoneme sound type into at least one representative word of a pre-selected language.

**12.** A sound recognition system (10) as defined in claim 11, wherein the digital sound processor means (18) comprises:

first programmable means (36) for programmably executing a predetermined series of program steps;
program memory means (40) for storing the predetermined series of program steps utilized by said first programmable means (36); and
data memory means (42) for providing a digital storage area for use by said first programmable means (36).

**13.** A sound recognition system (10) as defined in one of the claims 11 and 12, wherein the host sound processor means (20) comprises;

second programmable means (54) for programmably executing a predetermined series of program steps;
program memory means (58) for storing the predetermined series of program steps utilized by said second programmable means (54); and
data memory means (60) for providing a digital storage area for use by said first programmable means (54).

**14.** A method for identifying the phoneme sound types that are contained within an audio speech signal, the method comprising the steps of:

receiving an audio speech signal;
converting the audio speech signal into a representative audio electrical signal;
digitizing the audio electrical signal at a predetermined sampling rate so as to produce a digitized audio signal (100);
performing a time domain analysis on the digitized audio signal (102) so as to identify at least one time domain sound characteristic of said audio speech signal; and
identifying at least one phoneme sound type contained within the audio speech signal (108),

**characterised by** the additional steps of
using a plurality of filter bands having predetermined distinct cutoff frequencies, successively filtering the digitized audio signal into a corresponding plurality of separate time domain filtered signals (168, 170, 172, 174); and
measuring at least one frequency domain sound characteristic from each of said filtered signals (176); and
in that said identifying step is based on said at least one time domain sound characteristic and said frequency domain sound characteristics.

**15.** A method as defined in claim 14, wherein the said at least one time domain characteristic includes at least one of the following: an average amplitude of the audio speech signal; an absolute difference average of the audio speech signal; and a zero crossing rate of the audio speech signal.

**16.** A method as defined in one of the claims 14 or 15, wherein the said frequency domain sound characteristic includes a frequency of at least one of said filtered signals.

**17.** A method as defined in one of the claims 14 to 16. wherein the said frequency domain sound characteristic includes an amplitude of at least one of said filtered signals.

**18.** A method as defined in claim 16, wherein the at least one phoneme sound type contained within the audio speech signal is identified by comparing the at least one measured frequency domain sound characteristic to a plurality of sound standards each having an associated phoneme sound type and at least one corresponding standard frequency domain sound characteristic, wherein the at least one identified sound type is the sound standard type having a standard frequency domain sound characteristic that matches the measured frequency domain characteristic most closely.

**19.** A method as defined in claim 18, wherein the at least one measured frequency domain sound characteristic, and the plurality of standard frequency domain sound characteristics are expressed in terms of a chromatic scale.

**Patentansprüche**

**1.** Schallerkennungssystem (10) zum Identifizieren der Phonem-Schalltypen, die in einem Ton-Sprachsignal enthalten sind, wobei das Schallerkennungssystem (10) umfasst:

eine Tonverarbeitungseinrichtung (12, 14) zum Empfangen eines Ton-Sprachsignals und zum Umwandeln des Ton-Sprachsignals in ein repräsentatives elektrisches Tonsignal;

eine Analog-Digital-Wandlereinrichtung (34) zum Digitalisieren des elektrischen Tonsignals mit einer vorgegebenen Abtastrate, um ein digitalisiertes Tonsignal zu erzeugen; und

wobei die Schallerkennungseinrichtung (16) so eingerichtet ist, dass sie

a) eine Zeitdomänen-Analyse (102) des digitalisierten Tonsignals durchführt, um wenigstens eine Zeitdomänen-Schallcharakteristik des Ton-Sprachsignals zu identifizieren; und

b) den wenigstens einen Phonem-Schalltyp identifiziert, der in dem Ton-Sprachsignal (108) enthalten ist, **dadurch gekennzeichnet, dass** die Schall-Erkennungseinrichtung (16) so konfiguriert ist, dass sie die folgenden zusätzlichen Schritte durchführt:

c) sukzessives Filtern des digitalisierten Tonsignals unter Verwendung einer Vielzahl von Filterbändern, die vorgegebene individuelle Grenzfrequenzen haben, zu einer entsprechenden Vielzahl separater, Zeitdomänen-Filterung unterzogener Signale (186, 170, 172, 174); und

d) Messen wenigstens einer Frequenzdomänen-Schallcharakteristik jedes der gefilterten Signale (176); und

**dadurch**, dass der Identifizierungsschritt b) auf wenigstens der Zeitdomänen-Charakteristik oder der Frequenzdomänen-Charakteristik basiert.

2. Schallerkennungssystem (10) nach Anspruch 1, wobei die Tonverarbeitungseinrichtung (12, 14) umfasst:

eine Einrichtung (12) zum Eingeben des Ton-Sprachsignals und zum Umwandeln desselben in ein elektrisches Tonsignal; und

eine Einrichtung (14) zum Anpassen des elektrischen Tonsignals, so dass es in einer repräsentativen elektrischen Form ist, die für digitales Abtasten geeignet ist.

3. Schallerkennungssystem (10) nach Anspruch 2, wobei die Anpassungseinrichtung (14) umfasst:

eine Signalverstärkungseinrichtung (12) zum Verstärken des elektrischen Tonsignals auf einen vorgegebenen Pegel;

eine Einrichtung (28) zum Begrenzen des Pegels des verstärkten elektrischen Tonsignals auf einen vorgegebenen Ausgabepegel; und

eine Filtereinrichtung (30), die mit der Begrenzungseinrichtung verbunden ist, um das elektrische Tonsignal auf eine vorgegebene maximale Frequenz von Interesse zu begrenzen und so das repräsentative elektrische Tonsignal bereitzustellen.

4. Schallerkennungssystem (10) nach einem der Ansprüche 1 bis 3, das des Weiteren eine elektronische Einrichtung (22) zum Empfangen wenigstens eines Wortes in einer vorausgewählten Sprache, die dem wenigstens einen Phonem-Schalltyp entspricht, der in dem Ton-Sprachsignal enthalten ist, und zum programmierbaren Verarbeiten des wenigstens einen Wortes entweder als Dateneingabe oder als Befehlseingabe umfasst.

5. Schallerkennungssystem (10) nach einem der Ansprüche 1 bis 4, wobei die wenigstens eine Zeitdomänen-Charakteristik wenigstens eine durchschnittliche Amplitude des Ton-Sprachsignals, einen Mittelwert der Absolutdifferenz des Ton-Sprachsignals oder eine Nulldurchgangsrate des Ton-Sprachsignals enthält.

6. Schallerkennungssystem (10) nach einem der Ansprüche 1 bis 5, wobei die Frequenzdomänen-Schallcharakteristik eine Frequenz wenigstens eines der gefilterten Signals enthält.

7. Schallerkennungssystem (10) nach einem der Ansprüche 1 bis 6, wobei die Frequenzdomänen-Schallcharakteristik eine Amplitude wenigstens eines der gefilterten Signale enthält.

8. Schallerkennungssystem (10) nach einem der Ansprüche 1 bis 7, wobei der wenigstens eine Phonem-Schalltyp, der in dem Ton-Sprachsignal enthalten ist, durch Vergleichen der gemessenen Frequenzdomänen-Schallcharakteristik mit einer Vielzahl von Schall-Standards identifiziert wird, die jeweils einen dazugehörigen Phonem-Schalltyp und wenigstens eine entsprechende Standard-Frequenzdomänen-Charakteristik aufweisen, wobei der wenigstens eine identifizierte Schalltyp der Schall-Standardtyp ist, der eine Standard-Frequenzdomänen-Charakteristik aufweist, die der gemessenen Frequenzdomänen-Schallcharakteristik am meisten entspricht.

9. Schallerkennungssystem (10) nach Anspruch 8, wobei die gemessene Frequenzdomänen-Schallcharakteristik und die Vielzahl von Standard-Frequenzdomänen-Charakteristiken in Form einer chromatischen Tonleiter ausgedrückt werden.

10. Schallerkennungssystem (10) nach einem der Ansprüche 1 bis 9, wobei die Schallerkennungseinrichtung (16) eine Schallerkennungs-Verarbeitungsschaltung umfasst, die Schritte (a) bis (d) durchführt, indem sie entsprechende Schritte eines Computerprogramms ausführt.

11. Schallerkennungssystem (10) nach Anspruch 10, wobei die Schallerkennungs-Verarbeitungsschaltung eine digitale Schallverarbeitungseinrichtung (18) zum Ausführen der Schritte (a), (c) und (d) sowie eine Host-Schallverarbeitungseinrichtung (20) zum Ausführen von Schritt (b) und zum Übersetzen des wenigstens einen Phonem-Schalltyps in wenigstens ein repräsentatives Wort einer vorausgewählten Sprache umfasst.

12. Schallerkennungssystem (10) nach Anspruch 11, wobei die digitale Schallverarbeitungseinrichtung (18) umfasst:

eine erste programmierbare Einrichtung (36) zum programmierbaren Ausführen einer vorgegebenen Reihe von Programmschritten;
eine Programmspeichereinrichtung (40) zum Speichern der vorgegebenen Reihe von Programmschritten, die von der ersten programmierbaren Einrichtung (36) genutzt wird; und
eine Datenspeichereinrichtung (42) zum Bereitstellen eines digitalen Speicherbereichs zur Nutzung durch die erste programmierbare Einrichtung (36).

13. Schallerkennungssystem (10) nach einem der Ansprüche 11 und 12, wobei die Host-Schallverarbeitungseinrichtung (20) umfasst:

eine zweite programmierbare Einrichtung (54) zum programmierbaren Ausführen einer vorgegebenen Reihe von Programmschritten;
eine Programmspeichereinrichtung (58) zum Speichern der vorgegebenen Reihe von Programmschritten, die durch die zweite programmierbare Einrichtung (54) genutzt werden; und
eine Datenspeichereinrichtung (60) zum Bereitstellen eines digitalen Speicherbereiches zur Nutzung durch die erste programmierbare Einrichtung (54).

14. Verfahren zum Identifizieren der Phonem-Schalltypen, die in einem Audio-Sprachsignal enthalten sind, wobei das Verfahren die folgenden Schritte umfasst:

Empfangen eines Ton-Sprachsignals;
Umwandeln des Ton-Sprachsignals in ein repräsentatives elektrisches Tonsignal;
Digitalisieren des elektrischen Tonsignals mit einer vorgegebenen Abtastrate, um ein digitalisiertes Tonsignal (100) zu erzeugen;
Durchführen einer Zeitdomänen-Analyse des digitalisierten Tonsignals (102), um wenigstens eine Zeitdomänen-Schallcharakteristik des Ton-Sprachsignals zu identifizieren; und
Identifizieren wenigstens eines Phonem-Schalltyps, der in dem Ton-Sprachsignal (108) enthalten ist,

**gekennzeichnet durch** die folgenden zusätzlichen Schritte:

unter Verwendung einer Vielzahl von Filterbändern mit vorgegebenen individuellen Grenzfrequenzen, sukzessives Filtern des digitalisierten Tonsignals in eine entsprechende Vielzahl separater, Zeitdomänen-Filterung unterzogener Signale (168, 170, 172, 174); und
Messen wenigstens einer Frequenzdomänen-Schallcharakteristik von jedem der gefilterten Signale (176); und

**dadurch**, dass der Identifizierungsschritt auf der wenigstens einen Zeitdomänen-Schallcharakteristik und den Frequenzdomänen-Schallcharakteristiken basiert.

15. Verfahren nach Anspruch 14, wobei die wenigstens eine Zeitdomänen-Charakteristik wenigstens eine durchschnittliche Amplitude des Ton-Sprachsignals, einen Mittelwert der Absolutdifferenz des Ton-Sprachsignals oder eine Nulldurchgangsrate des Ton-Sprachsignals enthält.

16. Verfahren nach einem der Ansprüche 14 oder 15, wobei die Frequenzdomänen-Schallcharakteristik eine Frequenz wenigstens eines der gefilterten Signale enthält.

**17.** Verfahren nach einem der Ansprüche 14 bis 16, wobei die Frequenzdomänen-Schallcharakteristik eine Amplitude wenigstens eines der gefilterten Signale enthält.

**18.** Verfahren nach Anspruch 16, wobei der wenigstens eine Phonem-Schalltyp, der in dem Ton-Sprachsignal enthalten ist, durch Vergleichen der wenigstens einen gemessenen Frequenzdomänen-Schallcharakteristik mit einer Vielzahl von Schall-Standards identifiziert wird, die jeweils einen dazugehörigen Phonem-Schalltyp und wenigstens eine entsprechende Standard-Frequenzdomänen-Schallcharakteristik aufweisen, wobei der wenigstens eine identifizierte Schall-Typ der Schall-Standardtyp ist, der eine Standard-Frequenzdomänen-Schallcharakteristik hat, die der gemessenen Frequenzdomänen-Charakteristik am meisten entspricht.

**19.** Verfahren nach Anspruch 18, wobei die wenigstens eine gemessene Frequenzdomänen-Schallcharakteristik und die Vielzahl von Standard-Frequenzdomänen-Schallcharakteristiken als eine chromatische Tonleiter ausgedrückt werden.

## Revendications

**1.** Système de reconnaissance sonore (10) destiné à identifier les types de phonèmes qui sont contenus dans un signal de parole audio, le système de reconnaissance sonore (10) comprenant :

des moyens de traitement audio (12, 14) destinés à recevoir un signal de parole audio et à convertir le signal de parole audio en un signal électrique audio représentatif ;
des moyens de convertisseur analogique/numérique (34) destinés à numériser le signal électrique audio à une vitesse d'échantillonnage prédéterminée de façon à produire un signal audio numérisé ; et
des moyens de reconnaissance sonore (16) adaptés afin de

a) effectuer une analyse de domaine temporel (102) sur le signal audio numérisé de façon à identifier au moins une caractéristique sonore de domaine temporel dudit signal de parole audio ; et
b) identifier au moins un type de phonème contenu dans le signal de parole audio (108),
**caractérisé en ce que** lesdits moyens de reconnaissance sonore (16) sont configurés afin d'effectuer les étapes supplémentaires consistant à
c) successivement filtrer le signal audio numérisé, en utilisant une pluralité de bandes de filtres ayant des fréquences de coupure distinctes prédéterminées, en une pluralité correspondante de signaux filtrés à domaines temporels séparés (168, 170, 172, 174) ; et
d) mesurer au moins une caractéristique sonore de domaine de fréquences de chacun desdits signaux filtrés (176) ; et

**en ce que** ladite étape d'identification b) est basée sur ladite au moins une caractéristique de domaine temporel et lesdites caractéristiques de domaine de fréquences.

**2.** Système de reconnaissance sonore (10) selon la revendication 1, dans lequel les moyens de traitement audio (12, 14) comprennent :

des moyens (12) destinés à transmettre le signal de parole audio et à le convertir en un signal électrique audio ; et
des moyens (14) destinés à conditionner le signal électrique audio de telle sorte qu'il soit sous une forme électrique représentative qui convient pour l'échantillonnage numérique.

**3.** Système de reconnaissance sonore (10) selon la revendication 2, dans lequel les moyens de conditionnement (14) comprennent :

des moyens d'amplification de signal (12) destinés à amplifier le signal électrique audio à un niveau prédéterminé ;
des moyens (28) destinés à limiter le niveau du signal électrique audio amplifié à un niveau de sortie prédéterminé ; et
des moyens de filtre (30), reliés aux moyens de limitation, destinés à limiter le signal électrique audio à une fréquence maximum prédéterminée d'intérêt, et fournissant ainsi le signal électrique audio représentatif.

**4.** Système de reconnaissance sonore (10) selon l'une des revendications 1 à 3, comprenant en outre des moyens électroniques (22) destinés à recevoir au moins un mot dans une langue présélectionnée correspondant au au moins un type de phonème contenu dans le signal de parole audio, et à traiter de manière programmable le au moins un mot comme une entrée de données ou une entrée de commande.

**5.** Système de reconnaissance sonore (10) selon l'une des revendications 1 à 4, dans lequel ladite au moins une caractéristique de domaine temporel comprend au moins l'un de ce qui suit: une amplitude moyenne du signal de parole audio ; une moyenne de différence absolue du signal de parole audio ; et un taux de passage par zéro du signal de parole audio.

**6.** Système de reconnaissance sonore (10) selon l'une des revendications 1 à 5, dans lequel ladite caractéristique sonore de domaine de fréquences comprend une fréquence d'au moins l'un desdits signaux filtrés.

**7.** Système de reconnaissance sonore (10) selon l'une des revendications 1 à 6, dans lequel ladite caractéristique sonore de domaine de fréquences comprend une amplitude d'au moins l'un desdits signaux filtrés.

**8.** Système de reconnaissance sonore (10) selon l'une des revendications 1 à 7, dans lequel ledit au moins un type de phonème contenu dans le signal de parole audio est identifié en comparant la caractéristique sonore du domaine de fréquences mesurée avec une pluralité de normes sonores ayant chacune un type de phonème associé et au moins une caractéristique de domaine de fréquences standard correspondante, dans lequel le au moins un type de son identifié est le type de son standard ayant une caractéristique de domaine de fréquences standard qui correspond le plus étroitement à la caractéristique sonore de domaine de fréquences mesurée.

**9.** Système de reconnaissance sonore (10) selon la revendication 8, dans lequel la caractéristique sonore de domaine de fréquences mesurée, et la pluralité de caractéristiques de domaine de fréquences standard sont exprimées en termes d'échelle chromatique.

**10.** Système de reconnaissance sonore (10) selon l'une des revendications 1 à 9, lesdits moyens de reconnaissance sonore (16) comprenant des circuits de traitement de reconnaissance sonore effectuant les étapes (a) à (d) en réalisant des étapes correspondantes d'un programme informatique.

**11.** Système de reconnaissance sonore (10) selon la revendication 10, lesdits circuits de traitement de reconnaissance sonore comprenant des moyens de traitement de son numérique (18) destinés à effectuer les étapes (a), (c) et (d) et des moyens de traitement de son hôte (20) destinés à effectuer l'étape (b) et à convertir ledit au moins un type de phonème en au moins un mot représentatif d'une langue présélectionnée.

**12.** Système de reconnaissance sonore (10) selon la revendication 11, dans lequel les moyens de traitement de son numérique (18) comprennent :

    des premiers moyens programmables (36) destinés à exécuter de manière programmable une série prédéterminée d'étapes de programme ;
    des moyens de mémoire de programme (40) destinés à stocker la série prédéterminée d'étapes de programme utilisée par lesdits premiers moyens programmables (36) ; et
    des moyens de mémoire de données (42) destinés à offrir une zone de stockage numérique destinée à être utilisée par lesdits premiers moyens programmables (36).

**13.** Système de reconnaissance sonore (10) selon l'une des revendications 11 et 12, dans lequel les moyens de traitement de son hôte (20) comprennent :

    des seconds moyens programmables (54) destinés à exécuter de manière programmable une série prédéterminée d'étapes de programme ;
    des moyens de mémoire de programme (58) destinés à stocker la série prédéterminée d'étapes de programme utilisée par lesdits seconds moyens programmables (54) ; et
    des moyens de mémoire de données (60) destinés à offrir une zone de stockage numérique destinée à être utilisée par lesdits premiers moyens programmables (54).

**14.** Procédé d'identification des types de phonèmes qui sont contenus dans un signal de parole audio, le procédé comprenant les étapes consistant à :

recevoir un signal de parole audio ;

convertir le signal de parole audio en un signal électrique audio représentatif ;

numériser le signal électrique audio à une vitesse d'échantillonnage prédéterminée de façon à produire un signal audio numérisé (100) ;

effectuer une analyse de domaine temporel sur le signal audio numérisé (102) de façon à identifier au moins une caractéristique sonore de domaine temporel dudit signal de parole audio ; et

identifier au moins un type de phonème contenu dans le signal de parole audio (108),

**caractérisé par** les étapes supplémentaires consistant à

utiliser une pluralité de bandes de filtres ayant des fréquences de coupure distinctes prédéterminées, en filtrant successivement le signal audio numérisé en une pluralité correspondante de signaux filtrés de domaines temporels séparés (168, 170, 172, 174) ; et

mesurer au moins une caractéristique sonore de domaine de fréquences de chacun desdits signaux filtrés (176) ; et en ce que ladite étape d'identification est basée sur ladite au moins une caractéristique sonore de domaine temporel et lesdites caractéristiques de domaine de fréquences.

15. Procédé selon la revendication 14, dans lequel ladite au moins une caractéristique de domaine temporel comprend au moins l'un de ce qui suit : une amplitude moyenne du signal de parole audio ; une moyenne de différence absolue du signal de parole audio ; et un taux de passage par zéro du signal de parole audio.

16. Procédé selon l'une des revendications 14 ou 15, dans lequel ladite caractéristique sonore de domaine de fréquences comprend une fréquence d'au moins l'un desdits signaux filtrés.

17. Procédé selon l'une des revendications 14 à 16, dans lequel ladite caractéristique sonore de domaine de fréquences comprend une amplitude d'au moins l'un desdits signaux filtrés.

18. Procédé selon la revendication 16, dans lequel le au moins un type de phonème contenu dans le signal de parole audio est identifié en comparant la au moins une caractéristique sonore de domaine de fréquences mesurée avec une pluralité de normes sonores ayant chacune un type de phonème associé et au moins une caractéristique sonore de domaine de fréquences standard correspondante, dans lequel le au moins un type de son identifié est le type de son standard ayant une caractéristique sonore de domaine de fréquences standard qui correspond le plus étroitement à la caractéristique de domaine de fréquences mesurée.

19. Procédé selon la revendication 18, dans lequel la au moins une caractéristique sonore de domaine de fréquences mesurée, et la pluralité de caractéristiques sonores de domaine de fréquences standard sont exprimées en termes d'échelle chromatique.

Speech → [12] ))

**Audio Processor Circuitry** /14

→ **A / D Conversion** /34

/16 **Sound Recognition Processor Circuitry**

/18 **Digital Sound Processor Circuitry**

→ /20 **Host Sound Processor Circuitry**

/22 **Host Computer**

/10

/24

## FIG. 1

FIG. 2

FIG. 3A

FIG. 3B

FIG. 3C

FIG. 3D

FIG.  3E

FIG. 3F

FIG. 3G

HOST DATA MEMORY

FIG. 3H

FIG. 3J

**FIG. 3K**

FIG. 3L

FIG. 3M

EP 0 886 854 B1

FIG. 3N

FIG. 3P

FIG. 3Q

EP 0 886 854 B1

**FIG.   3R**

EP 0 886 854 B1

EP 0 886 854 B1

+5V

R1
220

R21
220

J1

+5V

RETURN

NET00125

NET00128

1N914
D10

R20
270

PC-900V

SHIELD

MIDI

3R-1

VCC    NC

GND   CATHODE

Vo    ANODE

SHIELD

SHIELD

3R-2

GND

U50

R2
220

4MINIDIN

**FIG.  3S**

FIG. 3T

FIG. 3U

FIG. 3V

FIG. 3W

EP 0 886 854 B1

FIG. 3X

EP 0 886 854 B1

FIG. 3Y

EP 0 886 854 B1

100

**Digitize Audio Speech Signal**

102

**Evaluate Time Domain**
Calculate $L_s$, $L_o$ & $Z_{CR}$
for each Time Slice
and determine if
Voiced, Unvoiced or Quiet

104

**Decompose**
Break down speech signal
into frequency spectrum
components and extract
sound characteristics

106

**Point of
Maximum Intelligence**
Identify important
Time Slices

108

**Evaluate**
Identify probable
Phonemes

114

**Command Processor**
Pass word to
Application or
OperatingSystem
as Data or Command

112

**Linguistic Processor**
Translate Phonemes
into corresponding
word or phrase

110

**Compress Phones**
Discard unnecessary
Time Slice Data

## FIG. 4

116

Receive 10240 samples of voice data and segment into Time Slices

102

118

Calculate the Envelope absolute average (Ls), absolute difference average (Ld) and zero crossing rate (zcr) for this Time Slice

138

Get the next time slice of 256 samples.

No

136

Is this the last time slice?

Return

140

120

Is Ls < QLEVEL

Yes

122

Set time slice type to 'Q' for quiet.

No

124

Is zcr < = 10 and Ld/Ls < = 15?

Yes

126

Set time slice type to 'V' for voiced.

No

128

Is zcr > 20 and Ld/Ls > 30?

Yes

130

Set time slice type to 'U' for unvoiced.

No

132

**Is It Voiced**
Check additional sound characteristics

134

Set time slice type to 'U' or 'V' depending on the output of Is It Voiced.

FIG. 5A

```
                        ╭─────────╮ ─141
                        │  Start  │
                        ╰─────────╯
                             │
                             ▼
                 ┌───────────────────────┐ ─142
                 │    Pass data through  │
                 │     low pass filter   │              ─132
                 │   and recalculate the │
                 │   zero crossing rate. │
                 └───────────────────────┘
                             │
                             ▼
                 ┌───────────────────────┐ ─144
                 │  Calculate the slope of│
                 │  the data leading up to│
                 │  the lowest minimum of │
                 │       the data.        │
                 └───────────────────────┘
                             │
                             ▼
                        ◇─146                          ╭──────────────────────╮
                     ╱         ╲        Yes            │ Data is voiced, return│
                 ╱  Is zcr < 8 and the ╲───────────────▶│        TRUE          │
                 ╲    slope > 35?     ╱                 ╰──────────────────────╯
                     ╲         ╱                              150─
                        ◇
                        │ No
                        ▼
                 ╭──────────────────────╮ ─148
                 │ Data is unvoiced, return│
                 │        FALSE.         │
                 ╰──────────────────────╯
```

FIG. 5B

FIG. 6

168

Receive Filter Parameters
and Time Segment Data

170

Get coefficients for
current filter.

172

Load current time
segment into filter

174

Filter Time Segment

158

176

**Evaluate Filtered Data**
Evaluate output of
filter.

No

178

Last
Time Slice?

Yes

180

return to **Decompose**

FIG. 6A

182

Receive Time Slice
Filtered Data

176

183

Measure Amplitude
of
Filtered Data

184

**Measure Frequency**
Measure the frequency
of the filtered signal.

186

Is
frequency within
cut off frequencies
of filter?

Yes

188

Save the frequency
and amplitude of the
filtered signal in the
HIGGINS structure

No

190

return to the calling
function.

FIG. 6B

—184

—192

Receive Time Slice
Filtered Data

—194

Calculate the slope of
the filtered signal.

—196

Find all locations where
the slope crosses zero
from + to -.

—198

Calculate the average
distance between slope
zero crossings
(Average Period Size).

—200

Return the average
frequency:
SampleRate / Average
Period Size

FIG. 6C

```
                    ╭─────────────╮  ─202
                    │    Start    │
                    ╰─────────────╯
                           │
                           ▼
              ┌─────────────────────┐  ─204
              │ Generate Histogram of│
              │ frequencies less than│
              │ 350hz over 40 time  │
              │       slices        │
              └─────────────────────┘
                           │
                           ▼
              ┌─────────────────────┐  ─206
              │ Calculate the average│
              │ fundamental frequency│
              │     (Fo) for time   │
              │       segment       │
              └─────────────────────┘
                           │
                           ▼
              ┌─────────────────────┐  ─208
              │  Calculate the moving│
              │ average of Fo over the│
              │   last two seconds. │
              └─────────────────────┘
```

162

```
            Does                         Yes
         this time slice                          ─212
         contain a filtered    No    ╱ Is this the last time ╲  ◄──  ╭──────────╮  ─216
         frequency that is    ◄────  ╲       slice?         ╱        │  Return  │
         within +/- 30% of                                           ╰──────────╯
         the average Fo?
            210
              │ Yes                        │
              │                            ▼
              │              ┌─────────────────────┐  ─214
              └────────────► │ Save frequency as the│
                             │ fundamental for this │
                             │      time slice.     │
                             └─────────────────────┘
```

FIG. 6D

```
                    ┌─────────────┐ ─230
                    │    Start    │
                    └──────┬──────┘
                           │                      ─106
                           ▼
                    ┌─────────────┐ ─232
                    │ Calculate the sum of │
                    │ the absolute value of │
                    │ the slopes of the │
                    │ frequencies for each │
                    │ Voiced Time Slice. │
                    └──────┬──────┘
                           │
                           ▼
                    ┌─────────────┐ ─234
                    │ Find all Time Slices │
                    │ where the sumSlope │
                    │ goes through a │
                    │ minimum and the │
                    │ envelope goes through │
                    │ a maximum and mark │
                    │ it as a point of │
                    │ maximum intelligence │
                    └──────┬──────┘
                           │
                           ▼
                    ┌─────────────┐ ─236
                    │ Find all │
                    │ Unvoiced Time Slices │
                    │ where the envelope of │
                    │ an unvoiced section │
                    │ goes through a │
                    │ maximum and mark it │
                    │ as a point of maximum │
                    │ intelligence for later │
                    │ evaluation. │
                    └──────┬──────┘
                           │
                           ▼
                    ┌─────────────┐ ─238
                    │ Calculate the duration │
                    │ of each pmi point as │
                    │ the number of time │
                    │ slices since the last │
                    │ pmi point. │
                    └──────┬──────┘
                           │
                           ▼
                    ┌─────────────┐
                    │   Return    │
                    └─────────────┘
              240─
```

FIG. 7

Start — 242

Calculate Harmonic Formant Standards
Get standard values for sound — 244

108

Is this time slice voiced — 250

No → Multivariate Pattern Recognition
Compare Time Slice to unvoiced standard sounds — 246

Yes ↓

Is this the last time slice? — 248

No ↑

Yes → Return — 260

Is the relative envelope amplitude low and are there high frequency components in this time slice. — 252

Yes → Multivariate Pattern Recognition
Compare Time Slice to voiced fricatives standard sounds — 254

No ↓

Multivariate Pattern Recognition
Compare Time Slice to voiced vowels and semi-vowels standard sounds — 256

→ Adjust for Relative Amplitude. — 258

FIG. 8

70

Start — 280

244

Return — 294

Calculate the number of half steps (Sn) btween the fundamental (Fo) and the frequency of band n (Bn) for this Time Slice — 282

Is this the last sound in table? — 292

Yes

No

Is Time Slice Voiced? — 284

No

Yes

Is Current Standard Sound Fricative ? — 286

Yes

No

Calculate Standards for bands n = 1 to 11

288 —

Calculate Standards for bands n = 1 to 15

290 —

FIG. 8A

260
Receive
Sound Standard
Data and Measured
Time Slice Data

102

262
Find the closest
match between
Time Slice data
points and standard
data points for this
sound, not allowing
duplicate use of any
data points

272
Advance to the next
sound standard.

264
Calculate the
Euclidean distance
(ED) between the
measured Time Slice
data and the standard
data for this sound

266
Is this
one of the 5
smallest distances
found so far?

No

270
Is this the last
sound?

No

Yes

274
Using the ED values,
calculate a probability
value for each of the 5
sounds with the
smallest distances and
sort them in
descending order of
probability.

Yes

Yes

268
Save the sound value
and the ED for this
sound in the Phoneme
array.

Return list of probable
sounds.

276

FIG. 8B

**FIG. 8C**

—316

Start

—110

—318

Keep only the
HIGGINS structures
that are pmi points

—320

Keep one "quiet"
HIGGINS structure for
each set of quiet
structures and
increment the duration
for that structure to
represent all of the
structures.

Pass HIGGINS Structures
to Linguistic Processor

324—

—326

Return

FIG. 9

350

Receive Sound Data

112

352

Dictionary Lookup

368

Using next dictionary

354

Word Collocations

Yes

356

Grammar Check

360

Package together all possible words and send to host

366

Is there another dictionary?

= 0

358

Number of possibilities

> 1

362

Send word to host

370

Return

No

= 1

364

Send sounds to host

FIG. 10

380 — ( Start )

384 — Get next sound

386 — The first active dictionary sequence

390

388 — Is there a new sequence? — Yes → 390 Replace old sequence with new → 392 Word found? — No

388 No

398 — Make sequence inactive

392 Yes → 394 Set flag for new sequence that begins with the next sound

400 — Use next sequence ← Yes — 396 More active sequences?

396 No

402 — Is flag set to make new sequence? — No → 404 Are all sequences made inactive? — No

402 Yes

404 Yes

406 — Create/initialize a new sequence

408 — Primary Word Finished? — Yes → 410 Output all words up to the next module and discard all inactive sequencess

408 No

FIG. 10A

420
Start

422
Using current word

424
Find new collocations
(begin with current
word)

426
Test current word in
new collocation
contexts

428
Eliminate contexts that
are no longer valid

430
More words

Yes

No

432
Get next word

354

434
Mark words in
completed collocations

436
Return

FIG. 10B

440

Start

442

Find the part of speech in "list" that best fits in the context of "before" and "after" parts of speech based on simplistic grammar rules.

444

448

Is there a fit? — No → Return 0

Yes

446

Return the index value of the best fit.

FIG. 10C

FIG. 11

Using current word

Add part of speech
(verb, adj. adv. etc.)

Check context for
grammar

Mark words that don't
fit the context as poor
choices

More words?  →Yes→  Get next word

No

Stop

FIG. 12

$$Y = 26.3645 - 7.72E \cdot 02X$$
$$R \cdot Squared = 0.836$$

——— Regression
- - - - 95% CI
- — · - 95% PI

**FIG. 12A**

FIG. 12B

Fo to B3

$Y = 50.796 - 9.74E{\cdot}02x$

R·Squared $= 0.872$

— · —  Regression

- - - -  95% CI

- · - · -  95% PI

**FIG. 12C**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4181813 A
- US 4852170 A
- US 4817154 A
- US 5027410 A